(19) **Europäisches Patentamt / European Patent Office / Office européen des brevets**

(11) **EP 4 679 907 A1**

(12) **EUROPEAN PATENT APPLICATION**
published in accordance with Art. 153(4) EPC

(43) Date of publication:
**14.01.2026 Bulletin 2026/03**

(21) Application number: **23925793.4**

(22) Date of filing: **09.03.2023**

(51) International Patent Classification (IPC):
**H04W 72/04** (2023.01)

(52) Cooperative Patent Classification (CPC):
**H04W 72/04**

(86) International application number:
**PCT/CN2023/080614**

(87) International publication number:
**WO 2024/183076 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHAO, Zhenshan**
  **Dongguan, Guangdong 523860 (CN)**
• **DING, Yi**
  **Dongguan, Guangdong 523860 (CN)**
• **WU, Zuomin**
  **Dongguan, Guangdong 523860 (CN)**

(74) Representative: **RGTH**
**Patentanwälte PartGmbB**
**Neuer Wall 10**
**20354 Hamburg (DE)**

(54) **SIDELINK TRANSMISSION METHOD AND TERMINAL DEVICE**

(57) Provided are a sidelink transmission method and a terminal device. The method comprises: a first terminal device receiving or sending a first PSFCH in a first time unit, wherein the first PSFCH is used for bearing first sidelink feedback information corresponding to one or more physical sidelink shared channels (PSSCHs) in a second time unit, and either of the first time unit and the second time unit comprises consecutive M time slots, M being a positive integer greater than 1. In the above technical solution, the transmission and feedback of sidelink data are performed on the basis of time units, and one time unit comprises a plurality of time slots, such that the transmission and feedback efficiency of the sidelink data can be effectively improved.

```
A first terminal device performs sidelink    ┐ S1710
communication in a first time unit
```

**FIG. 17**

EP 4 679 907 A1

## Description

### TECHNICAL FIELD

This application relates to the field of communications technologies, and more specifically, to a sidelink transmission method and a terminal device.

### BACKGROUND

To improve a transmission rate of a sidelink communications system, extension of a frequency band for sidelink communication to a high frequency band (for example, a frequency band higher than 52.6 GHz) may be considered. As a frequency increases, a subcarrier spacing increases, and correspondingly, duration corresponding to one symbol decreases. In this case, there is currently no suitable solution for how to perform transmission and feedback of sidelink data.

### SUMMARY

This application provides a sidelink transmission method and a terminal device. The following describes the aspects related to this application.

According to a first aspect, a sidelink transmission method is provided, including: receiving or transmitting, by a first terminal device, a first PSFCH in a first time unit, where the first PSFCH is used to carry first sidelink feedback information corresponding to one or more physical sidelink shared channels PSSCH in a second time unit; and any one of the first time unit and the second time unit includes consecutive M slots, where M is a positive integer greater than 1.

According to a second aspect, a terminal device is provided, where the terminal device is a first terminal device, and the first terminal device includes a communications module, configured to receive or transmit a first PSFCH in a first time unit, where the first PSFCH is used to carry first sidelink feedback information corresponding to one or more physical sidelink shared channels PSSCH in a second time unit; and any one of the first time unit and the second time unit includes consecutive M slots, where M is a positive integer greater than 1.

According to a third aspect, a terminal device is provided, including a transceiver, a memory, and a processor, where the memory is configured to store a program, and the processor is configured to invoke the program in the memory and control the transceiver to receive or transmit a signal, to cause the terminal device to execute the method according to the first aspect.

According to a fourth aspect, an apparatus is provided, including a processor configured to invoke a program from a memory, to cause the apparatus to execute the method according to the first aspect.

According to a fifth aspect, a chip is provided, including a processor configured to invoke a program from a memory, to cause a device installed with the chip to execute the method according to the first aspect.

According to a sixth aspect, a computer-readable storage medium is provided, where the computer-readable storage medium stores a program, and the program causes a computer to execute the method according to the first aspect.

According to a seventh aspect, a computer program product is provided, including a program, where the program causes a computer to execute a method according to the first aspect.

According to an eighth aspect, a computer program is provided, where the computer program causes a computer to execute the method according to the first aspect.

In embodiments of this application, sidelink data is transmitted and fed back based on time units, where one time unit includes a plurality of slots, thereby effectively improving efficiency of transmitting and feeding back the sidelink data.

### BRIEF DESCRIPTION OF DRAWINGS

FIG. 1 is an example diagram of a system architecture of a wireless communications system to which embodiments of this application are applicable.
FIG. 2 is an example diagram of a scenario of sidelink communication within network coverage.
FIG. 3 is an example diagram of a scenario of sidelink communication with partial network coverage.
FIG. 4 is an example diagram of a scenario of sidelink communication outside network coverage.
FIG. 5 is an example diagram of a scenario of sidelink communication based on a central control node.
FIG. 6 is an example diagram of a broadcast-based sidelink communication mode.
FIG. 7 is an example diagram of a unicast-based sidelink communication mode.
FIG. 8 is an example diagram of a multicast-based sidelink communication mode.

FIG. 9A is an example diagram of a slot structure used for a sidelink communications system.

FIG. 9B is another example diagram of a slot structure used for a sidelink communications system.

FIG. 10 is an example diagram of a sidelink feedback scenario.

FIG. 11 is a schematic diagram of a time-domain demodulation reference signal (demodulation reference signal, DMRS) pattern that may be used by a physical sidelink shared channel (physical sidelink shared channel, PSSCH) of 13 symbols in length.

FIG. 12 is a schematic diagram of a frequency domain position of a DMRS of a physical sidelink control channel (physical sidelink control channel, PSCCH).

FIG. 13 is a schematic diagram of a slot structure for transmitting a sidelink synchronization signal block (sidelink synchronization signal block, S-SSB).

FIG. 14 is an example diagram of a communication scenario of a wide beam communications system.

FIG. 15 is an example diagram of a communication scenario of a narrow beam communications system.

FIG. 16 is a schematic flowchart of a use mode of a transmission configuration indicator (transmission configuration indicator, TCI) state.

FIG. 17 is a schematic flowchart of a sidelink transmission mode according to an embodiment of this application.

FIG. 18A is an example diagram of a structure of a time unit according to an embodiment of this application.

FIG. 18B is another example diagram of a structure of a time unit according to an embodiment of this application.

FIG. 18C is still another example diagram of a time unit according to an embodiment of this application.

FIG. 18D is still another example diagram of a time unit according to an embodiment of this application.

FIG. 19A is still another example diagram of a time unit according to an embodiment of this application.

FIG. 19B is still another example diagram of a time unit according to an embodiment of this application.

FIG. 19C is still another example diagram of a time unit according to an embodiment of this application.

FIG. 19D is still another example diagram of a time unit according to an embodiment of this application.

FIG. 19E is still another example diagram of a time unit according to an embodiment of this application.

FIG. 19F is still another example diagram of a time unit according to an embodiment of this application.

FIG. 20 is an example diagram of an indexing mode of a time domain resource assignment indicator field according to an embodiment of this application.

FIG. 21 is another example diagram of a time unit according to an embodiment of this application.

FIG. 22 is still another example diagram of a time unit according to an embodiment of this application.

FIG. 23 is still another example diagram of a time unit according to an embodiment of this application.

FIG. 24 is still another example diagram of a time unit according to an embodiment of this application.

FIG. 25 is still another example diagram of a time unit according to an embodiment of this application.

FIG. 26 is still another example diagram of a time unit according to an embodiment of this application.

FIG. 27 is still another example diagram of a time unit according to an embodiment of this application.

FIG. 28 is still another example diagram of a time unit according to an embodiment of this application.

FIG. 29 is still another example diagram of a time unit according to an embodiment of this application.

FIG. 30 is still another example diagram of a time unit according to an embodiment of this application.

FIG. 31 is still another example diagram of a time unit according to an embodiment of this application.

FIG. 32 is a schematic flowchart of a sidelink transmission method according to another embodiment of this application.

FIG. 33 is an example diagram of a sidelink feedback mode according to an embodiment of this application.

FIG. 34 is another example diagram of a sidelink feedback mode according to an embodiment of this application.

FIG. 35 is still another example diagram of a sidelink feedback mode according to an embodiment of this application.

FIG. 36 is still another example diagram of a sidelink feedback mode according to an embodiment of this application.

FIG. 37 is still another example diagram of a sidelink feedback mode according to an embodiment of this application.

FIG. 38 is a schematic flowchart of a method for sidelink communication according to an embodiment of this application.

FIG. 39 is still another example diagram of a time unit according to an embodiment of this application.

FIG. 40 is still another example diagram of a time unit according to an embodiment of this application.

FIG. 41 is still another example diagram of a time unit according to an embodiment of this application.

FIG. 42 is still another example diagram of a time unit according to an embodiment of this application.

FIG. 43A is still another example diagram of a time unit according to an embodiment of this application.

FIG. 43B is still another example diagram of a time unit according to an embodiment of this application.

FIG. 43C is still another example diagram of a time unit according to an embodiment of this application.

FIG. 44A is still another example diagram of a time unit according to an embodiment of this application.

FIG. 44B is still another example diagram of a time unit according to an embodiment of this application.

FIG. 45 is still another example diagram of a time unit according to an embodiment of this application.

FIG. 46A is still another example diagram of a time unit according to an embodiment of this application.

FIG. 46B is still another example diagram of a time unit according to an embodiment of this application.
FIG. 47A is still another example diagram of a time unit according to an embodiment of this application.
FIG. 47B is still another example diagram of a time unit according to an embodiment of this application.
FIG. 47C is still another example diagram of a time unit according to an embodiment of this application.
FIG. 48 is still another example diagram of a time unit according to an embodiment of this application.
FIG. 49A is still another example diagram of a time unit according to an embodiment of this application.
FIG. 49B is still another example diagram of a time unit according to an embodiment of this application.
FIG. 50 is still another example diagram of a time unit according to an embodiment of this application.
FIG. 51 is still another example diagram of a time unit according to an embodiment of this application.
FIG. 52 is still another example diagram of a time unit according to an embodiment of this application.
FIG. 53 is still another example diagram of a time unit according to an embodiment of this application.
FIG. 54 is still another example diagram of a time unit according to an embodiment of this application.
FIG. 55 is still another example diagram of a time unit according to an embodiment of this application.
FIG. 56 is a schematic structural diagram of a terminal device according to an embodiment of this application.
FIG. 57 is a schematic structural diagram of an apparatus according to an embodiment of this application.

## DESCRIPTION OF EMBODIMENTS

### Communications system architecture

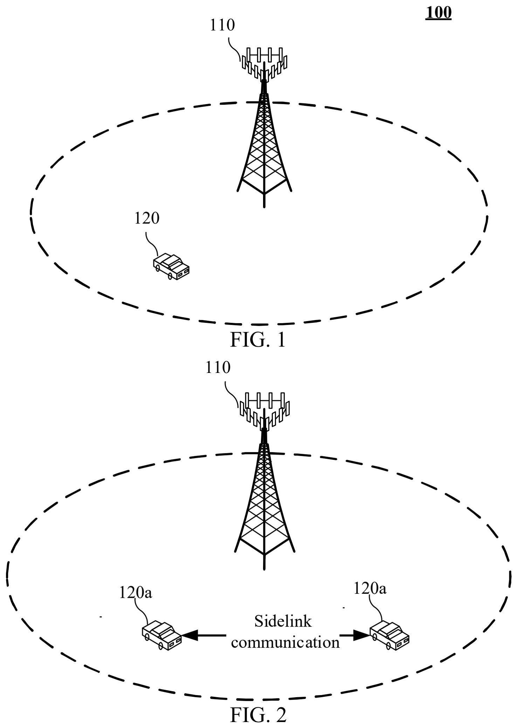

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 shows one network device and one terminal device as an example. Optionally, the wireless communications system 100 may include one or more network devices 110, and/or one or more terminal devices 120. For one network device 110, the one or more terminal devices 120 may be located within network coverage of the network device 110, or may be located outside network coverage of the network device 110, or may be located partially within network coverage of the network device 110, and partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th-generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may serve as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to serve as a base station.

The network device in embodiments of this application may be a device configured to communicate with the terminal device. The network device may also be referred to as an access network device or a radio access network device.

For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

**Sidelink communication in different network coverage statuses**

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct communication data transmission between terminal devices. Compared with conventional cellular communication, direct transmission of communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, and sidelink communication outside network coverage.

FIG. 2 is an example diagram of a scenario of sidelink communication within network coverage. In the scenario shown in FIG. 2, two terminal devices 120a are both located within coverage of a network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

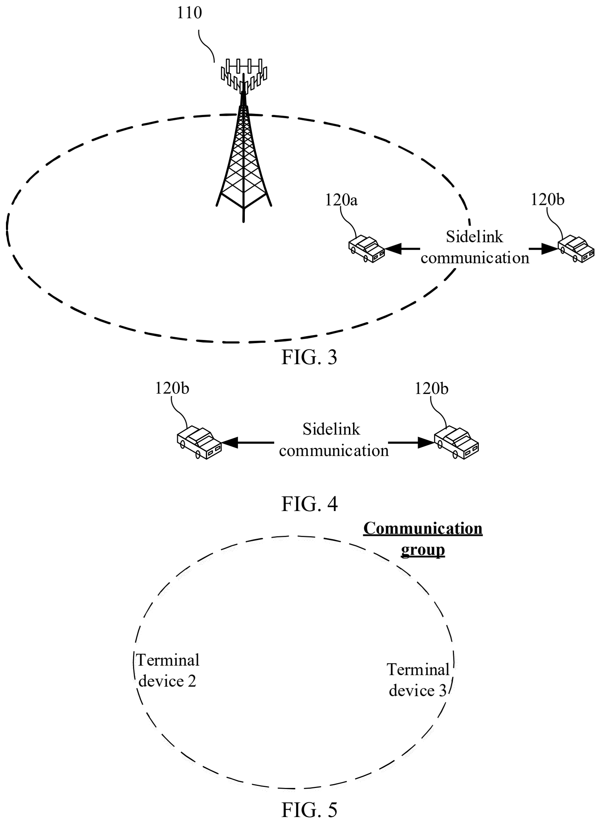

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) and that is transmitted by the terminal device 120a located within the network coverage. After performing sidelink configuration, both the terminal device 120a and the terminal device 120b may perform sidelink communication on a sidelink.

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

**Sidelink communication based on a central control node**

FIG. 5 is an example diagram of a scenario of sidelink communication based on a central control node. In the scenario of sidelink communication, a plurality of terminal devices may form a communication group, and the communication group has a central control node. The central control node may be a terminal device (for example, a terminal device 1 in FIG. 5) in the communication group, and the terminal device may also be referred to as a cluster header (cluster header, CH) terminal device. The central control node may be responsible for implementing one or more of the following functions: establishing a communication group, adding a group member to or deleting a group member from a communication group, coordinating resources within a communication group, allocating sidelink transmission resources to another terminal device, receiving sidelink feedback information from another terminal device, and coordinating resources with another communication group.

**Mode of sidelink communication**

Two modes of sidelink communication are defined in some standards or protocols (for example, the 3rd Generation Partnership Project (3rd Generation Partnership Project, 3GPP)): a first mode and a second mode.

In the first mode, a resource (the resource mentioned in this application may also be referred to as a transmission resource, such as a time frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario in which there is coverage of the network device, for example, the scenario shown in FIG. 2. In the scenario shown in FIG. 2, the terminal device 120a is located within network coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission by using the selected resource. For example, in the scenario shown in FIG. 4, the terminal device 120b is located outside cell coverage. Therefore, the terminal device 120b may independently select a resource from a preconfigured resource pool to perform sidelink transmission. Alternatively, in the scenario shown in FIG. 2, the terminal device 120a may independently select one or more resources from a resource pool configured by the network device 110 to perform sidelink transmission.

**Data transmission modes of sidelink communication**

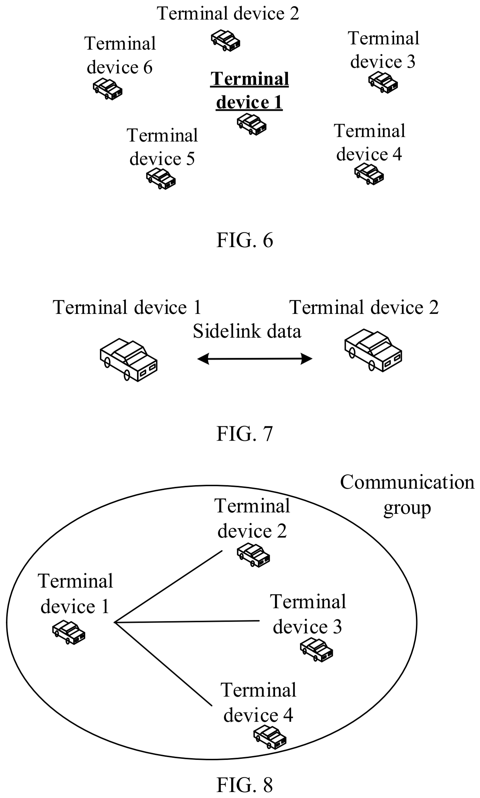

Some sidelink communications systems (such as long term evolution vehicle to everything (long term evolution vehicle to everything, LTE-V2X)) support a broadcast-based data transmission mode (briefly referred to as broadcast transmission below). For the broadcast transmission, a receive-end terminal may be any terminal device around a transmit-end terminal. For example, in FIG. 6, a terminal device 1 is a transmit-end terminal, and a receive-end terminal corresponding to the transmit-end terminal is any terminal device around the terminal device 1, for example, may be a terminal device 2 to a terminal device 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

For the unicast transmission, the receive-end terminal generally includes only one terminal device. For example, in FIG. 7, unicast transmission is performed between a terminal device 1 and a terminal device 2. The terminal device 1 may be a transmit-end terminal, and the terminal device 2 may be a receive-end terminal. Alternatively, the terminal device 1 may be a receive-end terminal, and the terminal device 2 may be a transmit-end terminal.

For the multicast transmission, the receive-end terminal may be terminal devices in a communication group, or the receive-end terminal may be terminal devices within a specific transmission distance. For example, in FIG. 8, a terminal device 1, a terminal device 2, a terminal device 3, and a terminal device 4 constitute a communication group. If the terminal device 1 transmits data, all the other terminal devices (the terminal device 2 to the terminal device 4) in the group may be receive-end terminals.

**Slot structure for sidelink communication**

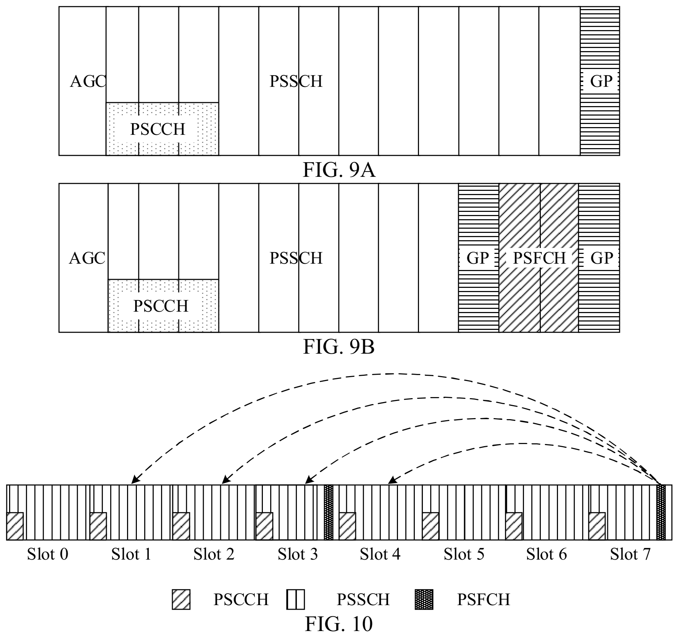

In a communications system, a frame, a subframe or a slot structure of sidelink communication may be defined. In some sidelink communications systems, a plurality of slot structures are defined. For example, two slot structures are defined in an NR-based sidelink communications system (NR SL). One of the slot structures includes no physical sidelink feedback channel (physical sidelink feedback channel, PSFCH), as shown in FIG. 9A; and the other of the slot structures includes a PSFCH, as shown in FIG. 9B.

A PSCCH in the NR SL may use a second sidelink symbol of a slot as a start position in time domain, and the PSCCH may occupy two or three symbols in time domain (each symbol mentioned herein may refer to an orthogonal frequency division multiplexing (orthogonal frequency division multiplexing, OFDM) symbol). In frequency domain, the PSCCH may occupy a plurality of physical resource blocks (physical resource block, PRB). For example, a quantity of PRBs occupied by the PSCCH may be selected from the following values: {10, 12, 15, 20, 25}.

To reduce complexity of blind detection performed by a terminal device on the PSCCH, generally, in one resource pool, only one symbol quantity and one PRB quantity are configured for the PSCCH. In addition, because the NR SL uses a sub-channel (sub-channel) as a minimum granularity of PSSCH resource allocation, the quantity of PRBs occupied by the PSCCH must be less than or equal to a quantity of PRBs included in one sub-channel in a resource pool.

Referring to FIG. 9A, for a slot structure including no PSFCH, the PSSCH in the NR SL may use a second sidelink symbol in the slot as a start position in time domain. The last sidelink symbol in the slot is used as a guard period (guard period, GP), and a remaining symbol may be used for mapping the PSSCH, where the guard period may also be referred to as a guard symbol (guard symbol). The first sidelink symbol in the slot may be a repetition of the second sidelink symbol. Generally, a terminal device as a receive end uses the first sidelink symbol as a symbol for performing automatic gain control (automatic gain control, AGC). Thus, data in the first sidelink symbol is not generally used for data demodulation. The PSSCH may occupy K sub-channels in frequency domain, and each sub-channel may include M consecutive PRBs (values of K and M may be predefined in a protocol, or pre-configured, or configured by a network device, or determined depending on implementation of the terminal device).

FIG. 9B shows a slot structure including a PSFCH, and FIG. 9B schematically shows positions of symbols occupied by a PSFCH, a PSCCH, and a PSSCH in one slot. The slot structure mainly differs from the slot structure in FIG. 9A in that a second-to-last symbol and a third-to-last symbol in the slot are used for transmitting a PSFCH, and in addition, a symbol before the symbol used for transmitting the PSFCH is also used as a GP (or a guard symbol). It may be learned from the slot structure shown in FIG. 9B that, in one slot, a last symbol is used as a GP, the second-to-last symbol is used for transmitting the PSFCH, and data in the third-to-last symbol is the same as data in the second-to-last symbol used for transmitting the PSFCH, that is, the third-to-last symbol is used as a symbol for performing AGC, and a fourth-to-last symbol has a same function as the last symbol and is also used as a GP. In addition, a 1st symbol in the slot is used for AGC, data in the symbol is the same as data in a 2nd symbol in the slot. The PSCCH occupies three symbols, and remaining symbols may be used for transmitting the PSSCH.

**PSFCH transmission resource**

In order to reduce overheads of a PSFCH, it is specified in some communications systems that, one slot in every N slots includes a PSFCH transmission resource (or referred to as a sidelink feedback resource). In other words, a period of the sidelink feedback resource is N slots. A value of N, for example, may be 1, 2 or 4. The parameter N mentioned herein may be preconfigured or may be configured by a network device.

FIG. 10 shows a sidelink feedback scenario corresponding to a case where the value of N is 4. As can be seen from FIG. 10, sidelink feedback information of PSSCHs transmitted in slots 1, 2, 3, and 4 is all transmitted in slot 7. Therefore, slots {1, 2, 3, 4} may be considered as a slot set, and PSFCHs corresponding to the PSSCHs transmitted in the slots in the slot set are located in a same slot.

If a transmit-end device (namely, a terminal device as a transmit end) transmits a PSCCH/PSSCH in a slot n, a receive-end device (namely, a terminal device as a receive end) transmits a PSFCH in a first available slot following a slot n+k, where k is a configuration parameter. A value of k may be 2 or 3. For example, in FIG. 10, a network device configures that k = 2, the transmit-end device transmits a PSCCH/PSSCH in a slot 4, and the receive-end device transmits a PSFCH in a first available slot following a slot 6, that is, in a slot 7.

**DMRS structure of PSCCH and PSSCH**

A PSSCH supports a plurality of time domain DMRS patterns. Table 1 shows definition of a time-domain DMRS pattern of a PSSCH in some communications systems (such as an NR SL system). As shown in Table 1, in a resource pool, if a quantity of PSSCH symbols (the quantity of PSSCH symbols includes a 1st symbol used for AGC, but the quantity of PSSCH symbols does not include a last symbol used as a GP, a PSFCH symbol, or an AGC and GP symbols located before the PSFCH symbol) is greater than or equal to 11, at most three different time domain DMRS patterns may be configured. The three time-domain DMRS patterns are respectively a time-domain DMRS pattern including two DMRS symbols, a time-domain DMRS pattern including three DMRS symbols, and a time-domain DMRS pattern including four DMRS symbols. If the quantity of PSSCH symbols is 6, 7 or 8, only the time-domain DMRS pattern including two DMRS symbols can be configured for the PSSCH. If the quantity of symbols of the PSSCH is 9 or 10, the time-domain DMRS pattern including two or three DMRS symbols may be configured for the PSSCH. If the quantity of symbols of the PSSCH is 11, 12 or 13, the time-domain DMRS pattern including two DMRS symbols, three DMRS symbols or four DMRS symbols may be configured for the PSSCH.

Table 1 shows symbol positions corresponding to PSSCH DMRSs with different quantities of symbols when a PSCCH occupies two symbols and three symbols, respectively. As can be seen from Table 1, the quantity of PSSCH symbols is greater than or equal to 6. In other words, a quantity of symbols (including no GP symbol) available for PSSCH transmission in one slot is required to be greater than or equal to 6.

If a plurality of time-domain DMRS patterns are configured in a resource pool, a time-domain DMRS pattern to be specifically used is selected by a transmit-end device and indicated in first-stage SCI.

Table 1: Quantities and positions of DMRS symbols for different quantities of PSSCH and PSCCH symbols

| Quantity of PSSCH symbols | DMRS symbol position (relative to a first symbol available for PSSCH transmission) | | | | | |
|---|---|---|---|---|---|---|
| | Quantity of PSCCH symbols being 2 | | | Quantity of PSCCH symbols being 3 | | |
| | Quantity of DMRS symbols | | | Quantity of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

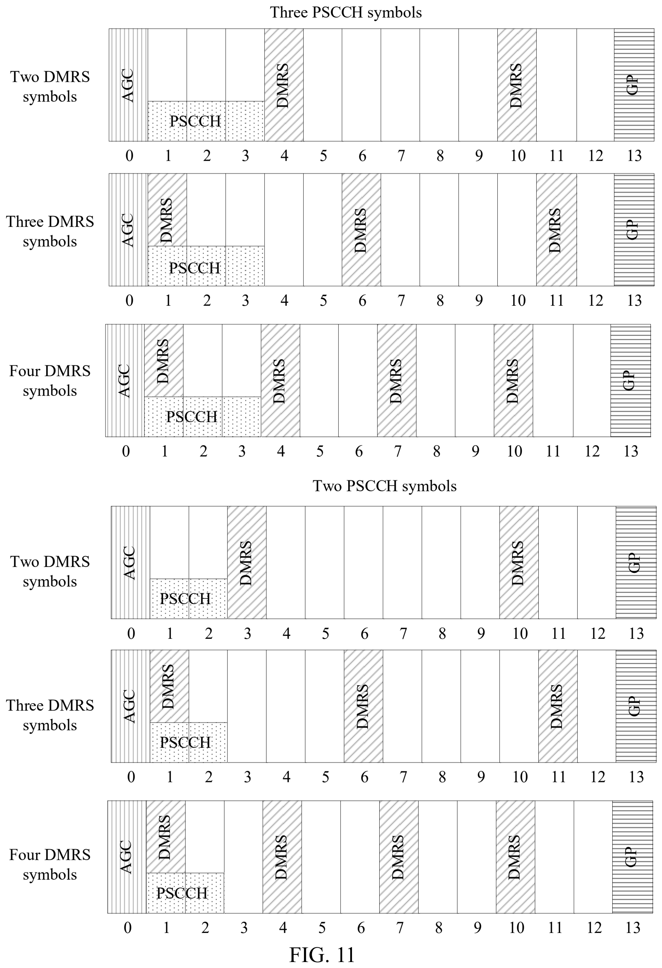

FIG. 11 shows time-domain DMRS patterns that may be adopted by a PSSCH with a length of 13 symbols. When the quantity of PSSCH symbols is 13, if a GP symbol is added, all 14 symbols in one slot may be used for sidelink transmission. In frequency domain, in any PRB on a symbol including a DMRS, there is a subcarrier carrying a DMRS in every two subcarriers. For example, in one PRB, a DMRS of a PSSCH is located on subcarriers {#0, #2, #4, #6, #8, #10} in the PRB.

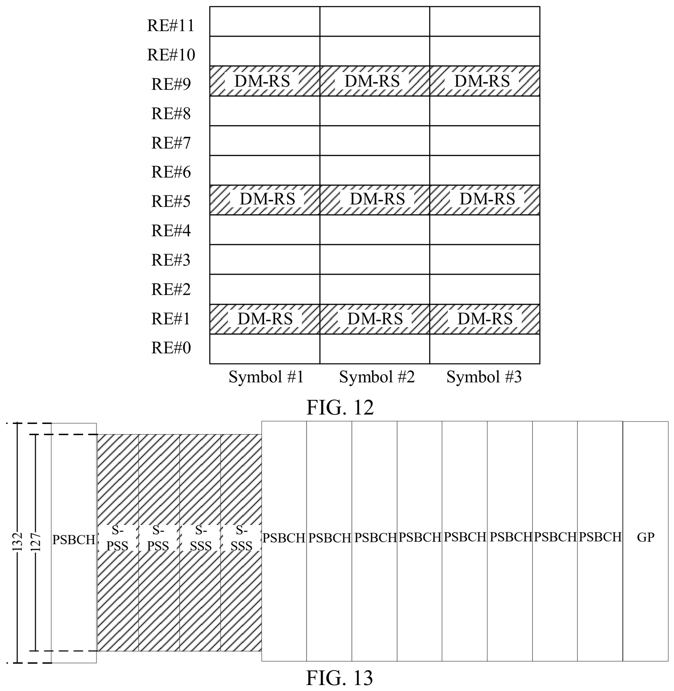

In time domain, a DMRS of a PSCCH is in every symbol occupied by the PSCCH. In frequency domain, one PRB includes three subcarriers for carrying the DMRS of the PSCCH. For example, the DMRS of the PSCCH is located on subcarriers {#1, #5, #9} of one PRB, as shown in FIG. 12.

## PSBCH and DMRS structure of PSBCH

An S-SSB in a sidelink communications system (such as NR SL) includes a sidelink synchronization signal and a PSBCH, and the sidelink synchronization signal is divided into a sidelink primary synchronization signal (sidelink primary synchronization signal, S-PSS) and a sidelink secondary synchronization signal (sidelink secondary synchronization signal, S-SSS). The S-SSB may also be referred to as an S-SS/PSBCH block.

In time domain, the S-PSS occupies $2^{nd}$ and $3^{rd}$ symbols in one slot. The S-SSS occupies $4^{th}$ and $5^{th}$ symbols in one slot. A last symbol in one slot is a GP (or a guard symbol), and a remaining symbol is used to transmit a PSBCH. The S-PSS and S-SSS are continuous in time domain, so that a channel estimation result obtained based on the S-PSS may be applied to S-SSS detection, which is beneficial to improving detection performance of the S-SSS.

In frequency domain, a PSBCH occupies 11 consecutive PRBs, namely, 132 subcarriers (each PRB includes 12 subcarriers). A length of the S-PSS and S-SSS is 127, and thus on symbols where the S-PSS and S-SSS are located, subcarriers #0, #1, #129, #130 and #131 are set to zero, as shown in FIG. 13.

A PSBCH DMRS is included in each symbol occupied by the PSBCH, and is mapped to subcarrier #0, subcarrier #4, and subcarrier #8 in each RB occupied by the PSBCH.

**Multi-beam system**

A design objective of a communications system (for example, an NR system) includes large bandwidth communication with a high frequency band (for example, a frequency band above 6 GHz). When a working frequency becomes higher, path loss in a transmission process increases, which affects a coverage capability of a high-frequency system. Therefore, to effectively ensure a coverage range of a high frequency band, an effective technical solution is to form beamforming with a larger gain based on massive multiple-input multiple-output (massive multiple input multiple output, massive MIMO), to overcome propagation loss, and ensure coverage of a communications system.

Currently, a common large-scale antenna array is a millimeter-wave antenna array. Because a wavelength emitted by the millimeter-wave antenna array is relatively short, a spacing between antenna elements of the antenna array may be relatively short, and an aperture of an antenna element may be relatively small, and thus more physical antenna elements may be integrated into a two-dimensional antenna array with a limited size.

In addition, because a size of the millimeter-wave antenna array is limited, a digital beamforming manner cannot be used due to factors such as hardware complexity, costs, and power consumption. Instead, usually an analog beamforming manner is used. The analog beamforming manner may reduce implementation complexity of a device while enhancing network coverage.

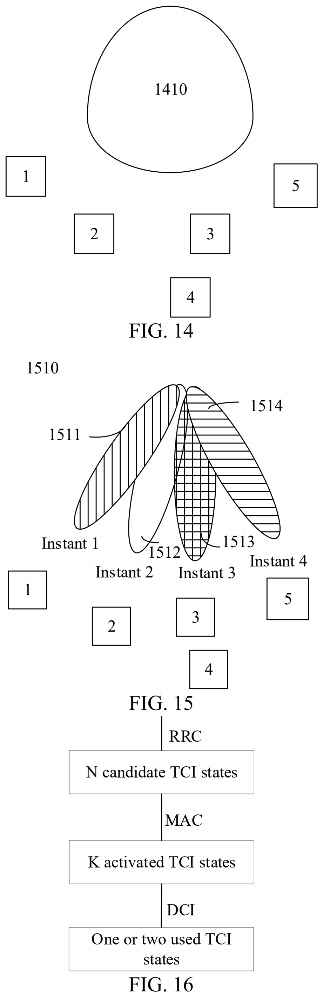

To facilitate understanding of a multi-beam system, with reference to FIG. 14 and FIG. 15, the following describes a beam-based communication process in an example of a scenario in which a network device communicates with a terminal device.

Referring to FIG. 14, in a conventional communications system (for example, a 2G, 3G, or 4G system), a relatively wide beam (beam) 1010 is generally used to cover an entire cell (or referred to as a "sector"). In this way, terminal devices (for example, terminal devices 1 to 5) in the cell may communicate with a network device by using this relatively wide beam at each instant, for example, obtain a transmission resource allocated by the network device.

Referring to FIG. 15, in a relatively new communications system (for example, a 5G system or an NR system), a multi-beam (multi-beam) system 1510 may be used to cover an entire cell. Each beam (for example, beams 1511 to 1514) in the multi-beam system covers a relatively small range in the cell, and an effect of covering the entire cell by using a plurality of beams is achieved in a manner of beam sweeping (beam sweeping).

In a beam sweeping process, different beams are used at different instants to cover different areas in the cell. For example, at an instant 1, the communications system may cover, by using the beam 1511, an area in which a terminal device 1 is located. At an instant 2, the communications system may cover, by using the beam 1512, an area in which a terminal device 2 is located. At an instant 3, the communications system may cover, by using the beam 1513, an area in which a terminal device 3 and the terminal device 4 are located. At an instant 4, the communications system may cover, by using the beam 1514, an area in which a terminal device 5 is located.

For the multi-beam system, transmit energy may be more concentrated because a relatively narrow beam is used, thereby covering a further distance. However, because the beam is relatively narrow, each beam can cover only some areas in the cell. Therefore, a beam sweeping process of the multi-beam system may be understood as "trading time for space".

The analog beamforming may be used not only for a network device, but also for a terminal device. In addition, the analog beamforming may be used not only for signal transmission (referred to as a transmit beam), but also for signal receiving (referred to as a receive beam).

Currently, different beams are identified by using different signals carried in the beams. For example, different SSBs may be transmitted on different beams, so that the terminal device may distinguish different beams by using different synchronization signal blocks. For another example, different CSI-RSs may be transmitted on different beams, so the terminal device may identify different beams by using a channel state information reference signal (channel state information reference signal, CSI-RS) and/or a CSI-RS resource.

In the multi-beam system, a physical downlink control channel (physical downlink control channel, PDCCH) and a physical downlink shared channel (physical downlink shared channel, PDSCH) may be transmitted by using different downlink transmit beams.

For some communications system (such as a communications system whose carrier frequency is below 6 GHz), a terminal device generally does not use any analog beam. In such communications systems, the terminal device may receive signals transmitted by different downlink transmit beams of the network device by using an omnidirectional antenna (or a near-omnidirectional antenna).

For some communications systems (such as a millimeter wave system), a terminal device may use an analog beam. In such communications systems, the terminal device may receive a signal transmitted by a downlink transmit beam corresponding to a downlink receive beam. In this case, beam indication (beam indication) information may be used to assist the terminal device in determining one or more of the following information: related information of a transmit beam of a network device, or related information of a receive beam corresponding to the terminal device.

In some communication protocols (such as NR-related protocols), the beam indication information does not directly indicate a beam itself, but indicates the beam through a quasi co-located (quasi co-located, QCL) relationship between signals. On a terminal device side, receiving of a corresponding channel or a corresponding signal is also determined based on QCL hypothesis.

The transmit beam mentioned in embodiments of this application may also be referred to as a spatial domain transmission filter (spatial domain transmission filter), a transmit-end spatial domain transmission filter, a spatial domain transmission filter for transmission, or another name. Accordingly, the receive beam mentioned in embodiments of this application may also be referred to as a spatial domain reception filter (spatial domain reception filter), a receive end spatial domain transmission filter, a spatial domain transmission filter for reception, or another name. Alternatively, the transmit beam mentioned in embodiments of this application may also be referred to as a spatial domain transmission parameter (spatial domain transmission parameter). Accordingly, the receive beam mentioned in embodiments of this application may also be referred to as a spatial domain reception parameter (spatial domain reception parameter).

**QCL indication/hypothesis in downlink transmission**

When performing signal receiving, a terminal device may improve a receiving algorithm by using a characteristic of a transmission environment corresponding to data transmission, to improve receiving performance. For example, the terminal device may optimize design and a parameter of a channel estimator by using statistical characteristics of a channel. In some communications systems (such as an NR system), a characteristic of a transmission environment corresponding to data transmission may be represented by QCL information (QCL-Info).

When downlink data transmission is performed by using different transmission and receiving points (transmission and receiving point, TRP)/panels (panel)/beams, the characteristic of the transmission environment corresponding to data transmission may also change. Therefore, in some communications systems (such as an NR system), when a downlink control channel or a downlink data channel is required to be transmitted, a network device may indicate corresponding QCL information to a terminal device by using a TCI state.

A transmission configuration indicator (transmission configuration indicator, TCI) state may include the following configuration information: a TCI state identity (identity, ID), QCL information 1, and QCL information 2 (optional). The TCI state ID may be used for identifying a TCI state.

The QCL information may include the following information: QCL type configuration and QCL reference signal configuration. The QCL type configuration may be one of QCL-TypeA, QCL-TypeB, QCL-TypeC, or QCL-TypeD. The QCL reference signal configuration may include an identity of a cell (cell ID) in which a reference signal is located, a bandwidth part (bandwidth part, BWP), and an identity of the reference signal (for example, may be a CSI-RS resource identifier or an SSB index).

If both the QCL information 1 and the QCL information 2 are configured, a QCL type of at least one of the QCL information 1 and the QCL information 2 must be one of the QCL-TypeA, QCL-TypeB, and QCL-TypeC, and a QCL type of the other QCL information must be QCL type D.

Different QCL type configurations are defined as follows:

QCL Type A (QCL-TypeA): {Doppler shift (doppler shift), Doppler spread (doppler spread), average delay (average delay), delay spread (delay spread)};
QCL Type B (QCL-TypeB): {Doppler shift, Doppler spread};
QCL Type C (QCL-TypeC): {Doppler shift, average delay}; and
QCL type D (QCL-TypeD): {spatial domain reception parameter}.

In an NR system, a network device may indicate a corresponding TCI state for a downlink signal or a downlink channel. If the network device configures, by using the TCI state, a QCL reference signal of a target downlink channel or a target downlink signal as an SSB or a CSI-RS, and the QCL type configuration is QCL-TypeA, QCL-TypeB or QCL-TypeC, it may be assumed by a terminal device that a large-scale parameter of the target downlink signal is the same as a large-scale parameter of the SSB or the CSI-RS. Specific content of the large-scale parameter may be determined based on the QCL type configuration.

Similarly, if the network device configures, by using the TCI state, the QCL reference signal of the target downlink channel or target downlink signal as an SSB or a CSI-RS, and the QCL type is configured as QCL-TypeD, the terminal device may receive the target downlink signal by using a same receive beam (namely, a same spatial domain reception parameter (spatial Rx parameter)) as that used for receiving the SSB or CSI-RS. Generally, on a network device side, the target downlink channel (or the target downlink signal) and an SSB or CSI-RS that is referenced are transmitted by a same TRP/panel/beam. If different TRPs/panels/beams are used for transmitting two downlink signals (or downlink channels), different TCI states are typically configured for the two downlink signals (or downlink channels).

For a downlink control channel, a TCI state of a control resource set (control resource set, CORESET) corresponding to the downlink control channel may be indicated by using RRC signalling or RRC signalling plus medium access control (medium access control, MAC) signalling.

For a downlink data channel (namely, a PDSCH), referring to FIG. 16, a TCI state set available for the downlink data channel may be indicated by using RRC signalling, some of the TCI states are activated by using MAC layer signalling, and finally, one or two TCI states in the activated TCI states are indicated by using a TCI state indicator field in DCI and are used for a downlink data channel scheduled by the DCI.

**New frequency band (high frequency) for communications system**

The research on some communications systems (such as an NR system) currently mainly considers the following two frequency bands: frequency range 1 (frequency range 1, FR1) and frequency range 2 (frequency range 2, FR2). Frequency bands included in FR1 and FR2 are shown in Table 2 below.

Table 2: Definition of frequency bands corresponding to FR1 and FR2

| Definition of frequency band | Corresponding frequency range |
| --- | --- |
| FR1 | 410 MHz - 7.125 GHz |
| FR2 | 24.25 GHz - 52.6 GHz |

With evolution of communications systems (such as an NR system), technologies in a new frequency band (commonly referred to as high frequency) have also begun to be studied. A frequency of the new frequency band mentioned herein may be higher than FR1 and FR2, for example, may include the frequency range shown in Table 3 below.

Table 3: A possible definition of a new frequency band

| Definition of frequency band | Corresponding frequency range |
| --- | --- |
| FRX | 52.6 GHz - 71 GHz |

FRX used herein denotes the new frequency band, which is only used to distinguish from FR1 and FR2, and is not intended to limit the name of the new frequency band. For example, FRX may also be referred to as FR3. For another example, FR2 in the foregoing Table 2 may be recorded as FR2-1, and FRX in Table 3 may be recorded as FR2-2. Certainly, in addition to the two manners listed above, another manner may be used to identify the new frequency band, which is not specifically limited in this application.

The FRX frequency band may include both licensed spectrum and unlicensed spectrum. In other words, the FRX frequency band may include both shared spectrum and non-shared spectrum. The unlicensed spectrum mentioned herein is usually a spectrum allocated by a country or region and used for communication of a radio device, and the unlicensed spectrum is generally considered to be a spectrum shared by communications devices in different communications systems, that is, the communications devices in different communications systems may be allowed to use the spectrum provided that a regulatory requirement set by the country or region on the spectrum is met, without applying for a dedicated spectrum grant from a government. To enable communications systems that perform wireless communication by using an unlicensed spectrum to coexist on the spectrum, some countries or regions stipulate regulatory requirements that must be met when the unlicensed spectrum is used. For example, a communications device follows a rule of "listen before talk (listen before talk, LBT)", that is, before transmitting a signal on a channel of an unlicensed spectrum, the communications device needs to perform channel listening first, and the communications device can transmit the signal only when a result of the channel listening is that a channel is idle. If the result of the channel listening performed by the communications device on the channel of the unlicensed spectrum is that the channel is busy, the communications device may not transmit a signal. For another example, to ensure fairness, in one time of transmission, duration for which the communications device performs signal transmission by using a channel of an unlicensed spectrum cannot exceed a specific time period. For another example, in order to avoid too high power of a signal transmitted on a channel of an unlicensed spectrum affects transmission of another important signal on the channel, the communications device needs to comply with restriction of not exceeding a maximum power spectral density when transmitting a signal by using the channel of the unlicensed spectrum.

A subcarrier spacing of the FRX frequency band may be larger than that of FR2. Currently, candidate subcarrier spacings for the FRX frequency band may include one or more of the following: 120 kHz, 240 kHz, 480 kHz, 960 kHz, 1.92 MHz, or 3.84 MHz. In an example in which the subcarrier spacings are 120 kHz, 480 kHz and 960 kHz, a numerology (numerology) corresponding to the foregoing candidate subcarrier spacings is shown in Table 4 below.

Table 4: Numerology corresponding to candidate subcarrier spacing

| Subcarrier spacing | Symbol length | Normal cyclic prefix (normal cyclic prefix, NCP) length | Extended cyclic prefix (extended cyclic prefix, ECP) length | Sum of a symbol and an NCP length | Slot length |
|---|---|---|---|---|---|
| 120 kHz | 8.32 μs | 0.586 μs | 2.08 μs | 8.906 μs | 125 μs |
| 480 kHz | 2.08 μs | 0.146 μs | 0.52 μs | 2.226 μs | 31.25 μs |
| 960 kHz | 1.04 μs | 0.073 μs | 0.26 μs | 1.113 μs | 15.625 μs |

In order to improve a transmission rate of a sidelink communications system, introduction of a new frequency band into the sidelink communications system may be considered. The new frequency band may refer to a millimeter-wave frequency band. Alternatively, the new frequency band may refer to a frequency band having a frequency higher than 52.6 GHz, such as the FRX (or FR2-2) frequency band mentioned above having a frequency band ranging from 52.6 GHz to 71 GHz.

Different subcarrier spacings may be supported in different frequency ranges. For example, FR1 may support subcarrier spacings of 15 kHz, 30 kHz, and 60 kHz. FR2-1 may support subcarrier spacings of 60 kHz and 120 kHz. FRX may support subcarrier spacings of 120 kHz and above, for example, FRX may support subcarrier spacings of 120 kHz, 480 kHz, and 960 kHz.

A related technology defines slot structures corresponding to the following subcarrier spacings: 15 kHz, 30 kHz, 60 kHz, and 120 kHz. However, when the subcarrier spacing is greater than 120 kHz, for example, when the subcarrier spacing reaches 480 kHz or 960 kHz, how a slot structure of the sidelink communications system should be designed has not yet been discussed.

In view of the foregoing problems, a possible design solution for a slot structure is to continue to use slot structures shown in FIG. 9A and FIG. 9B. However, a depth study will reveal that if the slot structures shown in FIG. 9A and FIG. 9B continue to be used, a communication process will be difficult to implement. A specific reason is discussed as follows.

As shown in FIG. 9A or FIG. 9B, in a slot used for sidelink communication, the 1st symbol is usually an AGC symbol, which is used for a receive-end device to perform AGC adjustment or AGC training; the last symbol is used as a GP, which is usually used for RX/TX switching (RX/TX switching) or TX/RX switching (TX/RX switching) of a terminal device. When subcarrier spacing is different, duration of one symbol is also different. For example, when the subcarrier spacing is 15 kHz, duration corresponding to one symbol is approximately 66.7 μs. If duration of 4.69 μs corresponding to cyclic prefix (cyclic prefix, CP) is added, when the subcarrier spacing is 15 kHz, total duration of one symbol approximately ranges from 71 μs to 72 μs. For example, when the subcarrier spacing is 120 kHz, total duration of one symbol (a sum of the symbol and a CP length) approximately ranges from 8 μs to 9 μs. Therefore, when the subcarrier spacing is 120 kHz, an AGC adjustment time does not exceed 8 μs to 9 μs, and an RX/TX switching time or TX/RX switching time of the terminal device is about 7 μs.

Duration corresponding to a switching time in FR1 and FR2 (which may include FR2-1 and FR2-2 mentioned above) may be determined based on Table 5 below.

Table 5: RX/TX switching time and TX/RX switching time

|  | First frequency range (FR1) | Second frequency range (FR2) |
|---|---|---|
| TX/RX switching time | 25600 | 13792 |
| RX/TX switching time | 25600 | 13792 |

The numerical values in Table 5 represent a quantity of time units (time unit). Duration corresponding to one time unit $T_c$ may be determined by the following formula: $T_c = 1/(\Delta f_{max} \cdot N_f)$, where $\Delta f_{max} = 480 \cdot 10^3$ Hz, and $N_f = 4096$.

When the subcarrier spacing is greater than 120 kHz, the duration corresponding to one symbol will continue to shorten. For example, when the subcarrier spacing of the sidelink system is 480 kHz, the duration of one symbol approximately ranges from 2 μs to 3 μs (as shown in Table 4); when the subcarrier spacing of the sidelink system is 960 kHz, the duration of one symbol is approximately 1 μs (as shown in Table 4). It may be seen that, as the frequency increases, the duration corresponding to one symbol may be too short, making it difficult for the terminal device to complete AGC adjustment, RX/TX switching or TX/RX switching in such a short time. Therefore, more symbols are required for AGC adjustment and RX/TX switching (or TX/RX switching). However, if a plurality of symbols are used for AGC or used as GPs, a quantity of symbols used for sidelink data transmission becomes relatively small, thereby greatly reducing transmission efficiency of a communications system.

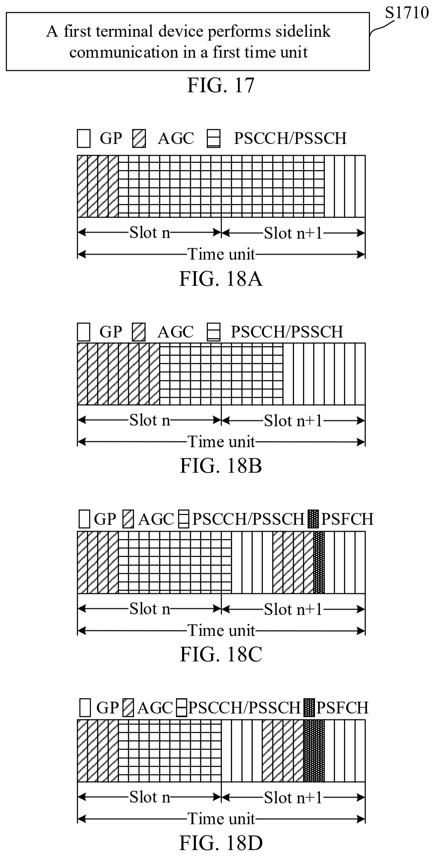

In view of the foregoing problem, an embodiment of this application provides a time unit available for sidelink transmission (see Embodiment 1 for details). The time unit may include a plurality of slots, so that a problem caused by short duration corresponding to a symbol may be solved to some extent. For the convenience of description, the following mainly introduces from a perspective of a first time unit. The first time unit may be any time unit used for sidelink communication. As shown in FIG. 17, based on introduction of the first time unit, a first terminal device may perform sidelink communication (such as sidelink transmission or sidelink reception, refer to step S1710 in FIG. 17) in the first time unit. A sidelink communication process may involve transmission of one or more of a PSSCH, a PSCCH or a PSFCH, so that an embodiment of this application further proposes how to perform PSSCH transmission based on a time unit (see Embodiment 2 for details) and how to determine a transport block size (transport block size, TBS) (see Embodiment 3 for details), how to perform sidelink feedback based on a time unit (see Embodiment 4 for details), how to determine a PSFCH transmission resource and PSFCH configuration information (see Embodiment 5 for details), and how to determine a DMRS pattern based on a time unit (see Embodiment 6 for details). It should be understood that, in absence of conflict, implementations provided in the embodiments may be arbitrarily combined with each other.

**Embodiment 1: A first time unit including consecutive M slots**

The first time unit may include consecutive M slots (M is a positive integer greater than 1). The first time unit may also be understood as a slot structure based on multiple slots. In some implementations, the first time unit may be referred to as an aggregate slot (aggregate slot), slot aggregation (slot aggregation), a super slot (super slot), a slot group (slot group), or multiple slots (multiple slot or multi-slot).

In some implementations, a value of M may be determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the M slots included in the first time unit are consecutive M physical slots. The physical slot is relative to a logical slot. Generally speaking, a slot belonging to a resource pool is called a logical slot, and $10240 \cdot 2^{\mu_{SL}}$ slots included in a system frame number (SFN) period (including 10240 ms) are called physical slots, where $\mu_{SL}$ is a parameter related to a sidelink subcarrier spacing, and a value of $\mu_{SL}$ may be determined based on Table 6.

Table 6

| $\mu_{SL}$ | Subcarrier spacing $\Delta f = 2^{\mu} \cdot 15$[kHz] |
|---|---|
| 0 | 15 |
| 1 | 30 |
| 2 | 60 |
| 3 | 120 |
| 5 | 480 |
| 6 | 960 |

Consecutive slots in a resource pool may not be consecutive physical slots. If consecutive M slots are set as consecutive M slots in a resource pool, a slot belonging to another resource pool may be included in the M slots. In this way, when a terminal device uses the M slots for transmission, reception may be required in the slot belonging to another resource pool, resulting in additional GP overheads for RX/TX switching. Therefore, setting the M slots as consecutive M physical slots may reduce GP overheads caused by RX/TX switching.

In some implementations, the M slots included in the first time unit are consecutive slots available for sidelink transmission (a slot in a resource pool is determined from the slots available for sidelink transmission).

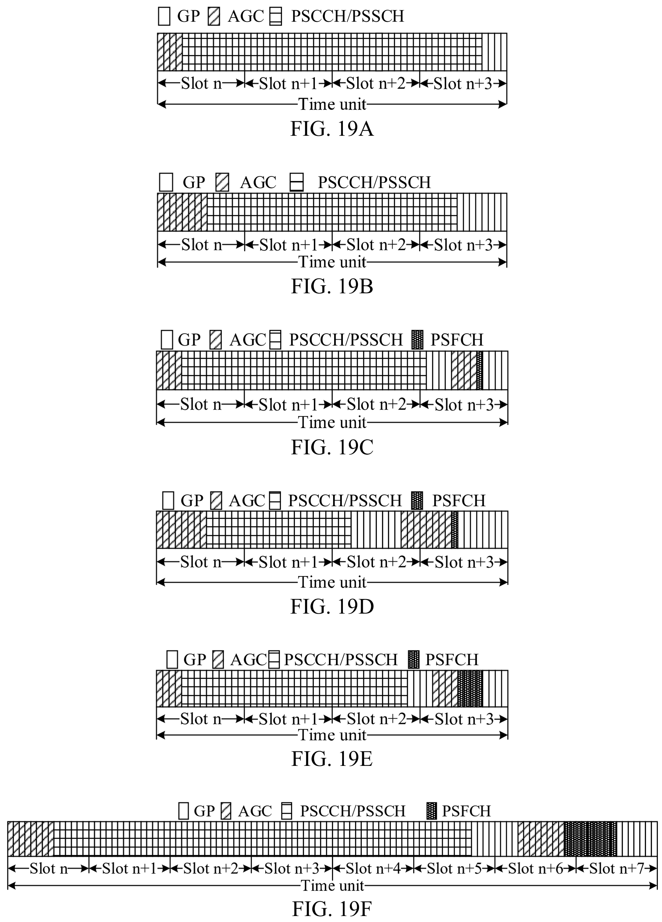

In some implementations, the first time unit may include a PSCCH transmission resource and a PSSCH transmission resource. Alternatively, the first time unit may include a PSCCH transmission resource, a PSSCH transmission resource, and a PSFCH transmission resource. The following describes uses of symbols in a first time unit with reference to FIG. 18 and FIG. 19 by using examples. In first time units shown in FIG. 18 and FIG. 19, the $1^{st}$ symbol used to transmit a PSCCH or a PSSCH is the $(A+1)^{th}$ symbol in the first time unit, that is, first A symbols in the first time unit are AGC symbols, which may be used for AGC adjustment or AGC training, and last B1 symbols in the first time unit are guard symbols or GP symbols.

FIG. 18A shows an example of a first time unit. In FIG. 18A, the first time unit includes two slots (a slot n and a slot n+1 in FIG. 18A), that is, M = 2. In the two slots, first four symbols are used for AGC and last four symbols are used as GPs. The first time unit using the slot structure shown in FIG. 18A may be applicable, for example, to a case in which a sidelink

13

subcarrier spacing is 480 kHz.

FIG. 18B shows another example of a first time unit. In FIG. 18B, the first time unit includes two slots (a slot n and a slot n+1 in FIG. 18B), that is, M = 2. In the two slots, first eight symbols are used for AGC and last eight symbols are used as GPs. The first time unit using the slot structure shown in FIG. 18B may be applicable, for example, to a case in which a sidelink subcarrier spacing is 480 kHz or 960 kHz.

FIG. 18C shows still another example of a first time unit. In FIG. 18C, the first time unit includes two slots (a slot n and a slot n+1 in FIG. 18C), that is, M = 2. In the two slots, first four symbols are used for AGC and last four symbols are used as GPs. The first time unit further includes a PSFCH transmission resource. The PSFCH transmission resource occupies five symbols, one symbol of which is used to transmit sidelink feedback information (for example, hybrid automatic repeat request (hybrid automatic repeat reQuest, HARQ) information) or conflict indication information, and remaining four symbols are used for AGC. In addition, four symbols used as GPs located before a symbol corresponding to the PSFCH transmission resource are further included. The first time unit using the slot structure shown in FIG. 18C may be applicable, for example, to a case in which a sidelink subcarrier spacing is 480 kHz.

FIG. 18D shows still another example of a first time unit. In FIG. 18D, the first time unit includes two slots (a slot n and a slot n+1 in FIG. 18D), that is, M = 2. In the two slots, first four symbols are used for AGC and last four symbols are used as GPs. The first time unit further includes a PSFCH transmission resource. The PSFCH transmission resource occupies six symbols, two symbols of which are used to transmit sidelink feedback information (such as HARQ information) or conflict indication information, and remaining four symbols are used for AGC. In addition, four symbols used as GPs located before a symbol corresponding to the PSFCH transmission resource are further included. The first time unit using the slot structure shown in FIG. 18D may be applicable, for example, to a case in which a sidelink subcarrier spacing is 480 kHz.

FIG. 19A shows still another example of a first time unit. In FIG. 19A, the first time unit includes four slots (namely, a slot n, a slot n+1, a slot n+2, and a slot n+3 in FIG. 19A), that is, M = 4. In the four slots, first four symbols are used for AGC and last four symbols are used as GPs. The first time unit using the slot structure shown in FIG. 19A may be applicable, for example, to a case in which a sidelink subcarrier spacing is 480 kHz.

FIG. 19B shows still another example of a first time unit. In FIG. 19B, the first time unit includes four slots (namely, a slot n, a slot n+1, a slot n+2, and a slot n+3 in FIG. 19A), that is, M = 4. In the four slots, first eight symbols are used for AGC and last eight symbols are used as GPs. The first time unit using the slot structure shown in FIG. 19B may be applicable, for example, to a case in which a sidelink subcarrier spacing is 480 kHz or 960 kHz.

FIG. 19C shows still another example of a first time unit. In FIG. 19C, the first time unit includes four slots (namely, a slot n, a slot n+1, a slot n+2, and a slot n+3 in FIG. 19C), that is, M = 4. In the four slots, first four symbols are used for AGC and last four symbols are used as GPs. The first time unit includes a PSFCH transmission resource. The PSFCH transmission resource occupies five symbols, one symbol of which is used to transmit sidelink feedback information (such as HARQ information) or conflict indication information, and remaining four symbols are used for AGC. In addition, four symbols used as GPs located before a symbol corresponding to the PSFCH transmission resource are further included. The first time unit using the slot structure shown in FIG. 19C may be applicable, for example, to a case in which a sidelink subcarrier spacing is 480 kHz.

FIG. 19D shows still another example of a first time unit. In FIG. 19D, the first time unit includes four slots (namely, a slot n, a slot n+1, a slot n+2, and a slot n+3 in FIG. 19D), that is, M = 4. In the four slots, first eight symbols are used for AGC and last eight symbols are used as GPs. The first time unit includes a PSFCH transmission resource. The PSFCH transmission resource occupies nine symbols, one symbol of which is used to transmit sidelink feedback information (such as HARQ information) or conflict indication information, and remaining eight symbols are used for AGC. In addition, eight symbols used as GPs located before a symbol corresponding to the PSFCH transmission resource are further included. The first time unit using the slot structure shown in FIG. 19D may be applicable, for example, to a case in which a sidelink subcarrier spacing is 480 kHz or 960 kHz.

FIG. 19E shows still another example of a first time unit. In FIG. 19E, the first time unit includes four slots (namely, a slot n, a slot n+1, a slot n+2, and a slot n+3 in FIG. 19E), that is, M = 4. In the four slots, first four symbols are used for AGC and last four symbols are used as GPs. The first time unit includes a PSFCH transmission resource. The PSFCH transmission resource occupies eight symbols, four symbols of which are used to transmit sidelink feedback information (such as HARQ information) or conflict indication information, and remaining four symbols are used for AGC. In addition, four symbols used as GPs located before a symbol corresponding to the PSFCH transmission resource are further included. The first time unit using the slot structure shown in FIG. 19E may be applicable, for example, to a case in which a sidelink subcarrier spacing is 480 kHz. FIG. 19E may be understood as a time unit structure including a plurality of slots obtained by proportionally expanding (four times expansion) a single slot structure corresponding to a 120 kHz subcarrier spacing.

FIG. 19F shows still another example of a first time unit. In FIG. 19F, the first time unit includes 8 slots (a slot n to a slot n+7 in FIG. 19F), that is, M = 8. In the eight slots, first eight symbols are used for AGC and last eight symbols are used as GPs. The first time unit includes a PSFCH transmission resource. The PSFCH transmission resource occupies 16 symbols, eight symbols of which are used to transmit sidelink feedback information (such as HARQ information), and remaining eight symbols are used for AGC. In addition, eight symbols used as GPs located before a symbol corresponding to the PSFCH transmission resource are further included. The first time unit using the slot structure shown in FIG. 19F may be applicable, for example, to a case in which a sidelink subcarrier spacing is 480 kHz or 960 kHz. FIG. 19F may be understood as a time unit structure including a plurality of slots obtained by proportionally expanding (8 times expansion) a single slot structure corresponding to a 120 kHz subcarrier spacing.

**Embodiment 1.1: A guard symbol in a first time unit**

The guard symbol may also be referred to as a symbol used as a GP. In some implementations, the guard symbol may be used by a terminal device to perform RX/TX switching or TX/RX switching. In some implementations, no data may be mapped to the guard symbol.

In some implementations, the first time unit may include a first guard symbol. The first guard symbol includes consecutive B1 symbols, and the B1 symbols are last B1 symbols of the first time unit, where B1 is a positive integer greater than 1.

In some implementations, a first time unit may include a first guard symbol. The first guard symbol includes consecutive B1 symbols, and the B1 symbols are last B1 symbols of the first time unit available for sidelink transmission, where B1 is a positive integer greater than 1.

In some implementations, the first guard symbol is located in a last slot of the first time unit.

In some implementations, if the first time unit includes a first time domain resource for transmitting a PSFCH, the first time unit may include a second guard symbol. The second guard symbol includes B2 consecutive symbols, where B2 is a positive integer greater than 1. The B2 symbols in the second guard symbol may be located before the first time domain resource. The B2 symbols may be adjacent to the first time domain resource, that is, the last symbol of the B2 symbols and the 1st symbol of the first time domain resource are adjacent symbols in the first time unit.

In some implementations, the second guard symbol is located in the last slot and/or the second-to-last slot of the first time unit.

In some implementations, B1 and B2 have a same value. For example, B1 and B2 are both equal to B, and B is a positive integer greater than 1. In some other implementations, B1 and B2 have different values. For example, B1 is greater than B2, or B2 is greater than B1.

A method for determining a value of B is described in detail below. It should be understood that, the method for determining the value of B may be applicable to B1 mentioned above, and may also be applicable to B2 mentioned above.

In some implementations, a value of B is equal to 4. Further, in some implementations, if the value of B is equal to 4, a sidelink subcarrier spacing corresponding to the first time unit is 480 kHz. For example, in examples of time units shown in FIG. 18A, FIG. 18C, FIG. 18D, FIG. 19A, FIG. 19C, and FIG. 19E, the value of B is 4.

In some implementations, the value of B is equal to 8. Further, in some implementations, if a value of B is equal to 8, a sidelink subcarrier spacing corresponding to the first time unit is 480 kHz or 960 kHz. For example, in examples of time units shown in FIG. 18B, FIG. 19B, FIG. 19D, and FIG. 19F, the value of B is 8.

In some implementations, the value of B is determined based on one or more of the following information: protocol predefined information; resource pool configuration information; sidelink BWP configuration information; or indication information of a terminal device. The terminal device may be a transmit-end device of sidelink data, or may be a receive-end device of sidelink data.

In some implementations, the value of B may be determined based on first indication information. The first indication information may be used to indicate one or more of the following: the value of B; a time domain position of the 1st symbol available for sidelink transmission in one slot or one time unit (the time unit mentioned in embodiments of this application may refer to a time unit including consecutive M slots or a time unit including consecutive M slots available for sidelink transmission, which will not be repeated below); a length of a symbol or a quantity of symbols available for sidelink transmission in one time unit; or a quantity of slots included in one time unit.

In an example, the first indication information may be used to directly indicate the value of B. Alternatively, the value of B may be determined based on a value indicated by the first indication information.

In another example, the first indication information may include information 1 and information 2. The information 1 indicates a time domain position of the 1st symbol available for sidelink transmission in one slot or one time unit. The information 2 indicates a length of a symbol or a quantity of symbols available for sidelink transmission in one time unit. The value of B may be determined based on the information 1 and the information 2. For example, the information 1 indicates that the time domain position of the 1st symbol available for sidelink transmission in one time unit is a symbol 0; and the information 2 indicates that the quantity of symbols available for sidelink transmission in one time unit is 24. According to the information 1 and the information 2, it may be assumed that the first time unit includes two slots. In a case of normal CP, the first time unit includes 28 symbols, so that a quantity of symbols used as GPs is 4, that is, the value of B is 4.

In another example, the first indication information may include information 3. The information 3 indicates a length of a symbol or a quantity of symbols available for sidelink transmission in one time unit. The value of B may be determined based on the information 3. For example, the information 3 indicates that the quantity of symbols available for sidelink transmission in one time unit is 24. The value indicated by the information 3 is greater than a quantity of symbols included in one slot and is less than a quantity of symbols included in two slots. Therefore, it may be assumed that the first time unit includes two slots and both slots may be used for sidelink transmission. In the case of normal CP, two slots include a total of 28 symbols, and thus a quantity of GP symbols is 4, that is, the value of B is 4 (in this example, it is assumed that a starting symbol corresponding to a sidelink transmission resource in the first time unit is the 1st symbol in the first time unit).

In another example, the first indication information may include information 4 and information 5. The information 4 indicates a length of a symbol or a quantity of symbols available for sidelink transmission in one time unit. The information 5 indicates a quantity of slots included in one time unit. The value of B may be determined based on the information 4 and the information 5. For example, the information 4 indicates that the quantity of symbols available for sidelink transmission in one time unit is 24, and the information 5 indicates that one time unit includes two slots. In the case of normal CP, two slots include a total of 28 symbols, and thus a quantity of GP symbols is 4, that is, the value of B is 4 (in this example, it is assumed that a starting symbol corresponding to a sidelink transmission resource in the first time unit is a 1st symbol in the first time unit).

In some implementations, the first indication information may be included in the resource pool configuration information or sidelink BWP configuration information. Alternatively, the first indication information may be indicated by a terminal device. The terminal device may be a transmit-end device of sidelink data, or may be a receive-end device of sidelink data.

In some implementations, the value of B may be determined based on a first sidelink subcarrier spacing and a second sidelink subcarrier spacing. The first sidelink subcarrier spacing is different from the second sidelink subcarrier spacing.

In some implementations, the first sidelink subcarrier spacing may be greater than the second sidelink subcarrier spacing.

In some implementations, the first sidelink subcarrier spacing is a sidelink subcarrier spacing corresponding to the first time unit.

In some implementations, the first subcarrier spacing is determined based on the protocol predefined information, resource pool configuration information, or sidelink BWP configuration information. In an example in which the first sidelink subcarrier spacing is determined based on the sidelink BWP configuration information, the sidelink BWP configuration information may be used for configuring a BWP corresponding to the first time unit.

In some implementations, the second subcarrier spacing is determined based on the protocol predefined information, resource pool configuration information, or sidelink BWP configuration information. Sometimes the second subcarrier spacing may also be referred to as a reference subcarrier spacing.

In some implementations, the first sidelink subcarrier spacing is 480 kHz or 960 kHz.

In some implementations, the second subcarrier spacing is 15 kHz, 30 kHz, 60 kHz or 120 kHz.

For example, the first sidelink subcarrier spacing is denoted by $\mu_{SL1}$, the second sidelink subcarrier spacing is denoted by $\mu_{SL2}$, and B satisfies: $B = \dfrac{2^{\mu_{SL1}}}{2^{\mu_{SL2}}}$. It is assumed that $\mu_{SL1} = 5$, and $\mu_{SL2} = 3$, that is, the first sidelink subcarrier spacing is a subcarrier spacing of 480 kHz, and the second sidelink subcarrier spacing is a subcarrier spacing of 120 kHz. In this case, B = 4. It is assumed that $\mu_{SL1} = 6$, and $\mu_{SL2} = 3$, that is, the first sidelink subcarrier spacing is a subcarrier spacing of 960 kHz, and the second sidelink subcarrier spacing is a subcarrier spacing of 120 kHz. In this case, B = 8.

In some implementations, the first time unit may include two adjacent slots, and a third guard symbol is set between symbols used for sidelink transmission in the two adjacent slots.

In some implementations, the third guard symbols include C symbols. C may be a positive integer greater than or equal to 1. For example, a value of C is 1 or 2. For another example, a value of C is less than or equal to the value of B mentioned above.

In some implementations, the third guard symbol corresponds to last C symbols of a former slot in the two slots. In other words, the last C symbols of the former slot in the two adjacent slots are used as guard symbols.

In some implementations, the third guard symbol corresponds to first C symbols of a latter slot in the two slots. In other words, the first C symbols of the latter slot of the two adjacent slots are used as guard symbols.

In some implementations, the value of C is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, if the first time unit is used to transmit a plurality of PSSCHs, and the plurality of PSSCHs correspond to different transport blocks (transport block, TB) (for detailed description of transmitting a plurality of PSSCHs in one time unit, and the plurality of PSSCHs correspond to different TBs, reference may be made to Embodiment 2.3 below), then the foregoing third guard symbol may be set between adjacent slots in the first time unit. Since the plurality of PSSCHs correspond to different TBs, the plurality of PSSCHs may be PSSCHs transmitted to different receive-end devices, and therefore the plurality of PSSCHs may correspond to different transmit beams. In this case, the transmit-end device needs to switch a transmit beam when transmitting a PSSCH, and duration corresponding to the third guard symbol may be used by the transmit-end device to switch the transmit beam.

In some implementations, if the first time unit is used to transmit a plurality of PSSCHs, a fourth guard symbol is set between transmission resources of two adjacent PSSCHs in the plurality of PSSCHs.

In some implementations, the fourth guard symbols include D symbols, where D is a positive integer greater than or equal to 1. For example, a value of D is 1 or 2. For another example, a value of D is less than or equal to the value of B mentioned above.

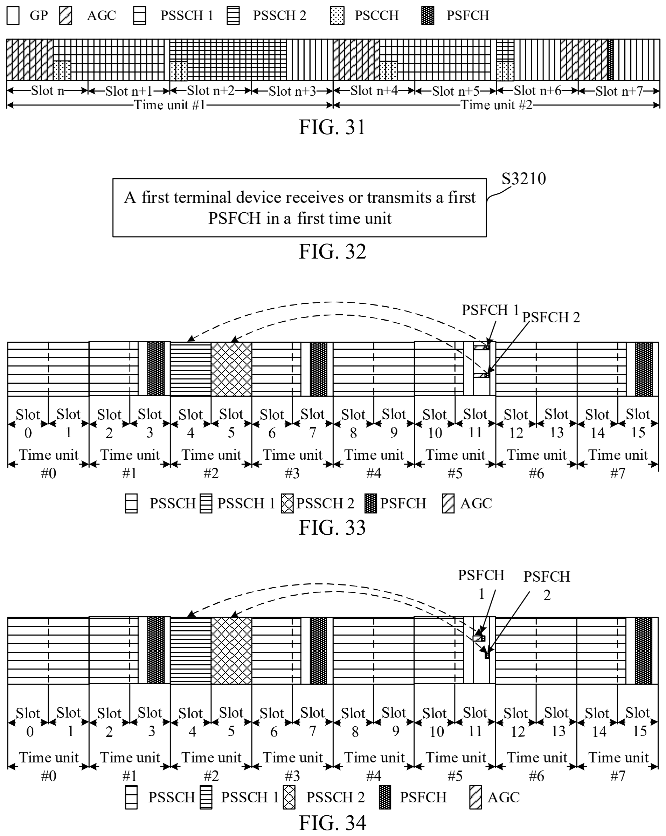

In some implementations, the fourth guard symbol corresponds to last D symbols of a last slot in slots occupied by a former PSSCH of two adjacent PSSCHs transmitted in the first time unit. In other words, the last D symbols of the last slot in the slots occupied by the former PSSCH of the two adjacent PSSCHs are used as guard symbols. For details, reference may be made to the example shown in FIG. 31 later. In this example, two PSSCHs in one time unit are separated by one guard symbol (that is, D = 1).

In some implementations, the fourth guard symbol corresponds to first D symbols of the 1st slot in slots occupied by a latter PSSCH of two adjacent PSSCHs transmitted in the first time unit. In other words, the first D symbols of the 1st slot in the slots occupied by the latter PSSCH of the two adjacent PSSCHs are used as guard symbols.

In some implementations, the value of D is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, if the first time unit is used to transmit a plurality of PSSCHs, and the plurality of PSSCHs correspond to different TBs (for detailed description of transmitting a plurality of PSSCHs in one time unit, and the plurality of PSSCHs correspond to different TBs, reference may be made to Embodiment 2.3 below), then the foregoing fourth guard symbol may be set between adjacent slots in the first time unit. Since the plurality of PSSCHs correspond to different TBs, the plurality of PSSCHs may be PSSCHs transmitted to different receive-end devices, and therefore the plurality of PSSCHs may correspond to different transmit beams. In this case, the transmit-end device needs to switch a transmit beam when transmitting a PSSCH, and duration corresponding to the fourth guard symbol may be used by the transmit-end device to switch the transmit beam.

In some implementations, if the first time unit is used to transmit a PSSCH (for detailed description, reference may be made to Embodiment 2.1 below), the third guard symbol may not be set between adjacent slots in the first time unit.

In some implementations, if the first time unit is used to transmit a plurality of PSSCHs, and the plurality of PSSCHs correspond to a same TB (for detailed description, reference may be made to Embodiment 2.2 below), the third guard symbol may not be set between adjacent slots in the first time unit; or the fourth guard symbol may not be set between adjacent PSSCHs of the plurality of PSSCHs.

In some implementations, at least one slot in the M slots included in the first time unit includes no guard symbol. In an implementation, a remaining slot except a last slot in the M slots included in the first time unit includes no guard symbol.

For example, in FIG. 18A and FIG. 18B, the first time unit includes two slots, namely, a slot n and a slot n+1. The slot n+1 includes a guard symbol used as a GP, and the slot n does not include a guard symbol used as a GP.

In another example, in FIG. 19A and FIG. 19B, the first time unit includes four slots, namely, a slot n, a slot n+1, a slot n+2, and a slot n+3. The slot n+3 includes a guard symbol used as a GP, and the slots n, n+1, and n+2 do not include a guard symbol used as a GP.

In some implementations, if the first time unit includes a time domain resource for transmitting a PSFCH, at least one of the last slot or the second-to-last slot of the M slots includes a guard symbol. Further, in some implementations, a remaining slot except the last slot and/or the second-to-last slot of the M slots includes no guard symbol.

## Embodiment 1.2: A time-frequency resource of a PSCCH in a first time unit

In some implementations, the first time unit includes a second time domain resource for transmitting the PSCCH. A starting symbol of the second time domain resource is the $(A+1)^{th}$ symbol of the first time unit, where A is a positive integer greater than 1.

In some implementations, a value of A is equal to 4. Further, in some implementations, if the value of A is equal to 4, a sidelink subcarrier spacing corresponding to the first time unit is 480 kHz. For example, in examples of time units shown in FIG. 18A, FIG. 18C, FIG. 18D, FIG. 19A, FIG. 19C, and FIG. 19E, the value of A is 4.

In some implementations, the value of A is equal to 8. Further, in some implementations, if the value of A is equal to 8, a sidelink subcarrier spacing corresponding to the first time unit is 480 kHz or 960 kHz. For example, in examples of time units shown in FIG. 18B, FIG. 19B, FIG. 19D, and FIG. 19F, the value of A is 8.

In some implementations, the value of A is determined based on one or more of the following information: protocol predefined information; resource pool configuration information; sidelink BWP configuration information; or indication information of a terminal device. The terminal device may be a transmit-end device of sidelink data, or may be a receive-end device of sidelink data.

In some implementations, the value of A is determined based on second indication information. For example, the second indication information may be used to indicate one or more of the following: the value of A; a time domain position of the 1st symbol available for transmitting a PSSCH in one time unit; a time domain position of the 1st symbol available for transmitting a PSCCH in one time unit; a time domain position of the 1st symbol for mapping a PSSCH in one time unit; a time domain position of the 1st symbol for mapping a PSCCH in one time unit; a time domain position of the 1st symbol for allocated to a PSSCH resource in one time unit; a time domain position of the 1st symbol allocated to a PSCCH resource in one time unit; or a time domain position of the 1st symbol available for sidelink transmission in one slot or in one time unit.

In an example, the second indication information directly indicates the value of A. Alternatively, the value of A is determined based on a value indicated by the second indication information.

In another example, the second indication information indicates a time domain position of the 1st symbol available for transmitting a PSSCH or a PSCCH in one time unit. The value of A may be determined based on the second indication information. For example, the second indication information indicates that the 1st symbol position of the PSSCH is the 5th symbol in the first time unit, then the value of A is 4 (in this example, it is assumed that a starting symbol corresponding to a sidelink transmission resource in the first time unit is the 1st symbol of the first time unit).

In another example, the second indication information may indicate information 6 and information 7. The information 6 may be used to indicate a time domain position of the 1st symbol available for transmitting a PSSCH or a PSCCH in one time unit. The information 7 may be used to indicate a time domain position of the 1st symbol available for sidelink transmission in one slot or in one time unit. The value of A may be determined based on the information 6 and the information 7. For example, the information 6 indicates that a time domain position of the 1st symbol available for transmitting a PSSCH is a symbol 6, and the information 7 indicates that a time domain position of the 1st symbol available for sidelink transmission in one slot is a symbol 2. It may be determined based on the information 6 and the information 7 that the value of A is 4.

In some implementations, the second indication information may be included in the resource pool configuration information or sidelink BWP configuration information. Alternatively, the second indication information may be indication information of a terminal device. The terminal device may be a transmit-end device of sidelink data, or may be a receive-end device of sidelink data.

In some implementations, the value of A is determined based on a third sidelink subcarrier spacing and a fourth sidelink subcarrier spacing. The third sidelink subcarrier spacing is different from the fourth sidelink subcarrier spacing.

In some implementations, the third sidelink subcarrier spacing may be greater than the fourth sidelink subcarrier spacing.

In some implementations, the third sidelink subcarrier spacing is a sidelink subcarrier spacing corresponding to the first time unit.

In some implementations, the third sidelink subcarrier spacing is determined based on sidelink BWP configuration information, where the sidelink BWP configuration information is used for configuring a BWP corresponding to the first time unit.

In some implementations, the third subcarrier spacing is determined based on protocol predefined information, resource pool configuration information, or sidelink BWP configuration information.

In some implementations, the third sidelink subcarrier spacing is 480 kHz or 960 kHz.

In some implementations, the fourth sidelink subcarrier spacing is 15kHz, 30kHz, 60kHz, or 120kHz.

In some implementations, the third sidelink subcarrier spacing is equal to the first sidelink subcarrier spacing mentioned above; and/or the fourth sidelink subcarrier spacing is equal to the second sidelink subcarrier spacing mentioned above.

For example, the third sidelink subcarrier spacing is denoted by $\mu_{SL3}$, the fourth sidelink subcarrier spacing is denoted by $\mu_{SL4}$, and A satisfies: $A = \frac{2^{\mu_{SL3}}}{2^{\mu_{SL4}}}$. It is assumed that $\mu_{SL3} = 5$ and $\mu_{SL4} = 3$, that is, the third sidelink subcarrier spacing is a subcarrier spacing of 480 kHz, and the fourth sidelink subcarrier spacing is a subcarrier spacing of 120 kHz. In this case, A = 4. It is assumed that $\mu_{SL3} = 6$ and $\mu_{SL4} = 3$, that is, the third sidelink subcarrier spacing is a subcarrier spacing of 960 kHz, and the fourth sidelink subcarrier spacing is a subcarrier spacing of 120 kHz. In this case, A = 8.

In some implementations, first A symbols of the first time unit (or first A symbols of the first time unit that are available for sidelink transmission) are used for AGC.

In some implementations, data in first A symbols of the first time unit (or first A symbols of the first time unit that are available for sidelink transmission) is duplicate data of data in a target symbol of the first time unit. The target symbol may include one or more symbols in remaining symbols in the first time unit except the first A symbols.

In some implementations, the target symbol is the (A+1)th symbol to the 2Ath symbol of the first time unit. In other words, data in the first A symbols of the first time unit is duplicate data of data in the (A+1)th symbol to the 2Ath symbol of the

first time unit. For example, data in the 1st symbol of the first time unit is duplicate data of data in the $(A+1)^{th}$ symbol of the first time unit; data in the 2nd symbol of the first time unit is duplicate data of data in the $(A+2)^{th}$ symbol of the first time unit; and so on, data in the $A^{th}$ symbol of the first time unit is duplicate data of data in the $2A^{th}$ symbol of the first time unit.

In some implementations, the target symbol is the $(A+1)^{th}$ symbol of the first time unit. In other words, data in the first A symbols of the first time unit is duplicate data of data in the $(A+1)^{th}$ symbol of the first time unit. It can be seen that, in this implementation, the first A symbols and the $(A+1)^{th}$ symbol of the first time unit transmit same data.

In some implementations, the second time domain resource includes P consecutive symbols. A value of P may be a positive integer greater than or equal to 1. The value of P, for example, may be 3.

In some implementations, the value of P is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, in a case that a PSCCH is transmitted in the first time unit, the PSCCH may occupy Q PRBs in frequency domain, where Q is a positive integer greater than or equal to 1.

In some implementations, a value of Q is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the PSCCH may be used to schedule a PSSCH, and frequency domain start positions of the Q PRBs may be the same as a frequency domain start position of the PSSCH.

In some implementations, the PSCCH may be used to schedule a PSSCH, and the Q PRBs are located in the 1st sub-channel corresponding to a transmission resource of the PSSCH.

**Embodiment 1.3: A time-frequency resource of a PSSCH in a first time unit**

In some implementations, the first time unit includes a third time domain resource for transmitting the PSSCH. A starting symbol of the third time domain resource may be the $(A+1)^{th}$ symbol of the first time unit, where A is a positive integer greater than 1.

In some implementations, a first time unit includes a third time domain resource for transmitting a PSSCH. A starting symbol of the third time domain resource may be the $(A+1)^{th}$ symbol of the first time unit available for sidelink transmission, where A is a positive integer greater than 1.

For a manner of determining a value of A, reference may be made to description of Embodiment 1.2, and details are not described herein again. Alternatively, in some embodiments, A in Embodiment 1.2 may be A1, A in Embodiment 1.3 may be A2, and A1 may be the same as or different from A2.

In some implementations, in a case that the first time unit includes no PSFCH transmission resource, an end symbol of the third time domain resource is a previous symbol of a symbol corresponding to a first guard symbol. For related description of the first guard symbol, reference may be made to Embodiment 1.1 above, and details are not described herein again. For example, in FIG. 18A, a time domain resource of a PSSCH includes the 5th symbol in a slot n to the fifth-to-last symbol in a slot n+1. In FIG. 18B, a time domain resource of a PSSCH includes the 9th symbol in a slot n to the 6th symbol (namely, the ninth-to-last symbol) in a slot n+1. In FIG. 19A, a time domain resource of a PSSCH includes the 5th symbol in a slot n to the fifth-to-last symbol in a slot n+3. In FIG. 19B, a time domain resource of a PSSCH includes the 9th symbol in a slot n to the 6th symbol (namely, the ninth-to-last symbol) in a slot n+3.

In some implementations, an end symbol of the third time domain resource is the last symbol in the first time unit available for transmitting a PSSCH.

In some implementations, in a case that the first time unit includes a PSFCH transmission resource, an end symbol of the third time domain resource is a previous symbol of a symbol corresponding to a second guard symbol. For related description of the second guard symbol, reference may be made to Embodiment 1.1 above, and details are not described herein again. For example, in FIG. 18C, a time domain resource of a PSSCH includes the 5th symbol in a slot n to the 1st symbol in a slot n+1. In FIG. 19C, a time domain resource of a PSSCH includes the 5th symbol of a slot n to the 1st symbol of a slot n+3. In FIG. 19D, a time domain resource of a PSSCH includes the 9th symbol of a slot n to the 3rd symbol of a slot n+2.

**Embodiment 1.4: A time-frequency resource of a PSFCH in a first time unit**

In some implementations, the first time unit includes a fourth time domain resource for transmitting the PSFCH. The fourth time domain resource may include K symbols, where K is a positive integer greater than 1.

In some implementations, the K symbols are K symbols located before the first guard symbol mentioned above and adjacent to the first guard symbol (that is, the last symbol of the K symbols is a previous symbol of the first guard symbol).

In some implementations, a value of K is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the fourth time domain resource is located in first H slots or last H slots of the first time unit, where H is a positive integer greater than or equal to 1. A value of H, for example may be 1 or 2. For example, when the value of A or B mentioned above is 4, the value of H may be 1. For another example, when the value of A or B mentioned above is 8, the value of H may be 2.

In some implementations, the value of H is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the fourth time domain resource is located in the 1st slot of the first time unit.

In some implementations, the fourth time domain resource is located in the last slot of the first time unit (hereinafter this implementation is mainly used as an example for explanation, but embodiments of this application are not limited thereto).

In some implementations, the K symbols occupied by the fourth time domain resource include K1 symbols and K2 symbols. K1 and K2 are positive integers, and K is equal to a sum of K1 and K2. The K2 symbols may be located before the K1 symbols and adjacent to the K1 symbols. The K1 symbols may be used to transmit a PSFCH (for example, used to transmit sidelink feedback information or conflict information). Data in the K2 symbols may be duplicate data of data in the K1 symbols. The K2 symbols may be used for AGC adjustment or AGC training.

In some implementations, a value of K1 is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, a value of K1 may be determined based on a fifth sidelink subcarrier spacing and a sixth sidelink subcarrier spacing. The fifth sidelink subcarrier spacing is different from the sixth sidelink subcarrier spacing.

In some implementations, the fifth sidelink subcarrier spacing may be greater than the sixth sidelink subcarrier spacing.

In some implementations, the fifth sidelink subcarrier spacing is a sidelink subcarrier spacing corresponding to the first time unit.

In some implementations, the fifth subcarrier spacing is determined based on protocol predefined information, resource pool configuration information, or sidelink BWP configuration information. As an example, the first sidelink subcarrier spacing is determined based on the sidelink BWP configuration information, and the sidelink BWP configuration information may be used for configuring a BWP corresponding to the first time unit.

In some implementations, the sixth sidelink subcarrier spacing is determined based on protocol predefined information, resource pool configuration information, or sidelink BWP configuration information. Sometimes the sixth sidelink subcarrier spacing may also be referred to as a reference subcarrier spacing.

In some implementations, the fifth sidelink subcarrier spacing is 480 kHz or 960 kHz.

In some implementations, the sixth sidelink subcarrier spacing is 15 kHz, 30 kHz, 60 kHz, or 120 kHz.

In some implementations, a value of K2 is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, a value of K2 may be determined based on a seventh sidelink subcarrier spacing and an eighth sidelink subcarrier spacing. The seventh sidelink subcarrier spacing is different from the eighth sidelink subcarrier spacing.

In some implementations, the seventh sidelink subcarrier spacing may be greater than the eighth sidelink subcarrier spacing.

In some implementations, the seventh sidelink subcarrier spacing is a sidelink subcarrier spacing corresponding to the first time unit.

In some implementations, the seventh subcarrier spacing is determined based on protocol predefined information, resource pool configuration information, or sidelink BWP configuration information. As an example, the first sidelink subcarrier spacing is determined based on the sidelink BWP configuration information, and the sidelink BWP configuration information may be used for configuring a BWP corresponding to the first time unit.

In some implementations, the eighth sidelink subcarrier spacing is determined based on protocol predefined information, resource pool configuration information, or sidelink BWP configuration information. Sometimes the eighth sidelink subcarrier spacing may also be referred to as a reference subcarrier spacing.

In some implementations, the seventh sidelink subcarrier spacing is 480 kHz or 960 kHz.

In some implementations, the eighth sidelink subcarrier spacing is 15 kHz, 30 kHz, 60 kHz, or 120 kHz.

In some implementations, K1 is less than or equal to K2. For example, K1 = 1, and K2 = A; or K1 = A, and K2 = A, where A may be a positive integer greater than 1. A value of A may be determined, for example, based on a time domain position of the $1^{st}$ symbol corresponding to a transmission resource of a PSSCH in the first time unit. For a manner of determining the value of A, reference may be made to description of Embodiment 1.2, and details are not described herein again.

In some implementations, if K1 is greater than 1, each of the K1 symbols is used to transmit one PSFCH.

In some implementations, if K1 is greater than 1, K1 symbols are jointly used to transmit one PSFCH, that is, a transmission resource of one PSFCH corresponds to K1 symbols.

In some implementations, if K1 = 1, data in each symbol of the K2 symbols is duplicate data of data in the K1 symbols.

In some implementations, if K1 is greater than 1, data in every L symbols (L = K1) from the back to the front of the K2 symbols is duplicate data of data in the K1 symbols, where L is equal to K1. For example, K1 = 2, and data in every two symbols from the back to the front of the K2 symbols is duplicate data of data in the K1 symbols.

For example, referring to FIG. 18D, a time domain resource of a PSFCH includes symbols 4 to 9 (the $1^{st}$ symbol corresponds to symbol 0) in a slot n+1, where the symbols 4 to 7 are used for AGC, and the symbols 8 and 9 are used to transmit sidelink feedback information. In FIG. 18D, K1 = 2, and when data in every two symbols from the back to the front in the K2 symbols is duplicate data of data in the K1 symbols, data in the symbol 7 is duplicate data of data in the symbol 9, data in the symbol 6 is duplicate data of data in the symbol 8, data in the symbol 5 is duplicate data of data in the symbol 9, and data in the symbol 4 is duplicate data of data in the symbol 8.

In some implementations, if K1 is greater than 1, data in every L symbols from the front to the back of the K2 symbols is duplicate data of data in the K1 symbols, where L is equal to K1. For example, K1 = 2, and data in every two symbols from the front to the back of the K2 symbols is duplicate data of data in the K1 symbol.

For example, referring to FIG. 18D, a time domain resource of a PSFCH includes symbols 4 to 9 (the $1^{st}$ symbol corresponds to symbol 0) in a slot n+1, where the symbols 4 to 7 are used for AGC, and the symbols 8 and 9 are used to transmit sidelink feedback information. In FIG. 18D, K1 = 2, and when data in every two symbols from the back to the front in the K2 symbols is duplicate data of data in the K1 symbols, data in the symbol 4 is duplicate data of data in the symbol 8, data in the symbol 5 is duplicate data of data in the symbol 9, data in the symbol 6 is duplicate data of data in the symbol 8, and data in the symbol 7 is duplicate data of data in the symbol 9.

In some implementations, in a case that the first time unit includes a time domain resource for transmitting a PSFCH, the PSFCH may occupy X PRBs in frequency domain, where X is a positive integer greater than or equal to 1.

In some implementations, a value of X is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, when X is greater than 1, the sidelink feedback information in a PSFCH is carried by a first sequence. A length of the first sequence is equal to T, where T may be equal to a quantity of subcarriers included in one PRB. For example, a value of T may be 12. In this implementation, the first sequence may be mapped to one PRB of X PRBs. Data in remaining PRBs in the X PRBs except the PRB is determined based on the first sequence. For example, data in the remaining PRBs except the PRB in the X PRBs may be directly determined based on the first sequence, or may be determined by multiplying the first sequence by a rotation factor.

In some implementations, when X is greater than 1, sidelink feedback information in a PSFCH is carried by a second sequence. A length of the second sequence may be determined based on a value of X*T, where T may be equal to a quantity of subcarriers included in one PRB. For example, a value of T may be 12. The second sequence may be mapped to all or part of subcarriers corresponding to the X PRBs. For example, the length of the second sequence is X*T, and the second sequence may be mapped to all subcarriers corresponding to the X PRBs respectively. For another example, the length of the second sequence is a maximum prime number less than X*T, and the second sequence may be mapped to part of subcarriers corresponding to the X PRBs, and data on a remaining subcarrier is 0, or data on a remaining subcarrier is a repetition of a partial sequence in the second sequence.

**Embodiment 1.5: Information/parameter determined based on a quantity of time units or an index of a time unit**

In some implementations, a first time unit includes a transmission resource of first-stage SCI, for example, the first-stage SCI is carried by a PSCCH. The first-stage SCI may include an information field for indicating time domain resource assignment (time domain resource assignment). A value of the information field for indicating time domain resource assignment (for example, a time resource indication value (TRIV)) may be determined based on a time offset of remaining W-1 transmission resources except the 1st transmission resource in W transmission resources relative to the 1st transmission resource. The time offset may be expressed based on a quantity of time units. W is a positive integer greater than 1. A value of W may be, for example, determined based on a quantity of transmission resources indicated by the first-stage SCI.

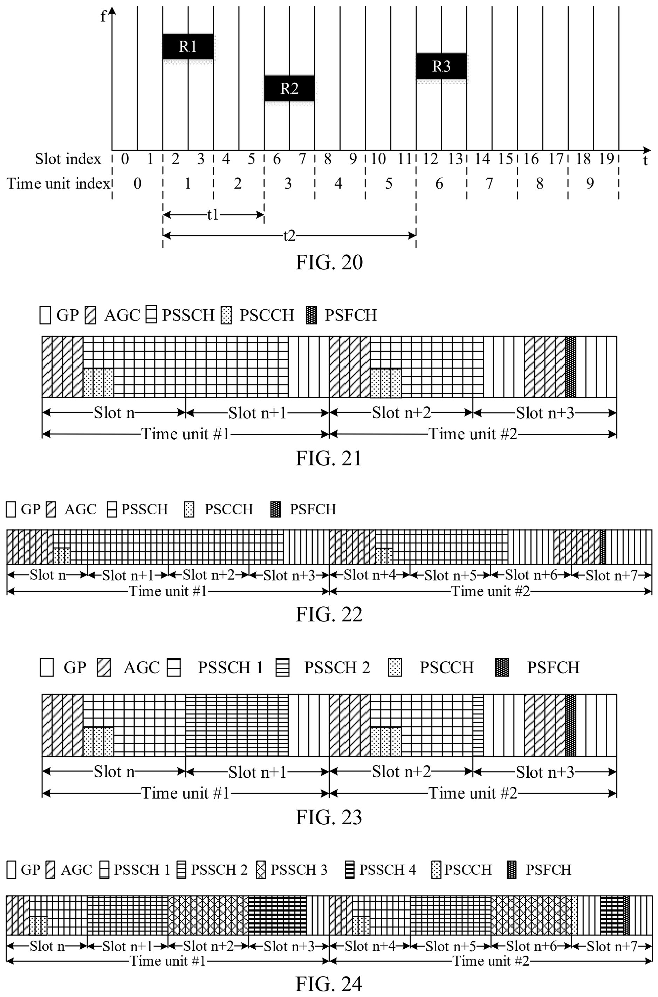

In an example of FIG. 20, one time unit includes two slots. The first time unit mentioned above may be a time unit with an index of 1 in FIG. 20, namely, a time unit 1. First SCI transmitted in the time unit 1 includes an information field for indicating time domain resource assignment, and a value of the information field is determined based on a time interval t1 between the 2nd transmission resource R2 and the 1st transmission resource R1 in three transmission resources (namely, the 1st transmission resource R1, the 2nd transmission resource R2 and the 3rd transmission resource R3 in FIG. 20) and a time interval t2 between the 3rd transmission resource R3 and the 1st transmission resource. As can be seen from FIG. 20, t1 includes two time units and t2 includes five time units.

In some implementations, a sidelink transmission resource corresponding to sidelink transmission or sidelink reception is determined based on first DCI (for example, a terminal device is in a first mode). The first DCI may include third indication information. The third indication information may be used to indicate one of the following: a time interval between receiving of the first DCI and the sidelink transmission resource; a time interval between a slot where the first DCI is located and a first time unit where the sidelink transmission resource is located; and a time interval between a start time of a downlink slot carrying the first DCI and a start time of the sidelink transmission resource. The time interval may be expressed based on a quantity of time units.

In some implementations, a sidelink transmission resource corresponding to sidelink transmission or sidelink reception is a sidelink configured grant (configured grant, CG) transmission resource, and the sidelink configured grant transmission resource is determined only based on RRC signalling transmitted by a network device (for example, the sidelink configured grant is a first type of sidelink configured grant). The RRC signalling may include sixth indication information. The sixth indication information may be used to indicate a time interval between the sidelink transmission resource and a reference SFN time domain position. The time interval may be expressed based on a quantity of time units. The reference SFN time domain position may be, for example, determined based on a configuration parameter sl-TimeReferenceSFN-Type1.

In some implementations, the first terminal device may determine a first reservation period based on one or more of the following: a second reservation period indicated by indication information in SCI (for example, the SCI indicates the second reservation period by using a resource reservation period (resource reservation period) information field); or a quantity of time units in a resource pool. The first reservation period may be expressed based on a quantity of time units, and the second reservation period may be expressed based on milliseconds.

For example, the first reservation period $P'_{\text{rsvp}}$ satisfies the following formula:

$$P'_{\text{rsvp}} = \left\lceil \frac{T'_{max}}{10240\ ms} \times P_{\text{rsvp}} \right\rceil$$

Herein $P_{\text{rsvp}}$ denotes the second reservation period, and $T'_{max}$ denotes a quantity of time units included in a resource pool in 10240 milliseconds (ms).

In some implementations, a period of a PSFCH may be expressed based on a quantity of time units. For example, the period of the PSFCH may be indicated based on fourth indication information in resource pool configuration information, where the period of the PSFCH indicated in the fourth indication information is expressed in a quantity of time units.

When a sidelink subcarrier spacing is greater than 120kHz (for example, when the sidelink subcarrier spacing is 480 kHz or 960 kHz), in order to ensure that there is enough time for AGC adjustment, RX/TX switching or TX/RX switching, a plurality of symbols used for AGC or used as GPs are required. In this case, a quantity of symbols available for PSCCH/PSSCH transmission in one slot becomes very small, resulting in increased system overheads and reduced spectrum efficiency. In embodiments of this application, a time unit structure that aggregates a plurality of slots is introduced, and if sidelink transmission or sidelink reception is performed based on the time unit structure, even if a plurality of symbols used for AGC or used as GPs are introduced, there is enough symbols available for PSCCH/PSSCH transmission in one time unit, so that system overheads can be reduced and spectrum efficiency can be improved.

**Embodiment 2: A PSSCH transmission mode based on a first time unit**

It should be understood that, the PSSCH transmission mode described in Embodiment 2 may be implemented based on the time unit structure provided in Embodiment 1. In absence of conflict, content of Embodiment 2 may be arbitrarily combined with the implementation in Embodiment 1. For example, first A symbols of the first time unit in Embodiment 2 may be used for AGC. For another example, last B symbols of the first time unit in Embodiment 2 are guard symbols and may be used as GPs. For another example, symbols in the middle part in Embodiment 2 may include a transmission resource for transmitting one or more of a PSCCH, a PSSCH or a PSFCH.

In some implementations, the first time unit may be used for transmitting one PSSCH.

In some implementations, the first time unit may be used for transmitting R PSSCHs (R is a positive integer greater than 1). When R PSSCHs are transmitted in the first time unit, the R PSSCHs may correspond to a same TB or correspond to different TBs.

In some implementations, a value of R is determined based on one or more of the following: protocol predefined information; pre-configuration information; network device configuration information; resource pool configuration information; sidelink BWP configuration information; or indication information of a terminal device. The terminal device may be a transmit-end device of sidelink data, or may be a receive-end device of sidelink data.

In some implementations, the R PSSCHs transmitted in the first time unit include a first PSSCH, and a time domain resource of the first PSSCH includes S slots, where S is a positive integer greater than or equal to 1. In other words, a transmission resources of the first PSSCH includes a resource available for PSSCH transmission in the S slots.

In some implementations, a value of S is determined based on one or more of the following: protocol predefined information; pre-configuration information; network device configuration information; resource pool configuration information; sidelink BWP configuration information; or indication information of a terminal device. The terminal device may be a transmit-end device of sidelink data, or may be a receive-end device of sidelink data.

In some implementations, S is determined based on a quotient of M and R.

In some implementations, the terminal device expects that M can be divisible by R, that is, M should be an integer multiple of R.

For example, $S = M/R - T$. A value of T, for example, may be 0, 1 or 2.

In some implementations, the first PSSCH is any one of the R PSSCHs, and a value of T is 0.

Further, in some implementations, if the first PSSCH corresponds to first R-1 PSSCHs in the R PSSCHs, a value of T is a first value; and/or if the first PSSCH corresponds to the last PSSCH in the R PSSCHs, a value of T is a second value. In an example, the first value is 0 and the second value is 1 or 2.

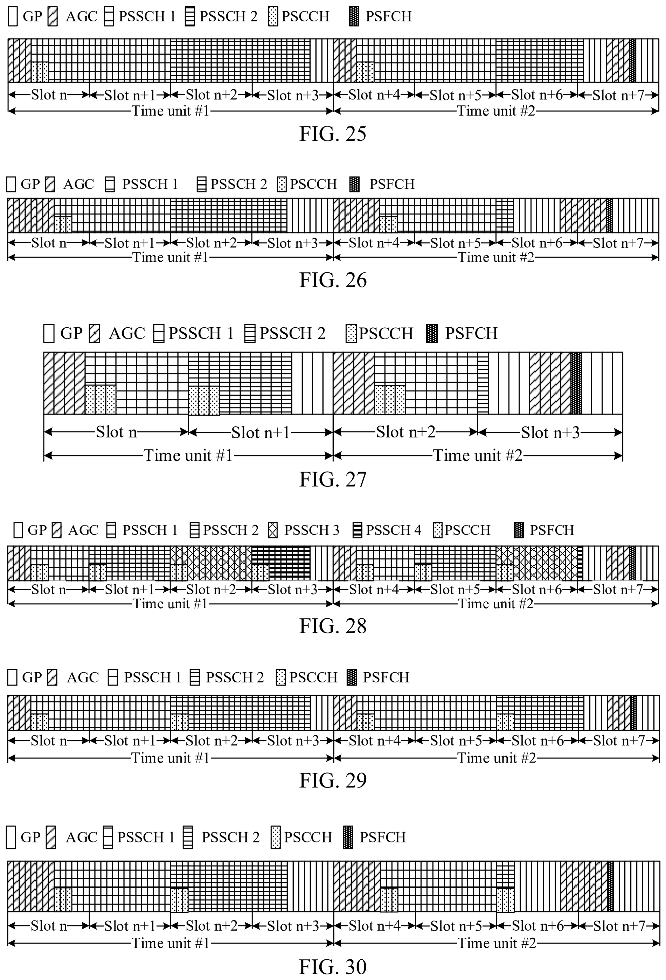

In an example in which the first time unit is a time unit #2 in FIG. 26, the time unit #2 occupies four slots and is used to transmit two PSSCHs (namely, a PSSCH 1 and a PSSCH 2 in the time unit #2). Thus, M = 4, R = 2. As can be seen from FIG. 26, the PSSCH 1 transmitted in the time unit #2 occupies 2 slots (that is, $S = M/R$), and the PSSCH 2 transmitted in the time unit #2 occupies one slot (that is, $S = M/R - 1$).

In some implementations, the R PSSCHs transmitted in the first time unit include a first PSSCH, and a slot occupied by the first PSSCH includes a first slot. For example, the manner described above may be used to determine S slots occupied by the first PSSCH based on M and R, and the first slot may be any slot or the last slot in the S slots. A use mode of the first slot may be determined based on a relationship between the first slot and a first threshold.

For example, if a quantity of symbols available for transmitting a PSSCH in the first slot is less than the first threshold (the first threshold may be, for example, 2, 3 or 4), the first slot is not used for transmitting a PSSCH and/or second-stage SCI.

For example, if a quantity of symbols available for transmitting a PSSCH in the first slot is less than the first threshold (the first threshold may be, for example, 2, 3 or 4), data of a PSSCH in the first slot is determined based on a redundant bit, a padding bit, or a random bit. Alternatively, the receive-end device does not expect to receive data transmitted on a PSSCH transmission resource in the first slot.

For example, if a quantity of symbols available for transmitting a PSSCH in the first slot is less than a first threshold (the first threshold may be, for example, 2, 3 or 4), data of the PSSCH in the first slot is duplicate data of data in a slot (such as a previous slot) prior to the first slot. For example, in FIG. 28 illustrated below, if the first time unit is a time unit #2 in FIG. 28, it can be seen from FIG. 28 that a quantity of symbols available for transmitting a PSSCH in the last slot (namely, a slot n+7) of the time unit #2 is 1 (that is, one symbol prior to the last slot). Assuming that the first threshold is 3, data transmitted on the one symbol prior to the last slot in the time unit #2 may be duplicate data of data of a PSSCH 1 transmitted in a 1st slot (namely, a slot n+4) in the time unit #2 or of a PSSCH 3 transmitted in a previous slot (namely, a slot n+6). In a more specific example, the data transmitted in a previous symbol in the last slot of the time unit #2 may be duplicate data of data in a previous symbol or a last symbol of a slot n+6.

In some implementations, the first threshold is determined based on one or more of the following: protocol predefined information; pre-configuration information; network device configuration information; resource pool configuration information; sidelink BWP configuration information; or indication information of a terminal device. The terminal device may be a transmit-end device of sidelink data, or may be a receive-end device of sidelink data.

In some implementations, if the R PSSCHs transmitted in the first time unit correspond to different TBs, the first slot uses the foregoing implementation that is based on the first threshold.

In some implementations, if the R PSSCHs transmitted in the first time unit correspond to a same TB, the first slot is used to transmit a PSSCH and/or second-stage SCI.

In some implementations, the first threshold is determined based on a quantity of symbols included in a PSCCH transmission resource. Further, in some implementations, the first threshold is equal to the quantity of symbols included in the PSCCH transmission resource. For example, if the PSCCH transmission resource includes 2 symbols, the first threshold is equal to 2. For another example, if the PSCCH transmission resource includes 3 symbols, the first threshold is equal to 3.

In some implementations, transmission of one PSSCH or R PSSCHs in the first time unit is determined based on configuration information. The configuration information may include, for example, one or more of the following information: protocol predefined information; resource pool configuration information; sidelink BWP configuration information; or indication information of a terminal device. The terminal device may be a transmit-end device of sidelink data, or may be a receive-end device of sidelink data.

In some implementations, when R PSSCHs are transmitted in the first time unit, whether the R PSSCHs correspond to a same TB or different TBs is determined based on configuration information. The configuration information may include, for example, one or more of the following information: protocol predefined information; resource pool configuration information; sidelink BWP configuration information; or indication information of a terminal device. The terminal device may be a transmit-end device of sidelink data, or may be a receive-end device of sidelink data.

The following describes the PSSCH transmission mode that is based on the first time unit in detail by using examples with reference to Embodiment 2.1 to Embodiment 2.3.

**Embodiment 2.1: A first time unit is used to transmit a PSSCH**

In this embodiment, only one PSSCH may be transmitted in the first time unit. For example, one PSSCH may be mapped to all time domain resources available for PSSCH transmission in the first time unit. One PSSCH may be used to transmit one TB, and the TB may be transmitted by using a plurality of slots (which may be referred to as transmission block over multiple slots).

For example, a starting mapping position of the PSSCH may be located at the $(A+1)^{th}$ symbol of the first time unit. If the first time unit includes no PSFCH transmission resource, an end mapping position of the PSSCH may be a previous symbol of a symbol corresponding to a first guard symbol; if the first time unit includes a PSFCH transmission resource, an end symbol of the PSSCH is a previous symbol of a symbol corresponding to a second guard symbol. For related description of the first guard symbol and the second guard symbol, reference may be made to Embodiment 1.1 above, and details are not described herein again.

In some implementations, a third guard symbol and a fourth guard symbol are not included in the first time unit. For related description of the third guard symbol and the fourth guard symbol, reference may be made to Embodiment 1.1 above, and details are not described herein again.

In some implementations, the first time unit is further used to transmit a PSCCH and/or second-stage SCI. For example, the first time unit may transmit only one PSCCH and one second-stage SCI.

In some implementations, a starting mapping position of the second-stage SCI is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the second-stage SCI is mapped starting from the first PSSCH DMRS symbol of the first time unit.

In some implementations, if the first PSSCH DMRS symbol of the first time unit includes a subcarrier that may be used to map the second-stage SCI, the second-stage SCI is mapped starting from the first PSSCH DMRS symbol; and/or if the first PSSCH DMRS symbol of the first time unit does not include a subcarrier that may be used to map the second-stage SCI, the second-stage SCI is mapped starting from the next symbol of the first PSSCH DMRS symbol.

In some implementations, the second-stage SCI is mapped starting from the $1^{st}$ symbol corresponding to a PSSCH transmission resource in the first time unit.

In some implementations, the second-stage SCI is mapped starting from the $1^{st}$ symbol used for mapping a PSSCH in the first time unit.

In some implementations, the second-stage SCI is mapped starting from the $1^{st}$ symbol for PSSCH resource assignment in the first time unit.

In some implementations, the second-stage SCI is mapped starting from the $1^{st}$ symbol corresponding to a PSCCH transmission resource in the first time unit.

In some implementations, the second-stage SCI is mapped starting from the $1^{st}$ symbol used for mapping a PSCCH in the first time unit.

In some implementations, the second-stage SCI is mapped starting from the $1^{st}$ symbol for PSCCH resource assignment in the first time unit.

For example, the first time unit mentioned above may be a time unit #1 or a time unit #2 in FIG. 21. In an example shown in FIG. 21, one time unit includes two slots, that is, M = 2. The time unit #1 includes no PSFCH transmission resource, and the time unit #2 includes a PSFCH transmission resource. PSSCH resource assignment in one time unit starts from the $5^{th}$ symbol, that is, A = 4. First four symbols of one time unit may be used for AGC, and last four symbols of one time unit are used as GPs, that is, B = 4. A PSFCH time domain resource in the time unit #2 includes five symbols. First four symbols in the five symbols may be used for AGC, and the $5^{th}$ symbol may be used to transmit a PSFCH. Therefore, data transmitted on the first four symbols in the five symbols may be the same as data transmitted on the $5^{th}$ symbol. In an example shown in FIG. 21, one time unit is used to transmit one PSCCH and one PSSCH, the PSSCH is used to transmit one TB, and the PSSCH is mapped to two slots included in a corresponding time unit.

For another example, the first time unit mentioned above may be a time unit #1 or a time unit #2 in FIG. 22. In an example shown in FIG. 22, one time unit includes four slots, that is, M = 4. The time unit #1 includes no PSFCH transmission resource, and the time unit #2 includes a PSFCH transmission resource. PSSCH resource assignment in one time unit starts from the $9^{th}$ symbol, that is, A = 8. First eight symbols of one time unit may be used for AGC, and last eight symbols of one time unit are used as GPs, that is, B = 8. A PSFCH time domain resource in the time unit #2 includes nine symbols. First eight symbols in the nine symbols may be used for AGC, and the $9^{th}$ symbol may be used to transmit a PSFCH. Therefore, data transmitted on the first eight symbols in the nine symbols may be the same as data transmitted on the $9^{th}$ symbol. In an example shown in FIG. 22, one time unit is used to transmit one PSCCH and one PSSCH, the PSSCH is used to transmit one TB, and the PSSCH is mapped to four slots included in a corresponding time unit.

It can be learned from the above description in Embodiment 2.1 that, more time domain resources (that is, time domain resources occupying a plurality of slots) are assigned to one TB in Embodiment 2.1, so that transmission can be performed with fewer frequency domain resources. Compared with a mode in which one TB is transmitted by using one slot and more frequency domain resources are assigned to the TB, in Embodiment 2.1, a transmit power of each PRB can in increased, thereby achieving a purpose of improving transmission performance.

**Embodiment 2.2: A first time unit is used to transmit R PSSCHs, and the R PSSCHs correspond to a same TB**

In some implementations, each of the R PSSCHs may occupy S slots (for a manner of determining the S slots, for example, reference may be made to the foregoing description). A manner in which each PSSCH is mapped to the S slots may be similar to that in Embodiment 2.1, that is, PSSCHs are sequentially mapped to the last symbol, available for transmitting a PSSCH, of the S slots starting from the $1^{st}$ symbol, available for transmitting a PSSCH, of the S slots.

In some implementations, the R PSSCHs correspond to R redundancy versions (redundancy version, RV), respectively.

In some implementations, values of the R redundancy versions may be exactly the same.

In some implementations, values of the R redundancy versions may be different from each other.

In some implementations, values of the R redundancy versions may be at least partially different from each other.

In some implementations, the R redundancy versions are determined based on fifth indication information (or referred to as redundancy version indication information) carried in SCI (which may be first-stage SCI or may be second-stage SCI).

For example, the fifth indication information may be used to indicate the $1^{st}$ redundancy version in the R redundancy versions. The $1^{st}$ redundancy version may be, for example, a redundancy version corresponding to the $1^{st}$ PSSCH (a PSSCH with the earliest time domain position) in the R PSSCHs. A remaining redundancy version of the R redundancy versions except the $1^{st}$ redundancy version may be determined based on the $1^{st}$ redundancy version. For example, the remaining redundancy version may be determined based on a protocol predefined order of redundancy version. In an example, a protocol predefined cyclic order of redundancy versions is [0, 2, 3, 1]. Two PSSCHs are transmitted in a first time unit, and SCI in the first time unit indicates, by using the fifth indication information, that a redundancy version is 0. In this case, a redundancy version of the $1^{st}$ PSSCH is 0 and a redundancy version of the $2^{nd}$ PSSCH is 2. Alternatively, if the SCI in the first time unit indicates, by using the fifth indication information, that a redundancy version is 2, a redundancy version of the $1^{st}$ PSSCH is 2 and a redundancy version of the $2^{nd}$ PSSCH is 3. Alternatively, if the SCI in the first time unit indicates, by using the fifth indication information, that a redundancy version is 1, a redundancy version of the $1^{st}$ PSSCH is 1 and a redundancy version of the $2^{nd}$ PSSCH is 0.

For another example, the fifth indication information may be used to indicate each redundancy version in the R redundancy versions. For example, an information field in which the fifth indication information is located includes R information sub-fields, and the R information sub-fields are respectively used to indicate the R redundancy versions. In an example, two PSSCHs are transmitted in the first time unit, and the SCI in the first time unit indicates a redundancy version 0 and a redundancy version 2 respectively by using the fifth indication information. In this case, a redundancy version of the $1^{st}$ PSSCH is 0, and a redundancy version of the $2^{nd}$ PSSCH is 2. Alternatively, the SCI in the first time unit indicates a redundancy version 0 and a redundancy version 3 respectively by using the fifth indication information. In this case, a redundancy version of the $1^{st}$ PSSCH is 0, and a redundancy version of the $2^{nd}$ PSSCH is 3. Alternatively, the SCI in the first time unit indicates a redundancy version 3 and a redundancy version 1 respectively by using the fifth indication information. In this case, a redundancy version of the $1^{st}$ PSSCH is 3, and a redundancy version of the $2^{nd}$ PSSCH is 1.

In some implementations, the R PSSCHs correspond to a same HARQ process number.

In some implementations, the first time unit is further used to transmit one PSCCH and one second-stage SCI. Certainly, in some other implementations, the first time unit may alternatively be used to transmit one PSCCH and R second-stage SCIs; or the first time unit may further be used to transmit R PSCCHs and R second-stage SCIs.

In some implementations, if the first time unit is used to transmit one second-stage SCI, a starting mapping position of the second-stage SCI may be determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the second-stage SCI is mapped starting from the $1^{st}$ PSSCH DMRS symbol of the first time unit.

In some implementations, if the $1^{st}$ PSSCH DMRS symbol of the first time unit includes a subcarrier that may be used to map the second-stage SCI, the second-stage SCI is mapped starting from the $1^{st}$ PSSCH DMRS symbol; and/or if the $1^{st}$ PSSCH DMRS symbol of the first time unit does not include a subcarrier that may be used to map the second-stage SCI, the second-stage SCI is mapped starting from a next symbol of the $1^{st}$ PSSCH DMRS symbol.

In some implementations, the second-stage SCI is mapped starting from the $1^{st}$ symbol corresponding to a PSSCH transmission resource in the first time unit.

In some implementations, the second-stage SCI is mapped starting from the $1^{st}$ symbol used for mapping a PSSCH in the first time unit.

In some implementations, the second-stage SCI is mapped starting from the $1^{st}$ symbol for PSSCH resource assignment in the first time unit.

In some implementations, the second-stage SCI is mapped starting from the $1^{st}$ symbol corresponding to a PSCCH transmission resource in the first time unit.

In some implementations, the second-stage SCI is mapped starting from the $1^{st}$ symbol used for mapping a PSCCH in the first time unit.

In some implementations, the second-stage SCI is mapped starting from the $1^{st}$ symbol for PSCCH resource assignment in the first time unit.

For example, the first time unit mentioned above may be a time unit #1 or a time unit #2 shown in FIG. 23. As can be seen from FIG. 23, one time unit includes two slots, that is, M = 2. PSSCH resource assignment in one time unit starts from the $5^{th}$ symbol, that is, A = 4. First four symbols of one time unit may be used for AGC, and last four symbols of one time unit are used as GPs, that is, B = 4. Two PSSCHs are transmitted in one time unit, that is, each slot is used to transmit one PSSCH. A time domain resource of the PSCCH includes three symbols starting from the $5^{th}$ symbol in one time unit. In the time unit #2, there is only one symbol available for transmitting a PSSCH in the $2^{nd}$ slot, but because a PSSCH 2 transmitted in the $2^{nd}$ slot and a PSSCH 1 transmitted in the $1^{st}$ slot are used to transmit different redundancy versions of a same TB, the PSSCH 2 may still be transmitted in the $2^{nd}$ slot.

For another example, the first time unit mentioned above may be a time unit #1 or a time unit #2 shown in FIG. 24. As can be seen from FIG. 24, one time unit includes four slots, that is, M = 4. PSSCH resource assignment in one time unit starts from the $5^{th}$ symbol, that is, A = 4. First four symbols of one time unit may be used for AGC, and last four symbols of one time unit are used as GPs, that is, B = 4. Four PSSCHs are transmitted in one time unit, that is, each slot is used to transmit one PSSCH. A time domain resource of the PSCCH includes three symbols starting from the $5^{th}$ symbol in one time unit. The time unit #2 includes a PSFCH transmission resource, so that there is only one symbol available for transmitting a PSSCH in the $4^{th}$ slot of the time unit #2. However, because a PSSCH 4 transmitted in the $4^{th}$ slot and a PSSCH transmitted in other three slots in the time unit #2 belong to different redundancy versions of a same TB, the PSSCH 4 may still be transmitted in the $4^{th}$ slot.

For another example, the first time unit mentioned above may be a time unit #1 or a time unit #2 shown in FIG. 25. As can be seen from FIG. 25, one time unit includes four slots, that is, M = 4. PSSCH resource assignment in one time unit starts from the $5^{th}$ symbol, that is, A = 4. First four symbols of one time unit may be used for AGC, and last four symbols of one time unit are used as GPs, that is, B = 4. One time unit is used to transmit two PSSCHs, that is, one PSSCH is transmitted in every two slots. A time domain resources of a PSCCH include three symbols starting from the $5^{th}$ symbol in the first time unit. In one time unit, first two slots are used to transmit a PSSCH 1, and last two slots are used to transmit a PSSCH 2. The time unit #2 includes a PSFCH transmission resource, so that in $3^{rd}$ and $4^{th}$ slots of the time unit #2, a quantity of symbols available for transmitting the PSSCH 2 is less than a quantity of symbols available for transmitting the PSSCH 1 in first two slots of the time unit #2.

For another example, the first time unit mentioned above may be a time unit #1 or a time unit #2 shown in FIG. 26. As can be seen from FIG. 26, one time unit includes four slots, that is, M = 4. PSSCH resource assignment in one time unit starts from the $9^{th}$ symbol, that is, A = 8. First eight symbols of one time unit may be used for AGC, and last eight symbols of one time unit are used as GPs, that is, B = 8. One time unit is used to transmit two PSSCHs, that is, one PSSCH is transmitted in every two slots. A time domain resource of the PSCCH includes three symbols starting from the $9^{th}$ symbol in one time unit. The time unit #2 includes a PSFCH transmission resource, so that there are only three symbols available for transmitting a PSSCH in $3^{rd}$ and $4^{th}$ slots of the time unit #2. However, because a PSSCH 2 transmitted in the $3^{rd}$ and $4^{th}$ slots of the time unit #2 and a PSSCH 1 transmitted in first two slots of the time unit #2 transmit different redundancy versions of a same TB, the PSSCH 2 may still be transmitted in the first two slots of the time unit #2.

In Embodiment 2.2, one TB is transmitted a plurality of times by using the first time unit, so that transmission reliability of the TB can be improved and a delay can be reduced.

**Embodiment 2.3: A first time unit is used to transmit R PSSCHs, and the R PSSCHs correspond to different TBs.**

In some implementations, each of the R PSSCHs may occupy S slots (for a manner of determining the S slots, reference may be made to the foregoing description). A manner in which each PSSCH is mapped to the S slots may be similar to that in Embodiment 2.1, that is, starting from the $1^{st}$ symbol available for transmitting a PSSCH of the S slots and sequentially mapping to the last symbol available for transmitting a PSSCH of the S slots.

In some implementations, the R PSSCHs are used to transmit different TBs.

In some implementations, the R PSSCHs correspond to a same receive-end device.

In some implementations, the R PSSCHs do not correspond to a same receive-end device. For example, the R PSSCHs correspond to different R receive-end devices.

In some implementations, the R PSSCHs correspond to a same spatial domain transmission filter.

In some implementations, the R PSSCHs do not correspond to a same spatial domain transmission filter. For example, the R PSSCHs correspond to R spatial domain transmission filters.

Since different PSSCHs are used to carry different TBs, different parameters (such as priority information, MCS information, new data indicator (new data indicator, NDI), a HARQ process number, or a redundancy version.) correspond to respective TBs. Therefore, in order to indicate parameters corresponding to different TBs, a PSCCH and second-stage SCI in the first time unit may have a plurality of different implementations. For example, the first time unit may include one PSCCH or R PSCCHs; and/or the first time unit may include one second-stage SCI or R second-stage SCIs.

Based on Embodiment 2.3.1 to Embodiment 2.3.3, three possible implementations of the PSCCH and second-stage SCI transmitted in the first time unit are provided below.

**Embodiment 2.3.1: A first time unit is used to transmit R PSCCHs and R second-stage SCIs.**

In this embodiment, the R PSCCHs transmitted in the first time unit are in a one-to-one correspondence with R PSSCHs, and the R second-stage SCIs transmitted in the first time unit are in a one-to-one correspondence with the R PSSCHs. In other words, each of the R PSSCHs has a corresponding PSCCH and second-stage SCI. The corresponding PSCCH of each PSSCH carries first-stage SCI, and the first-stage SCI and the second-stage SCI corresponding to the PSSCH respectively carry information required for demodulating the PSSCH.

In some implementations, a starting mapping position of the second-stage SCI is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, the second-stage SCI corresponding to a respective PSSCH of the R PSSCHs transmitted in the first time unit is mapped starting from the $1^{st}$ PSSCH DMRS symbol corresponding to the respective PSSCH.

In some implementations, the second-stage SCI corresponding to a respective PSSCH of the R PSSCHs transmitted in the first time unit is mapped starting from the $1^{st}$ symbol corresponding to the respective PSSCH.

In some implementations, the second-stage SCI corresponding to a respective PSSCH of the R PSSCHs transmitted in the first time unit is mapped starting from the $1^{st}$ symbol of a target PSCCH. The target PSCCH refers to a PSCCH corresponding to the respective PSSCH.

**Embodiment 2.3.2: A first time unit is used to transmit one PSCCH and one second-stage SCI.**

In some implementations, the second-stage SCI includes a first information field. The first information field may include R information sub-fields, and the R information sub-fields are respectively used to indicate HARQ process numbers (HARQ process number) of R PSSCHs.

In some implementations, the second-stage SCI includes a second information field (or referred to as a new data indicator field). The second information field may include R information sub-fields, and the R information sub-fields are respectively used to indicate whether data transmitted by the R PSSCHs is new data.

In some implementations, the second-stage SCI includes a third information field. The third information field may include R information sub-fields, and the R information sub-fields are respectively used to indicate redundancy versions of data transmitted by the R PSSCHs.

In some implementations, the second-stage SCI includes a fourth information field and a fifth information field. The fourth information field may be used to indicate a source identity (source ID), and the fifth information field may be used to indicate a destination identity (destination ID), and both the source ID and the destination ID are determined based on a layer-2 identity. For example, in a case that the R PSSCHs do not correspond to a same receive-end device, the fifth information field includes R information sub-fields, and the R information sub-fields are respectively used to indicate destination identities corresponding to the R PSSCHs.

In some implementations, the second-stage SCI includes a sixth information field. The sixth information field may be used to indicate activation or deactivation of sidelink feedback, and indication of the sixth information field is applicable to the R PSSCHs. Indication information carried in the sixth information field may also be referred to as a HARQ feedback enabled/disabled indicator (HARQ feedback enabled/disabled indicator). In this implementation, the sixth information field may include, for example, 1-bit information.

In some implementations, the second-stage SCI includes a sixth information field. The sixth information field includes R information sub-fields, and the R information sub-fields are respectively used to indicate whether the R PSSCHs are used to activate or deactivate sidelink feedback. In this implementation, the sixth information field may include, for example, R-bit information.

In some implementations, the second-stage SCI includes a seventh information field. The seventh information field is used to indicate a transmission type, and indication of the seventh information field is applicable to the R PSSCHs. Information carried in the seventh information field may also be referred to as a cast type indicator (cast type indicator). For example, the transmission type includes unicast transmission, broadcast transmission, multicast transmission supporting ACK/NACK feedback, and multicast transmission supporting only NACK feedback.

In some implementations, the second-stage SCI includes a seventh information field. The seventh information field includes R information sub-fields, and the R information sub-fields are respectively used to indicate transmission types corresponding to the R PSSCHs.

In some implementations, the second-stage SCI includes an eighth information field. The eighth information field is used to indicate whether a receive-end device is required to report CSI. Information carried in the eighth information field may be called a CSI request (CSI request). A value of the eighth information field may include a first value. When the value of the eighth information field is the first value, it may indicate that the transmit-end device transmits a CSI-RS and/or indicate that the receive-end device is required to report CSI.

In an example, when the value of the eighth information field is the first value (such as 1), transmission resources of the R PSSCHs transmitted in the first time unit all carry the CSI-RS, that is, the transmit-end device transmits the CSI-RS in a transmission resource of each PSSCH in the R PSSCHs.

In another example, when the value of the eighth information field is the first value (such as 1), a target PSSCH in the R PSSCHs transmitted in the first time unit carries the CSI-RS. The target PSSCH may be part of the R PSSCHs, for example, may be one PSSCH in the R PSSCHs. For example, the target PSSCH may be the 1st PSSCH, the last PSSCH, or a PSSCH determined based on configuration information in the R PSSCHs. The configuration information mentioned herein may include, for example, one or more of resource pool configuration information, sidelink BWP configuration information, or PC5-radio resource control (PC5-radio resource control, PC5-RRC) signalling. If the target PSSCH is one of the R PSSCHs, the transmit-end device transmits one CSI-RS only on the target PSSCH, and does not transmit any CSI-RS on a remaining PSSCH.

In some implementations, the second-stage SCI includes a ninth information field. The ninth information field is used to carry TCI state indication. The ninth information field may be used to indicate beam information used by a transmit-end device, or may be used by a receive-end device to determine a receive beam.

In some implementations, indication of the ninth information field is applicable to the R PSSCHs. In other words, indication information carried in the ninth information field may indicate a TCI state, and the R PSSCHs are all transmitted by using a transmit beam corresponding to the TCI state, or the receive-end device may receive the R PSSCHs by using a same receive beam.

In some implementations, if the R PSSCHs transmitted in the first time unit do not correspond to a same receive-end device, the ninth information field includes R information sub-fields, and the R information sub-fields are respectively used to indicate TCI states corresponding to the R PSSCHs. In this implementation, the R PSSCHs may be transmitted by using different transmit beams, or the receive-end device may receive the R PSSCHs by using different receive beams.

In some implementations, if the R PSSCHs transmitted in the first time unit do not correspond to a same spatial domain transmission filter, the ninth information field includes R information sub-fields, and the R information sub-fields are respectively used to indicate TCI states corresponding to the R PSSCHs. The TCI states corresponding to the R PSSCHs may be different from each other, that is, the R PSSCHs may be transmitted by using different transmit beams or received by using different receive beams.

In some implementations, if the R PSSCHs transmitted in the first time unit do not correspond to a same receive-end device, the ninth information field includes R information sub-fields, and the R information sub-fields are respectively used to determine spatial domain transmission filters or spatial domain reception filters corresponding to the R PSSCHs. The spatial domain transmission filters or spatial domain reception filters corresponding to the R PSSCHs may be different from each other, that is, the R PSSCHs may be transmitted by using different transmit beams or received by using different receive beams.

In some implementations, if the R PSSCHs transmitted in the first time unit do not correspond to a same spatial domain transmission filter, the ninth information field includes R information sub-fields, and the R information sub-fields are respectively used to determine spatial domain transmission filters or spatial domain reception filters corresponding to the R PSSCHs. The spatial domain transmission filters or spatial domain reception filters corresponding to the R PSSCHs may be different from each other, that is, the R PSSCHs may be transmitted by using different transmit beams or received by using different receive beams.

The information field of the second-stage SCI is described in detail above. One PSCCH transmitted in the first time unit includes first-stage SCI, and an information field in the first-stage SCI is described in detail below by using examples.

In some implementations, the first-stage SCI includes a tenth information field. The tenth information field is used to indicate an SCI format of the second-stage SCI.

In some implementations, the first-stage SCI includes an eleventh information field. The eleventh information field is used to carry priority indication information, and a value of the eleventh information field is determined based on a highest priority or a lowest priority of priorities corresponding to the R PSSCHs. A value of a priority corresponding to one PSSCH in the R PSSCHs may be determined, for example, based on priorities of one or more logical channels corresponding to the PSSCH (for example, a highest priority of one or more logical channels). If a medium access control protocol data unit (medium access control protocol data unit, MAC PDU) associated with the PSSCH includes a medium access control control element (medium access control control element, MAC CE), a value of a priority corresponding to the PSSCH may be determined based on the priorities of the one or more logical channels corresponding to the PSSCH and a priority of the MAC CE (for example, a highest priority of the priority of the MAC CE and the priorities of the one or more logical channels).

In some implementations, the first-stage SCI includes an eleventh information field. The eleventh information field includes R information sub-fields, and the R information sub-fields are respectively used to indicate priorities corresponding to the R PSSCHs. A value of a priority corresponding to one PSSCH in the R PSSCHs may be determined, for example, based on priorities of one or more logical channels corresponding to the PSSCH (for example, a highest priority of one or more logical channels). If a MAC PDU associated with the PSSCH includes a MAC CE, a value of a priority corresponding to the PSSCH may be determined based on the priorities of the one or more logical channels corresponding to the PSSCH and a priority of the MAC CE (for example, a highest priority of the priority of the MAC CE and the priorities of one or more logical channels).

In some implementations, the first-stage SCI includes a twelfth information field. The twelfth information field (for example, Beta_offset indicator) is used to carry a beta offset indicator, and the beta offset indicator is applicable to the second-stage SCI.

In some implementations, the first-stage SCI includes a thirteenth information field. The thirteenth information field (for example, number of DMRS port) is used to indicate a quantity of DMRS ports, and the quantity of DMRS ports is applicable to the R PSSCHs, that is, applicable to DMRSs of the R PSSCHs.

In some implementations, the first-stage SCI includes a fourteenth information field. The fourteenth information field is used to indicate an MCS, and the R PSSCHs all use the MCS indicated by the fourteenth information.

In some implementations, the first-stage SCI includes a fifteenth information field. The fifteenth information field (for example, Additional MCS table indicator) is used to indicate an MCS table, and the R PSSCHs all use the MCS table indicated by the fifteenth information field.

**Embodiment 2.3.3: A first time unit is used to transmit one PSCCH and R second-stage SCIs.**

In this embodiment, the R second-stage SCIs are in a one-to-one correspondence with R PSSCHs transmitted in the first time unit.

In some implementations, a starting mapping position of the second-stage SCI is determined based on one or more of the following: protocol predefined information; resource pool configuration information; sidelink BWP configuration information; or indication information of a terminal device. The terminal device may be a transmit-end device of sidelink data, or may be a receive-end device of sidelink data.

In some implementations, second-stage SCI corresponding to a respective PSSCH in the R second-stage SCIs is mapped starting from the 1st PSSCH DMRS symbol corresponding to the respective PSSCH.

In some implementations, the second-stage SCI corresponding to a respective PSSCH of the R PSSCHs is mapped starting from the 1st symbol corresponding to the respective PSSCH.

In some implementations, the first-stage SCI in the PSCCH includes a tenth information field. The tenth information field is used to indicate an SCI format of the second-stage SCI. The R second-stage SCIs may use a same SCI format or different SCI formats. For example, if formats of the second-stage SCI corresponding to respective PSSCHs in the R PSSCH are the same, the tenth information field may be used to indicate the SCI format of the second-stage SCI. For another example, if formats of the second-stage SCI corresponding to different PSSCHs in the R PSSCHs may be different from each other, the tenth information field may indicate formats of second-stage SCI corresponding to respective PSSCHs, respectively.

In some implementations, the first-stage SCI in the PSCCH includes an eleventh information field. The eleventh information field is used to carry priority indication information, and a value of the eleventh information field is determined based on a highest priority or a lowest priority of priorities corresponding to the R PSSCHs. A value of a priority corresponding to one PSSCH in the R PSSCHs may be determined, for example, based on priorities of one or more logical channels corresponding to the PSSCH (for example, a highest priority of the one or more logical channels). If a MAC PDU associated with the PSSCH includes a MAC CE, the value of the priority corresponding to the PSSCH may be determined based on the priorities of the one or more logical channels corresponding to the PSSCH and a priority of the MAC CE (for example, a highest priority of the priority of the MAC CE and the priorities of the one or more logical channels).

In some implementations, the first-stage SCI in the PSCCH includes an eleventh information field. The eleventh information field includes R information sub-fields, and the R information sub-fields are respectively used to indicate priorities corresponding to the R PSSCHs. A value of a priority corresponding to one PSSCH in the R PSSCHs may be determined, for example, based on priorities of one or more logical channels corresponding to the PSSCH (for example, a highest priority of the one or more logical channels). If a MAC PDU associated with the PSSCH includes a MAC CE, the value of the priority corresponding to the PSSCH may be determined based on the priorities of the one or more logical channels corresponding to the PSSCH and a priority of the MAC CE (for example, a highest priority of the priority of the MAC CE and the priorities of the one or more logical channels).

In some implementations, the first-stage SCI in the PSCCH includes a twelfth information field. The twelfth information field (for example, Beta_offset indicator) is used to carry a beta offset indicator, and the beta offset indicator is applicable to the R second-stage SCIs.

In some implementations, the first-stage SCI in the PSCCH includes a thirteenth information field. The thirteenth information field (for example, number of DMRS port) is used to indicate a quantity of DMRS ports, and the quantity of DMRS ports is applicable to the R PSSCHs, that is, applicable to DMRSs of the R PSSCHs.

In some implementations, the first-stage SCI in the PSCCH includes a fourteenth information field. The fourteenth information field is used to indicate an MCS, and the R PSSCHs all use the MCS indicated by the fourteenth information.

In some implementations, the first-stage SCI in the PSCCH includes a fifteenth information field. The fifteenth information field (for example, Additional MCS table indicator) is used to indicate an MCS table, and the R PSSCHs all use the MCS table indicated by the fifteenth information field.

The following describes Embodiment 2.3 in detail by using examples with reference to specific examples illustrated in FIG. 27 to FIG. 31. In the examples illustrated in FIG. 27 to FIG. 31, a plurality of PSSCHs are transmitted in one time unit, and the plurality of PSSCHs correspond to different TBs, respectively. Each of the plurality of PSSCHs has a corresponding PSCCH and second-stage SCI (for a case in which only one PSCCH is transmitted in one time unit, transmission resources of a PSCCH and a PSSCH may be designed in a manner similar to those shown FIG. 23 to FIG. 26). FIG. 27 to FIG. 31 only illustrate resources of PSCCHs corresponding to respective PSSCHs, and do not show a transmission resource corresponding to the second-stage SCI. In addition, in the examples illustrated in FIG. 27 to FIG. 31, the first threshold mentioned above is set to 3. It should be noted that, the examples in FIG. 27 to FIG. 31 are merely intended to help a person skilled in the art understand embodiments of this application, and are not intended to limit embodiments of this application to a specific value or a specific scenario that is exemplified. Apparently, a person skilled in the art may perform various equivalent modifications or changes based on the examples provided in FIG. 27 to FIG. 31, and such modifications or changes also fall within the scope of embodiments of this application.

Referring to FIG. 27, the first time unit mentioned above may be a time unit #1 or a time unit #2 shown in FIG. 27. In the example of FIG. 27, one time unit includes two slots. PSSCH resource assignment in one time unit starts from the 5th symbol, that is, A = 4. First four symbols of one time unit may be used for AGC, and last four symbols of one time unit are used as GPs, that is, B = 4. Two PSSCHs are transmitted in one time unit, that is, each slot is used to transmit one PSSCH. The 2nd slot in the time unit #2 includes only one symbol for transmitting a PSSCH. Since a quantity of symbols, available for transmitting a PSSCH, included in the 2nd slot in the time unit #2 is less than the first threshold, data of PSSCH transmission in this slot is duplicate data of data in the first symbol or the last symbol of a PSSCH (namely, PSSCH 1) in a previous slot.

Referring to FIG. 28, the first time unit mentioned above may be a time unit #1 or a time unit #2 shown in FIG. 28. In the example of FIG. 28, one time unit includes four slots. PSSCH resource assignment in one time unit starts from the 5th symbol, that is, A = 4. First four symbols of one time unit may be used for AGC, and last four symbols of one time unit are used as GPs, that is, B = 4. Four PSSCHs are transmitted in one time unit, that is, each slot is used to transmit one PSSCH. The 4th slot in the time unit #2 includes only one symbol for transmitting a PSSCH. Since a quantity of symbols, available for transmitting a PSSCH, included in the 4th slot in the time unit #2 is less than the first threshold, data of PSSCH transmission in this slot is duplicate data of data in a previous symbol or a subsequent symbol of a PSSCH (namely, PSSCH 3) in a previous slot.

Referring to FIG. 29, the first time unit mentioned above may be a time unit #1 or a time unit #2 shown in FIG. 29. In the example of FIG. 29, one time unit includes four slots. PSSCH resource assignment in one time unit starts from the 5th symbol, that is, A = 4. First four symbols of one time unit may be used for AGC, and last four symbols of one time unit are used as GPs, that is, B = 4. One time unit is used to transmit two PSSCHs, that is, one PSSCH is transmitted in every two slots. In one time unit, first two slots are used to transmit a PSSCH 1, and last two slots are used to transmit a PSSCH 2. The time unit #2 includes a PSFCH transmission resource.

Referring to FIG. 30, the first time unit mentioned above may be a time unit #1 or a time unit #2 shown in FIG. 30. In the example of FIG. 30, one time unit includes four slots. PSSCH resource assignment in one time unit starts from the 9th symbol, that is, A = 8. First eight symbols of one time unit may be used for AGC, and last eight symbols of one time unit are used as GPs, that is, B = 8. One time unit is used to transmit two PSSCHs, that is, one PSSCH is transmitted in every two slots. The time unit #2 includes a PSFCH transmission resource. The 3rd slot in the time unit #2 includes three symbols for transmitting a PSSCH. Since a quantity of symbols, available for transmitting a PSSCH, included in the 3rd slot in the time unit #2 is equal to the first threshold, a PSSCH, namely, a PSSCH 2 shown in FIG. 30, may be transmitted in the slot (slot n+6 in FIG. 30).

Referring to FIG. 31, the first time unit mentioned above may be a time unit #1 or a time unit #2 shown in FIG. 31. In the example of FIG. 31, one time unit includes four slots. PSSCH resource assignment in one time unit starts from the 9th symbol, that is, A = 8. First eight symbols of one time unit may be used for AGC, and last eight symbols of one time unit are used as GPs, that is, B = 8. One time unit is used to transmit two PSSCHs, that is, one PSSCH is transmitted in every two slots. The time unit #2 includes a PSFCH transmission resource. The 3rd slot in the time unit #2 includes three symbols for transmitting a PSSCH. Since a quantity of symbols, available for transmitting a PSSCH, included in the 3rd slot in the time unit #2 is equal to the first threshold, a PSSCH, namely, a PSSCH 2 shown in FIG. 31, may be transmitted in the slot (namely, slot n+6 in FIG. 31). A symbol used as a GP (namely, the third guard symbol mentioned above) is included between two adjacent PSSCHs in one time unit, and this symbol may be used by a transmit-end device to switch a transmit beam.

In Embodiment 2.3, a plurality of TBs are transmitted by using the first time unit, so that a peak rate of a communications system can be improved.

## Embodiment 3: Manner for determining a TBS

The PSSCH transmission mode is described above in detail with reference to Embodiment 2. For transmission of the PSSCH, it is necessary to determine a TBS corresponding to the PSSCH. The TBS corresponding to the PSSCH may be determined based on a transmission resource corresponding to the PSSCH. It should be understood that, in absence of conflict, Embodiment 3 may be applied to various embodiments in Embodiment 2.

In some implementations, a TBS corresponding to a PSSCH in a first time unit may be determined based on one or more of a first parameter to a fourth parameter (detailed descriptions of the first parameter and the fourth parameter are provided below).

In some implementations, the first parameter may be determined based on a quantity of resource elements (resource element, RE). Alternatively, the first parameter may represent a quantity of REs. For example, the first parameter may represent a quantity of REs available for PSSCH transmission in one PRB or a frequency range (such as 12 subcarriers) corresponding to one PRB. The first parameter may be denoted, for example, by $N'_{RE}$. A quantity of REs included in a PSSCH transmission resource, $N_{RE}$ (or a quantity of REs available for PSSCH transmission in an assigned PSSCH transmission resource, $N_{RE}$), may be determined based on the first parameter $N'_{RE}$.

In some implementations, the second parameter may be determined based on a quantity of PRBs. Alternatively, the second parameter may represent a quantity of PRBs. The second parameter may be denoted, for example, by using $n_{PRB}$.

In some implementations, the third parameter may be determined based on a transmission resource occupied by the PSCCH (for example, a quantity of REs occupied by the PSCCH). Alternatively, the third parameter may represent a transmission resource occupied by the PSCCH. The third parameter may be denoted, for example, by $N_{RE}^{SCI,1}$. For detailed description of the third parameter, reference is made to Embodiment 3.2 below.

In some implementations, the fourth parameter may be determined based on a transmission resource occupied by second-stage SCI (for example, a quantity of REs occupied by the second-stage SCI). Alternatively, the fourth parameter may represent a transmission resource occupied by the second-stage SCI. The fourth parameter may be denoted, for example, by $N_{RE}^{SCI,2}$. For detailed description of the fourth parameter, reference is made to Embodiment 3.3 below.

**Embodiment 3.1: First parameter (a parameter determined based on a quantity of REs)**

In some implementations, the first parameter may be determined based on one or more of a fifth parameter to an eighth parameter (detailed descriptions of the fifth parameter to the eighth parameter are provided below).

In some implementations, the fifth parameter may be determined based on a quantity of symbols available for transmitting a PSSCH. Alternatively, the fifth parameter may represent a quantity of symbols available for transmitting a PSSCH. The fifth parameter may be denoted, for example, by using $N_{symb}^{PSSCH}$.

In some implementations, the sixth parameter may be determined based on a quantity of subcarriers (for example, 12) in one PRB. Alternatively, the sixth parameter may represent a quantity of subcarriers in one PRB. The sixth parameter may be denoted, for example, by $N_{sc}^{RB}$.

In some implementations, the seventh parameter may be determined based on an overhead in one PRB or in a frequency domain range corresponding to one PRB. Alternatively, the seventh parameter may represent an overhead in one PRB or in a frequency domain range (for example, 12 subcarriers) corresponding to one PRB. The seventh parameter may be denoted, for example, by $N_{oh}^{PRB}$. Alternatively, the seventh parameter may represent a quantity of REs that cannot be used for PSSCH transmission in one PRB or in a frequency domain range corresponding to one PRB, or a quantity of REs occupied by another reference signal (such as a CSI-RS and/or a phase tracking reference signal (phase tracking reference signal, PT-RS)).

In some implementations, the seventh parameter may be determined based on pre-configuration information or network device configuration information. For example, the seventh parameter may be determined based on a high-level parameter *sl-X-Overhead.*

In some implementations, the eighth parameter may be determined based on a quantity of REs occupied by one PRB or a DMRS in a frequency domain range (for example, 12 subcarriers) corresponding to one PRB. Alternatively, the eighth parameter may represent a quantity of REs occupied by one PRB or a DMRS in a frequency domain range corresponding to one PRB. Alternatively, the eighth parameter is determined based on a quantity of REs corresponding to one or more DMRS patterns of a PSSCH DMRS. The eighth parameter may be denoted, for example, by $N_{RE}^{DMRS}$.

In some implementations, the eighth parameter may be determined based on pre-configuration information or network device configuration information. For example, the eighth parameter may be determined based on DMRS pattern indication information in resource pool configuration information.

In an example, the first parameter $N_{RE}'$ may be determined based on the following formula:

$$N_{RE}' = N_{sc}^{RB} \cdot N_{symb}^{PSSCH} - N_{oh}^{PRB} - N_{RE}^{DMRS}.$$

In the foregoing formula, $N_{symb}^{PSSCH}$ denotes the fifth parameter, and a manner for determining the fifth parameter may be found in the following text; $N_{sc}^{RB}$ denotes the sixth parameter mentioned above, and $N_{sc}^{RB} = 12$; $N_{oh}^{PRB}$ denotes the seventh parameter mentioned above; and $N_{RE}^{DMRS}$ denotes the eighth parameter mentioned above.

The following describes the manner for determining the fifth parameter in detail by using examples.

In some implementations, the fifth parameter may be determined based on one or more of the following: protocol predefined information; pre-configuration information; network device configuration information; or indication information transmitted by a terminal device that transmits a PSSCH. For example, the resource pool configuration information includes indication information, where the indication information is used to indicate a value of the fifth parameter. For another example, the resource pool configuration information includes indication information, where the indication information is used to indicate a quantity of PSSCH symbols or a quantity of reference symbols used during determining of a TBS, and a value of the fifth parameter may be determined based on the indication information.

In some implementations, the fifth parameter may be determined based on one or more of a ninth parameter to a fifteenth parameter (detailed descriptions of the ninth parameter to the fifteenth parameter are provided below).

In some implementations, the ninth parameter may be determined based on a quantity of slots corresponding to a transmission resource occupied by one PSSCH. Alternatively, the ninth parameter may represent a quantity of slots corresponding to a transmission resource occupied by one PSSCH. The ninth parameter may be denoted by $N_{slot}^{PSSCH}$. For example, if a first time unit is used to transmit one PSSCH, a value of the ninth parameter may be M. For another example, if a first time unit is used to transmit R PSSCHs, a value of the ninth parameter may be S, where S = M/R.

In some implementations, the tenth parameter may be determined based on a quantity of symbols included in one slot. Alternatively, the tenth parameter may represent a quantity of symbols included in one slot. The tenth parameter may be denoted, for example, by $N_{symbol}^{slot}$.

In some implementations, the eleventh parameter may be determined based on a quantity of symbols used for AGC. Alternatively, the eleventh parameter may represent a quantity of symbols used for AGC. Alternatively, the eleventh parameter may be determined based on an overhead for AGC. Alternatively, the eleventh parameter may represent an overhead for AGC. Alternatively, the eleventh parameter is determined based on a time interval between the 1st symbol for PSSCH transmission and the 1st symbol in a first time unit. The eleventh parameter may be denoted, for example, by $N_{symbol}^{AGC}$. In an example, the eleventh parameter may be determined based on configuration information. The configuration information may be used to indicate a quantity of symbols for AGC required to be considered when a TBS is determined, or a quantity of symbols corresponding to an AGC overhead. The configuration information may be, for example, sidelink BWP configuration information and/or resource pool configuration information.

In some implementations, the twelfth parameter may be determined based on a quantity of symbols corresponding to a guard symbol. Alternatively, the twelfth parameter may indicate a quantity of symbols corresponding to a guard symbol. Alternatively, the twelfth parameter may be determined based on an overhead of a guard symbol. Alternatively, the twelfth parameter may represent an overhead of a guard symbol. The twelfth parameter may be denoted, for example, by $N_{symbol}^{GP}$. In an example, the twelfth parameter may be determined based on configuration information. The configuration information may be used to indicate the quantity of symbols corresponding to a guard symbol required to be considered when a TBS is determined, or the configuration information may be used to indicate a quantity of symbols corresponding to an overhead of a guard symbol required to be considered when a TBS is determined. The configuration information may be, for example, sidelink BWP configuration information and/or resource pool configuration information.

In some implementations, the thirteenth parameter may be determined based on a time domain resource corresponding to a PSFCH. Alternatively, the thirteenth parameter may represent a time domain resource corresponding to a PSFCH. The thirteenth parameter may be denoted, for example, by $N_{symb}^{PSFCH}$. A value of the thirteenth parameter may be determined based on one or more of the following: indication information of a transmit-end device, resource pool configuration information, or sidelink BWP configuration information. For example, when a quantity A of symbols used for AGC in one time unit is equal to 4, a quantity B of symbols used as GPs is equal to 4, and one symbol in the time unit is used to transmit a PSFCH, a value of the thirteenth parameter may be 9 (A+B+1, that is, a sum of the quantity of symbols used for AGC, the quantity of symbols used as GPs, and a quantity of symbols used for PSFCH transmission) or 0. For example, a value of the thirteenth parameter may be determined based on indication information in SCI.

In some implementations, the fourteenth parameter may be determined based on a time interval between the 1st symbol corresponding to a transmission resource of a PSSCH and the 1st symbol in one time unit. Alternatively, the fourteenth parameter may represent a time interval between the 1st symbol corresponding to a transmission resource of a PSSCH and the 1st symbol in one time unit. The fourteenth parameter may be used equivalently to or interchangeably with the eleventh parameter.

In some implementations, the fifteenth parameter may be determined based on a quantity of symbols of duplicate data used to transmit PSSCH data in one time unit. Alternatively, the fifteenth parameter may represent a quantity of symbols of duplicate data used to transmit PSSCH data in one time unit. For example, referring to FIG. 27 mentioned above, the 2nd slot in the time unit #2 includes only one symbol for transmitting a PSSCH. Since a quantity of symbols, available for transmitting a PSSCH, included in the 2nd slot in the time unit #2 is less than the first threshold, data of PSSCH transmission in this slot is duplicate data of data in the first symbol or the last symbol of a PSSCH (namely, PSSCH 1) in a previous slot. Therefore, in the example of FIG. 27, a value of the fifteenth parameter may be 1. For another example, referring to FIG. 28 mentioned above, the 4th slot in the time unit #2 includes only one symbol for transmitting a PSSCH. Since a quantity of symbols, available for transmitting a PSSCH, included in the 4th slot in the time unit #2 is less than the first threshold, data of PSSCH transmission in this slot is duplicate data of data in a previous symbol or a subsequent symbol of a PSSCH (namely, PSSCH 3) in a previous slot. Therefore, in the example of FIG. 28, a value of the fifteenth parameter may be 1.

A specific example of a manner for determining the fifth parameter is provided below.

For example, a first time unit includes two slots, and the two slots are used to transmit one PSSCH. In the first time unit, a quantity A of symbols used for AGC is equal to 4, and a quantity B of symbols used as guard symbols is equal to 4.

One of the two slots includes $N_{symbol}^{slot} = 14$ symbols. If a PSFCH period is configured as one time unit, that is, each time unit includes a PSFCH resource, the fifth parameter $N_{symb}^{PSSCH}$ (that is, a quantity of symbols available for transmitting a PSSCH in the first time unit) may be determined according to the following formula:

$$N_{symb}^{PSSCH} = N_{slot}^{PSSCH} \cdot N_{symbol}^{slot} - N_{symbol}^{AGC} - N_{symbol}^{GP} - N_{symb}^{PSFCH}$$

In the foregoing formula, $N_{slot}^{PSSCH}$ denotes the ninth parameter mentioned above, and $N_{slot}^{PSSCH} = 2$; $N_{symbol}^{AGC}$ denotes the eleventh parameter mentioned above, and $N_{symbol}^{AGC} = 4$; $N_{symbol}^{GP}$ denotes the twelfth parameter mentioned above, and $N_{symbol}^{GP} = 4$; $N_{symb}^{PSFCH}$ denotes the thirteenth parameter mentioned above, and $N_{symb}^{PSFCH} = 9$.

**Embodiment 3.2: A third parameter (a parameter determined based on a transmission resource occupied by a PSCCH)**

In some implementations, the third parameter (denoted as $N_{RE}^{SCI,1}$) may be determined based on the transmission resource (denoted as $N'^{SCI,1}_{RE}$) occupied by the PSCCH. The transmission resource occupied by the PSCCH may include a transmission resource occupied by the PSCCH and a transmission resource occupied by a PSCCH DMRS.

In some implementations, the third parameter may be represented by a quantity of REs.

In some implementations, if one PSSCH is transmitted in the first time unit, and only one PSCCH is transmitted in the first time unit, the third parameter is determined based on a transmission resources occupied by the one PSCCH. In this implementation, $N_{RE}^{SCI,1}$ may be equal to $N'^{SCI,1}_{RE}$. Alternatively, $N_{RE}^{SCI,1}$ and $N'^{SCI,1}_{RE}$ may be understood as a same parameter. In this case, $N'^{SCI,1}_{RE}$ is determined based on the transmission resource occupied by the one PSCCH.

In some implementations, if the first time unit is used to transmit a plurality of PSSCHs, the plurality of PSSCHs correspond to a same TB, and the first time unit is used to transmit only one PSCCH, then the third parameter is determined based on the transmission resource occupied by the one PSCCH. In this implementation, $N_{RE}^{SCI,1}$ may be equal to $N'^{SCI,1}_{RE}$. Alternatively, $N_{RE}^{SCI,1}$ and $N'^{SCI,1}_{RE}$ may be understood as a same parameter. In this case, $N'^{SCI,1}_{RE}$ is determined based on the transmission resource occupied by the one PSCCH.

In some implementations, if the first time unit is used to transmit a plurality of PSSCHs, and the plurality of PSSCHs correspond to a plurality of different TBs, and the first time unit is used to transmit only one PSCCH, then the third parameter is determined based on the transmission resource occupied by the one PSCCH. In this implementation, $N_{RE}^{SCI,1} = N'^{SCI,1}_{RE}$. Alternatively, $N_{RE}^{SCI,1}$ and $N'^{SCI,1}_{RE}$ may be understood as a same parameter. In this case, $N'^{SCI,1}_{RE}$ is determined based on the transmission resource occupied by the one PSCCH.

In some implementations, if the first time unit is used to transmit a plurality of PSSCHs, and the plurality of PSSCHs correspond to a plurality of different TBs, and the first time unit is used to transmit a plurality of PSCCHs, then the third parameter is determined based on a transmission resource occupied by a PSCCH corresponding to the PSSCH. For example, $N_{RE}^{SCI,1} = N'^{SCI,1}_{RE}$ (or, $N_{RE}^{SCI,1}$ and $N'^{SCI,1}_{RE}$ may be understood as a same parameter). In this case, $N'^{SCI,1}_{RE}$ is determined based on a transmission resource occupied by a PSCCH corresponding to the PSSCH.

Alternatively, the third parameter is determined based on one or more of the following: a sum of transmission resources occupied by the plurality of PSCCHs, or a quantity of the plurality of PSCCHs (or a quantity of TBs transmitted in the first time unit, namely, the value of R mentioned above). For example, $N_{RE}^{SCI,1} = \sum_{i=1}^{R} N'^{SCI,1}_{RE,i} / R$, where $N'^{SCI,1}_{RE,i}$ is determined based on a quantity of REs corresponding to a transmission resource of the ith PSCCH, that is, a TBS of a PSSCH is determined based on an average value of a quantity of REs of transmission resources of all PSCCHs transmitted in the first time unit.

**Embodiment 3.3: A fourth parameter (a parameter determined based on a transmission resource occupied by second-stage SCI)**

In some implementations, the fourth parameter (denoted as $N_{RE}^{SCI,2}$) may be determined based on a transmission resource (denoted as $N'^{SCI,2}_{RE}$) occupied by the second-stage SCI.

In some implementations, the fourth parameter may be represented by a quantity of REs.

In some implementations, if one PSSCH is transmitted in the first time unit, and only one second-stage SCI is transmitted in the first time unit, the fourth parameter is determined based on a transmission resources occupied by the one second-stage SCI. For example, $N_{RE}^{SCI,2} = N'^{SCI,2}_{RE}$. Alternatively, $N_{RE}^{SCI,2}$ and $N'^{SCI,2}_{RE}$ may be understood as a same parameter. In this case, $N'^{SCI,2}_{RE}$ is determined based on the transmission resource occupied by the one second-stage SCI.

In some implementations, if the first time unit is used to transmit a plurality of PSSCHs, the plurality of PSSCHs correspond to a same TB, and the first time unit is used to transmit only one second-stage SCI, then the fourth parameter is determined based on a transmission resource occupied by the one second-stage SCI. For example, $N_{RE}^{SCI,2} = N'^{SCI,2}_{RE}$. Alternatively, $N_{RE}^{SCI,2}$ and $N'^{SCI,2}_{RE}$ may be understood as a same parameter. In this case, $N'^{SCI,2}_{RE}$ is determined based on the transmission resource occupied by the one second-stage SCI.

In some implementations, if the first time unit is used to transmit a plurality of PSSCHs, the plurality of PSSCHs correspond to a plurality of different TBs, and the first time unit is used to transmit only one second-stage SCI, then the fourth parameter is determined based on a transmission resource occupied by the one second-stage SCI. For example, $N_{RE}^{SCI,2} = N'^{SCI,2}_{RE}$. Alternatively, $N_{RE}^{SCI,2}$ and $N'^{SCI,2}_{RE}$ may be understood as a same parameter. In this case, $N'^{SCI,2}_{RE}$ is determined based on the transmission resource occupied by the one second-stage SCI.

In some implementations, if the first time unit is used to transmit a plurality of PSSCHs, the plurality of PSSCHs correspond to a plurality of different TBs, and the first time unit is used to transmit a plurality of second-stage SCIs, then the fourth parameter is determined based on a transmission resource occupied by second-stage SCI corresponding to the PSSCH. For example, $N_{RE}^{SCI,2} = N'^{SCI,2}_{RE}$ (or, $N_{RE}^{SCI,2}$ and $N'^{SCI,2}_{RE}$ may be understood as a same parameter). In this case, $N'^{SCI,2}_{RE}$ is determined based on a transmission resource occupied by second-stage SCI corresponding to the PSSCH. Alternatively, the fourth parameter is determined based on one or more of the following: a sum of transmission resources occupied by the plurality of second-stage SCIs, or a quantity of the plurality of second-stage SCIs (or a quantity of TBs transmitted in the first time unit, namely, the value of R mentioned above). For example, $N_{RE}^{SCI,2} = \sum_{i=1}^{R} N'^{SCI,2}_{RE,i} / R$, where $N'^{SCI,2}_{RE,i}$ is determined based on a quantity of REs corresponding to a transmission resource of the ith second-stage SCI, that is, a TBS of a PSSCH is determined based on an average value of a quantity of REs of transmission resources of all second-stage SCIs transmitted in the first time unit.

The following provides a specific manner for determining a quantity $N_{RE}$ of REs included in a transmission resource of a PSSCH with reference to is a specific example.

For example, the quantity $N_{RE}$ of REs included in the transmission resource of the PSSCH may be determined by the following formula:

$$N_{RE} = N'_{RE} \cdot n_{PRB} - N_{RE}^{SCI,1} - N_{RE}^{SCI,2}$$

In the foregoing formula, $N_{RE}^{SCI,1}$ is determined based on $N'^{SCI,1}_{RE}$ (for details, reference may be made to the manner for determining the third parameter described above), and $N_{RE}^{SCI,2}$ is determined based on $N'^{SCI,2}_{RE}$ (for details, reference may be made to the manner for determining the fourth parameter described above). $N'^{SCI,2}_{RE}$ may be determined by the following formula:

$$Q'_{SCI2} = \min\left\{ \left\lceil \frac{(O_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma$$

Herein $Q'_{SCI2}$ denotes a quantity of symbols after second-stage SCI is coded and modulated. $N'^{SCI,2}_{RE} = Q'_{SCI2}$; and $O_{SCI2}$ denotes a quantity of information bits corresponding to the second-stage SCI. $L_{SCI2}$ denotes a quantity of bits for cyclic redundancy check (cyclic redundancy check, CRC) of the second-stage SCI. $\beta_{offset}^{SCI2}$ may be determined based on indication information "Beta_offset indicator" in first-stage SCI. $M_{sc}^{PSSCH}(l)$ denotes a quantity of subcarriers corresponding to a frequency domain resources of a PSSCH. $M_{sc}^{PSCCH}(l)$ denotes a quantity of subcarriers corresponding to a frequency domain resources of a PSCCH. $M_{sc}^{SCI2}(l)$ denotes a quantity of REs available for transmitting the second-stage SCI on a symbol $l$, $l = 0,1,2 \cdots, N_{symbol}^{PSSCH} - 1$, where $N_{symbol}^{PSSCH}$ may be determined based on the fifth parameter. $M_{sc}^{SCI2}(l) = M_{sc}^{PSSCH}(l) - M_{sc}^{PSCCH}(l)$. $\gamma$ denotes a quantity of blank REs in a PRB where the last symbol of the second-stage SCI is located. R denotes a code rate determined based on MCS indication information in the first-stage SCI. $\alpha$ is determined based on a higher level configuration parameter.

**Embodiment 4: A sidelink feedback mechanism based on a first time unit**

It should be understood that, the sidelink feedback mechanism described in Embodiment 4 may be implemented based on the time unit structure including a PSFCH transmission resource provided in Embodiment 1. In absence of conflict, content of Embodiment 4 may be combined with the content of Embodiment 1. For example, first A symbols of the first time unit in Embodiment 4 may be used for AGC. For another example, last B symbols of the first time unit in Embodiment 4 are guard symbols and may be used as GPs. In addition, in absence of conflict, the sidelink feedback mechanism described in Embodiment 4 may be arbitrarily combined with the PSSCH transmission mode and the manner of determining a TBS provided in Embodiment 2 and Embodiment 3. For example, the first time unit may be used to simultaneously transmit a PSSCH and a PSFCH. The PSSCH may be transmitted based on the manner described in Embodiment 2 and determine a TBS in the manner described in Embodiment 3. The PSFCH may be used for performing feedback based on the sidelink feedback mechanism described in Embodiment 4. For another example, the first time unit may be used to transmit a PSFCH, and the PSFCH may be used for sidelink feedback on a PSSCH transmitted in a second time unit. The second time unit may be used to transmit a PSSCH based on the manner described in Embodiment 2, and determine a TBS based on the manner described in Embodiment 3. The first time unit may be used to transmit a PSFCH based on the manner described in Embodiment 4, thereby realizing sidelink feedback based on a time unit.

FIG. 32 is a schematic flowchart of a sidelink transmission method according to an embodiment of this application. The method illustrated in FIG. 32 may be executed by a first terminal device. The first terminal device may be any type of terminal device mentioned above, for example, may be the terminal device 120 in FIG. 1.

The method in FIG. 32 includes step S3210, that is, the first terminal device receives or transmits a first PSFCH in a first time unit.

It should be noted that the first PSFCH in embodiments of this application is used to carry sidelink feedback information or conflict indication information, which is not limited in embodiments of this application. The following description is made by using an example in which the first PSFCH is used to carry the sidelink feedback information.

In some implementations, the first PSFCH is used to carry first sidelink feedback information corresponding to one or more PSSCHs in a second time unit. The first sidelink feedback information may be HARQ information.

Similar to the first time unit, the second time unit is also a time unit including consecutive M slots. The descriptions about the first time unit mentioned in embodiments of this application may all be applicable to the second time unit.

Generally speaking, a format of a PSFCH may be defined from one or more perspectives such as a quantity of bits of sidelink feedback information included in the PSFCH, a frequency domain resource occupied by the PSFCH, or a time domain resource occupied by the PSFCH. A format of the first PSFCH transmitted in the first time unit is not limited in this embodiment, and may be designed according to an actual requirement. The following describes the format of the first PSFCH in detail from a plurality of perspectives in combination with Embodiment 4.1 to Embodiment 4.3.

**Embodiment 4.1: A quantity of bits of sidelink feedback information carried by a first PSFCH**

As mentioned above, the first PSFCH is used to carry first sidelink feedback information. The first sidelink feedback information is used to perform sidelink feedback on one or more PSSCHs in a second time unit.

In some implementations, the first sidelink feedback information may be 1-bit sidelink feedback information.

In some implementations, the first sidelink feedback information may be a multiple-bit sidelink feedback information.

In some implementations, a quantity of bits included in the first sidelink feedback information may be determined based on a quantity of TBs transmitted in a second time unit. For example, if the second time unit is used to transmit one TB, the first sidelink feedback information is 1-bit sidelink feedback information; if the second time unit is used to transmit a plurality of TBs, the first sidelink feedback information is the multiple-bit sidelink feedback information. In other words, a quantity of bits included in the first sidelink feedback information may be equal to a quantity of TBs transmitted in the second time unit.

Different quantities of bits of the first sidelink feedback information correspond to different feedback manners that are corresponding to the first PSFCH, which is described below in combination with a plurality of embodiments.

**Embodiment 4.1.1: The first sidelink feedback information is 1-bit sidelink feedback information.**

In some implementations, one or more PSSCHs in the second time unit are used to carry a TB (refer to the descriptions of Embodiment 2.1 and Embodiment 2.2 above). In this case, the first sidelink feedback information may be the sidelink feedback information corresponding to the one TB. For example, a value corresponding to ACK is 1, and a value corresponding to NACK is 0. If the TB is received correctly, a value of the 1-bit first sidelink feedback information is 1, indicating ACK; if the TB is not received correctly, a value of the 1-bit first sidelink feedback information is 0, indicating NACK.

In some implementations, one or more PSSCHs in the second time unit are used to carry a plurality of TBs (refer to the descriptions of Embodiment 2.3 above). In this case, the first sidelink feedback information may be determined based on the sidelink feedback information corresponding to the plurality of TBs. For example, bunding (bundling) processing may be performed on the sidelink feedback information corresponding to the plurality of TBs. There are many manners for performing bundling processing. For example, bundling processing may be performed on the sidelink feedback information corresponding to the plurality of TBs based on an "AND operation" or an "OR operation", to obtain a 1-bit operation result. Multiple-bit sidelink feedback information is bound into 1-bit sidelink feedback information and feedback is performed by using a PSFCH, and a feedback mechanism of a PSFCH format (namely, a PSFCH format 0, in which a PSFCH carries 1-bit feedback information) provided in a related technology may be used to a greatest extent.

For example, in a possible implementation, the first sidelink feedback information is determined based on an AND operation result of sidelink feedback information respectively corresponding to a plurality of TBs. If all pieces of sidelink feedback information corresponding to the plurality of TBs are ACK, a value of the first sidelink feedback information is a first value (for example, may be 1). For another example, if sidelink feedback information corresponding to at least one TB in the plurality of TBs is NACK, a value of the first sidelink feedback information is a second value (for example, may be 0). In a more specific example, if a value of one bit of the first sidelink feedback information being 1 indicates ACK, being 0 indicates NACK, and the second time unit is used to transmit four TBs that respectively correspond to 4-bit sidelink feedback information, a result of the "AND operation" is 1 only when the 4-bit sidelink feedback information are all ACK (that is, values of the 4-bit sidelink feedback information are all 1), otherwise, the result of the "AND operation" is 0.

For another example, in another possible implementation, the first sidelink feedback information is determined based on an OR operation result of sidelink feedback information respectively corresponding to a plurality of TBs. For example, if at least one sidelink feedback information in the sidelink feedback information corresponding to the plurality of TBs is ACK, a value of the first sidelink feedback information is a first value (for example, may be 1). For another example, if all pieces of sidelink feedback information corresponding to the plurality of TBs are NACK, a value of the first sidelink feedback information is a second value (for example, may be 0). In a more specific example, if a value of one bit of the first sidelink feedback information being 1 indicates ACK, being 0 indicates NACK, and the second time unit is used to transmit four TBs that respectively correspond to 4-bit sidelink feedback information, a result of the "OR operation" is 1 if the 4-bit sidelink feedback information includes ACK (that is, a value of at least one of the 4-bit sidelink feedback information is 1), otherwise, the result of the "OR operation" is 0.

In some implementations, one or more PSSCHs in the second time unit are used to carry a plurality of TBs (refer to the descriptions of Embodiment 2.3 above). The plurality of PSSCHs correspond to a plurality of PSFCHs respectively (the first PSFCH mentioned above may be one of the plurality of PSFCHs), and the plurality of PSFCHs are used to carry sidelink feedback information corresponding to a plurality of TBs respectively. The plurality of PSFCHs may be used to perform sidelink feedback simultaneously on the plurality of PSFCHs.

In some implementations, all the plurality of PSFCHs may carry 1-bit sidelink feedback information. In this way, a feedback mechanism of a PSFCH format (namely, a PSFCH format 0, in which a PSFCH carries 1-bit feedback information) provided in a related technology may be used to a greatest extent.

The plurality of PSFCHs may be distinguished from each other by using one or more of time domain, frequency domain, or code domain.

In some implementations, the plurality of PSFCHs correspond to a same time domain resource, and correspond to different frequency domain resources. An example corresponding to this implementation is provided below with reference to FIG. 33, and details are described below.

In some implementations, time domain resources corresponding to the plurality of PSFCHs are the same, and the plurality of PSFCHs correspond to different code domain resources.

In some implementations, the plurality of PSFCHs correspond to different time domain resources, and correspond to a same frequency domain resource.

In some implementations, the plurality of PSFCHs correspond to different time domain resources, and correspond to different frequency domain resources. An example corresponding to this implementation is provided below with reference to FIG. 34, and details are described below.

In some implementations, the plurality of PSFCHs correspond to different time domain resources, and correspond to different code domain resources.

**Embodiment 4.1.2: The first sidelink feedback information is multiple-bit sidelink feedback information.**

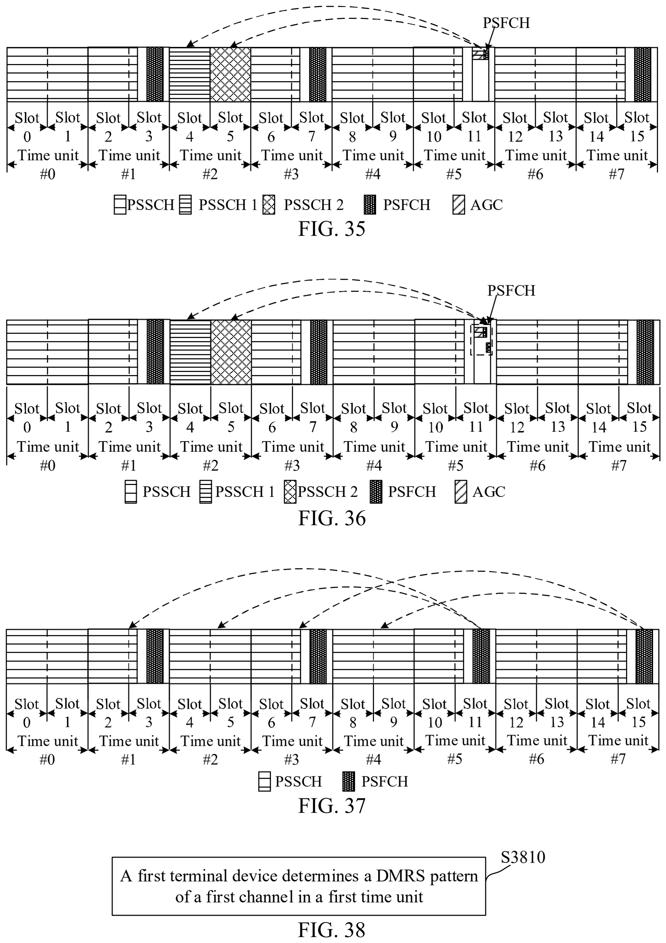

In some implementations, one or more PSSCHs in the second time unit are used to carry a plurality of TBs (refer to the descriptions of Embodiment 2.3 above). Correspondingly, the multiple-bit sidelink feedback information in a first PSFCH corresponds to the plurality of TBs, respectively. In other words, the multiple-bit sidelink feedback information is used to indicate sidelink feedback results in a one-to-one correspondence with the plurality of TBs respectively. An example corresponding to this implementation is provided below with reference to FIG. 35, and details are described below.

**Embodiment 4.2: A frequency domain resource of a first PSFCH**

In some implementations, the first PSFCH occupies one PRB in frequency domain.

In some implementations, if the first PSFCH occupies one PRB in frequency domain, the first PSFCH may carry first sidelink feedback information based on a first sequence. A length of the first sequence is determined based on a quantity of subcarriers included in one PRB. For example, the length of the first sequence is equal to a quantity of subcarriers included in one PRB. The first sequence may be mapped to one PRB occupied by the first PSFCH.

In some implementations, the first PSFCH occupies a plurality of PRBs in frequency domain.

In some implementations, if the first PSFCH occupies a plurality of PRBs in frequency domain, the first PSFCH may carry first sidelink feedback information based on a first sequence. A length of the first sequence may be determined based on a quantity of subcarriers included in one PRB (for example, the length of the first sequence is equal to the quantity of subcarriers included in one PRB, such as the length of the first sequence is equal to 12). The first sequence may be mapped to one PRB (hereinafter referred to as PRB 1) in a plurality of PRBs occupied by the first PSFCH, and data in remaining PRBs except the PRB 1 in the plurality of PRBs may be determined based on the first sequence. For example, data in each of the remaining PRBs may be duplicate data of the data in the PRB 1. For another example, the data in each PRB in the remaining PRBs may be determined based on the first sequence multiplied by a rotation factor.

In some implementations, if the first PSFCH occupies a plurality of PRBs in frequency domain, the first PSFCH carries the first sidelink feedback information based on a second sequence. A length of the second sequence may be determined based on a product of a quantity of the plurality of PRBs and a quantity of subcarriers included in one PRB. For example, the length of the second sequence may be equal to the product of the quantity of the plurality of PRBs and the quantity of subcarriers included in one PRB. For another example, the length of the second sequence may be determined based on a maximum prime number that is less than or equal to the product of the quantity of the plurality of PRBs and the quantity of subcarriers included in one PRB. For example, assuming that the product of the quantity of the plurality of PRBs and the quantity of subcarriers included in one PRB is 132, the length of the second sequence may be 131. After determining the length of the second sequence, the second sequence may be mapped to the plurality of PRBs occupied by the first PSFCH.

It should be noted that Embodiment 4.2 may be combined with Embodiment 4.1 in any manner. For example, when the first PSFCH includes 1-bit information, the first PSFCH may occupy one PRB in frequency domain or may occupy a plurality of PRBs in frequency domain. For another example, when the first PSFCH includes multiple-bit information, the first PSFCH may occupy one PRB or a plurality of PRBs in frequency domain.

**Embodiment 4.3: A PSFCH time domain resource in a first time unit (the PSFCH time domain resource includes a time domain resource corresponding to the first PSFCH mentioned above)**

In some implementations, the PSFCH time domain resource in the first time unit may include K symbols. The K symbols may include K1 symbols and K2 symbols. The K1 symbols are used to transmit a PSFCH, and data in the K2 symbols is duplicate data of data in the K1 symbols, where K1 and K2 are positive integers, and K is equal to a sum of K1 and K2. A value of K1 may be 1 or greater than 1 (for example, may be 2 or A). For descriptions of K, K1, and K2, reference may be made to Embodiment 1.4 above, and details are not described herein again.

In some implementations, the value of K1 is determined based on a quantity of TBs transmitted in a second time unit. For example, when the second time unit is used to transmit one TB, the value of K1 is 1; when the second time unit is used to transmit a plurality of TBs, the value of K1 is greater than 1. In other words, K1 may be equal to the quantity of TBs transmitted in the second time unit.

In some implementations, the value of K is determined based on the quantity of TBs transmitted in the second time unit. For example, when the second time unit is used to transmit one TB, the value of K is 5 (1 symbol is used to transmit a PSFCH, and 4 symbols are used for AGC); when the second time unit is used to transmit a plurality of TBs, the value of K1 is greater than 5 (a plurality of symbols are used to transmit a PSFCH, and 4 symbols are used for AGC).

In some implementations, when K1 is greater than 1, a quantity of symbols corresponding to the first PSFCH may be less than K1, and the K1 symbols are used for repetition of transmission of a plurality of first PSFCHs. In other words, the K1 symbols may transmit a plurality of PSFCHs, and sidelink feedback information carried in the plurality of PSFCHs is the same as the sidelink feedback information carried in the first PSFCH, that is, the plurality of PSFCHs are used for repetition of transmission of the sidelink feedback information carried in the first PSFCH. Based on repetition of transmission of the PSFCH in time domain, detection performance of the PSFCH can be improved.

In some implementations, different PSFCHs in the plurality of PSFCHs (including the first PSFCH) in the K1 symbols correspond to a same frequency domain resource.

In some implementations, different PSFCHs in the plurality of PSFCHs (including the first PSFCH) in the K1 symbols correspond to different frequency domain resources.

In some implementations, different PSFCHs in the plurality of PSFCHs (including the first PSFCH) in the K1 symbols correspond to a same code domain resource.

In some implementations, different PSFCHs in the plurality of PSFCHs (including the first PSFCH) in the K1 symbols correspond to different code domain resources.

In some implementations, when K1 is greater than 1, the quantity of symbols corresponding to the first PSFCH is K1. In other words, the first PSFCH occupies the K1 symbols (that is, a quantity of symbols occupied by the first PSFCH in time domain is greater than 1). For example, the sidelink feedback information corresponding to the first PSFCH may be mapped to transmission resources corresponding to K1 symbols after being subject to channel coding and modulation.

In some implementations, the transmission resources corresponding to the K1 symbols are further used to transmit a DMRS. The DMRS is a PSFCH DMRS.

It should be noted that Embodiment 4.3 can be combined with Embodiment 4.1 and/or Embodiment 4.2 in any manner. For example, when the first PSFCH includes 1-bit information, the first PSFCH may occupy one PRB or a plurality of PRBs in frequency domain, and the first PSFCH may occupy one symbol or a plurality of symbols in time domain. For another example, when the first PSFCH includes multiple-bit information, the first PSFCH may occupy one PRB or a plurality of PRBs in frequency domain, and the first PSFCH may occupy one symbol or a plurality of symbols in time domain.

The foregoing describes the PSFCH format in detail in combination with Embodiment 4.1 to Embodiment 4.3. The following provides more specific examples of the PSFCH formats. A PSFCH (such as the first PSFCH mentioned above) in the first time unit may use any one of the plurality of PSFCH formats described below.

**Example 1: A PSFCH format 1**

If a PSFCH uses the PSFCH format 1, the PSFCH carries 1-bit sidelink feedback information. In addition, the PSFCH is mapped to one symbol in time domain, and the PSFCH occupies one PRB in frequency domain.

A PSFCH time domain resource corresponding to the PSFCH may include K symbols, and K = K1 + K2. K1 symbols (corresponding to last K1 symbols in the K symbols) in the K symbols are used to transmit the PSFCH. Data in K2 symbols (corresponding to first K2 symbols in the K symbols) in the K symbols is duplicate data of data in the K1 symbols. The K2 symbols may be used by a receive-end device to perform AGC adjustment.

The 1-bit sidelink feedback information in the PSFCH may be carried by a first sequence, where a length of the first sequence is 12.

If only one TB is transmitted in a time unit associated with the PSFCH (for example, only one PSSCH is transmitted in the time unit, or a plurality of PSSCHs are transmitted in the time unit and the plurality of PSSCHs correspond to a same TB), the 1-bit sidelink feedback information carried by the PSFCH is sidelink feedback information for the one TB.

If a plurality of TBs is transmitted in a time unit associated with the PSFCH (for example, a plurality of PSSCHs is transmitted in the time unit, and the plurality of PSSCHs correspond to different TBs), since the PSFCH can only carry 1-bit sidelink feedback information, sidelink feedback may be performed by using any one of Manner 1 to Manner 3 described below.

In Manner 1, sidelink feedback information corresponding to the plurality of TBs is bound together for feedback. For example, bunding processing may be performed on a plurality of pieces of sidelink feedback information corresponding to the plurality of TBs. The bundling process may be, for example, an AND operation of a plurality of bits, a result of the AND operation is 1 bit, and the result of the operation may be fed back by using a PSFCH. For example, if a value of the bit is 1, it indicates ACK; if a value of the bit is 0, it indicates NACK. Four TBs are transmitted in the time unit associated with the PSFCH, and respectively correspond to 4-bit sidelink feedback information. In this case, only when all 4-bit feedback information are ACK, that is, values of the four bits are all 1, a result of the "AND operation" is 1; otherwise, a result of the "AND operation" is 0. Multiple-bit sidelink feedback information is bound into 1 bit and fed back by using the PSFCH, so that the feedback mechanism of the PSFCH format 0 can be used to a greatest extent.

In Manner 2, a plurality of pieces of sidelink feedback information corresponding to the plurality of TBs are respectively carried by a plurality of PSFCHs. The plurality of PSFCHs all adopt the PSFCH format 1. The plurality of PSFCHs are located on a same time domain resource, and the plurality of PSFCHs correspond to different frequency domain resources or code domain resources. In Manner 2, sidelink feedback information corresponding to different TBs is fed back by using different PSFCHs respectively, so that a slot-based PSFCH feedback format and feedback mechanism can be reused as much as possible, and sidelink feedback is simultaneously performed on a plurality of PSSCHs.

For example, FIG. 33 illustrates eight time units in a resource pool (namely, a time unit #0 to a time unit #7 in FIG. 33). One time unit includes two slots, and a period of a PSFCH is two time units. The PSFCH is located in time units #1, #3, #5, #7, or the like. A time interval between the PSFCH and a PSSCH transmission resource associated with the PSFCH is 2, namely, two time units. A transmission resource of PSFCH includes five symbols, one symbol (that is, K1 = 1) is used to transmit the PSFCH, and the remaining 4 symbols (that is, K2 = 4) are used for AGC. For simplicity, an AGC symbol located at a start position of a time unit is not shown in FIG. 33. Two PSSCHs are transmitted in the time unit #2, which are a PSSCH 1 and a PSSCH 2, respectively. PSFCH transmission resources corresponding to the PSSCH 1 and the PSSCH 2 are both located in the time unit #5. Further, the PSSCH 1 and the PSSCH 2 correspond to a PSFCH 1 and a PSFCH 2, respectively, each PSFCH carries 1-bit sidelink feedback information, and each PSFCH occupies one PRB in frequency domain. As can be seen from FIG. 33, the PSFCH 1 and the PSFCH 2 correspond to a same time domain resource, but the PSFCH 1 and the PSFCH 2 correspond to different frequency domain resources.

In Manner 3, a plurality of pieces of sidelink feedback information corresponding to the plurality of TBs are respectively carried by a plurality of PSFCHs, and the plurality of PSFCHs all adopt the PSFCH format 1. The plurality of PSFCHs are located in different time domain resources, and the plurality of PSFCHs correspond to a same frequency domain resource or a same code domain resource, or the plurality of PSFCHs correspond to different frequency domain resources or different code domain resources. In Manner 3, sidelink feedback information corresponding to different TBs is fed back by using different PSFCHs respectively, so that a slot-based PSFCH feedback format and feedback mechanism can be reused as much as possible, and sidelink feedback is simultaneously performed on a plurality of PSSCHs.

For example, FIG. 34 illustrates eight time units in a resource pool (namely, a time unit #0 to a time unit #7 in FIG. 34). One time unit includes two slots, and a period of a PSFCH is two time units. The PSFCH is located in time units #1, #3, #5, #7, or the like. A time interval (a minimum time interval) between a transmission resource of the PSFCH and a PSSCH transmission resource corresponding to the PSFCH is 2, namely, two time units. The transmission resource of the PSFCH includes six (that is, K = 6) symbols, of which two symbols are used to transmit PSFCHs (that is, K1 = 2, corresponding to last two symbols of the six symbols). A PSFCH transmitted on each of the two symbols corresponds to one PSSCH in one time unit, and the remaining four symbols are used for AGC (that is, K2 = 4, corresponding to the first four symbols of the six symbols). For simplicity, an AGC symbol located at a start position of a time unit is not shown in FIG. 34. In FIG. 34, two PSSCHs (including a PSSCH 1 and a PSSCH 2) are transmitted in the time unit #2, and transmission resources of PSFCHs corresponding to the two PSSCHs are located in the time unit #5. Further, the PSSCH 1 in the time unit #2 corresponds to a PSFCH 1, and the PSSCH 2 in the time unit #2 corresponds to a PSFCH 2. The PSFCH 1 is located at the second-to-last symbol corresponding to a PSFCH transmission resource in the time unit #5, namely, the 1st symbol used for PSFCH transmission (not including the first four symbols used for AGC), and the PSFCH 2 is located at the last symbol of the PSFCH transmission resource in time unit #5, namely, the 2nd symbol used for PSFCH transmission (not including the first four symbols used for AGC). As can be seen from FIG. 34, the PSFCH 1 and the PSFCH 2 have different frequency domain resources.

It should be noted that Manner 2 and Manner 3 may be used in combination to transmit a plurality of PSFCHs, and each PSFCH carries 1-bit sidelink feedback information. For example, the plurality of TBs correspond to J-bit sidelink feedback information, the J-bit sidelink feedback information is carried by J PSFCHs, and each PSFCH carries 1-bit sidelink feedback information. $J = \sum_{i=1}^{K1} J_i$, where $J_i$ denotes a quantity of PSFCHs transmitted in the $i^{th}$ symbol, and $J_i$ is an integer greater than or equal to 0. That is, the J PSFCHs are transmitted in K1 symbols, and 0, 1 or more PSFCHs may be transmitted in each symbol. A same quantity of PSFCHs or different quantities of PSFCHs may be transmitted in respective symbols.

### Example 2: A PSFCH format 2

If a PSFCH uses the PSFCH format 2, the PSFCH carries 1-bit sidelink feedback information. One PSFCH is mapped to one symbol in time domain, and one PSFCH occupies Q PRBs in frequency domain, where Q is a positive integer greater than or equal to 1. When Q is equal to 1, the PSFCH format 2 is equivalent to the PSFCH format 1. When Q is greater than 1, it is equivalent to that one PSFCH is transmitted through a plurality of PRBs. When there is a power spectrum density (power spectrum density, PSD) limitation, a transmit power of sidelink feedback information can be increased by transmitting the plurality of PRBs, thereby improving detection performance.

A PSFCH time domain resource corresponding to the PSFCH may include K symbols, and K = K1 + K2. K1 symbols (corresponding to last K1 symbols in the K symbols) in the K symbols are used to transmit the PSFCH. Data in K2 symbols (corresponding to first K2 symbols in the K symbols) in the K symbols is duplicate data of data in the K1 symbols. The K2 symbols may be used by a receive-end device to perform AGC adjustment.

Optionally, the 1-bit sidelink feedback information may be carried by a first sequence, where a length of the first sequence is 12. The first sequence is mapped to one PRB. When Q is greater than 1, data in remaining PRBs of the Q PRBs may be determined based on the first sequence.

Optionally, the 1-bit sidelink feedback information may be carried by a second sequence. A length of the second sequence is $Q \cdot N_{SC}^{RB}$, and the second sequence is mapped to all subcarriers corresponding to the Q PRBs, where $N_{SC}^{RB}$ denotes a quantity of subcarriers included in one PRB.

For the PSFCH format 2, sidelink feedback information may be carried in a manner similar to Manner 1, Manner 2 or Manner 3 mentioned in the PSFCH format 1.

For example, for Manner 1, multiple-bit sidelink feedback information may be bound together for sidelink feedback. For example, an "AND operation" may be performed on a plurality of bits bit by bit to generate 1-bit sidelink feedback information, and the sidelink feedback information may be carried by the PSFCH format 2.

For another example, for Manner 2, sidelink feedback information corresponding to each TB in the plurality of TBs may be carried by a PSFCH of format 2, and sidelink feedback information corresponding to the plurality of TBs corresponds to a plurality of PSFCHs of format 2 respectively. The plurality of PSFCHs of format 2 have a same time domain resource, and the plurality of PSFCHs of format 2 correspond to different frequency domain resources and/or code domain resources.

For example, for Manner 3, sidelink feedback information of each bit in multiple-bit sidelink feedback information corresponds to a PSFCH of format 2 in one of the K1 symbols, and different pieces of sidelink feedback information are respectively carried by PSFCHs of format 2 in different symbols of the K1 symbols.

### Example 3: A PSFCH format 3

If a PSFCH uses the PSFCH format 3, the PSFCH carries Y-bit sidelink feedback information. In addition, one PSFCH is mapped to one symbol in time domain and occupies Z PRBs in frequency domain. Y may be a positive integer greater than or equal to 1, and Z may be a positive integer greater than or equal to 1. When Y = 1, Z = 1, the PSFCH format 3 is equivalent to the PSFCH format 1; when Y = 1, Z = Q, the PSFCH format 3 is equivalent to the PSFCH format 2. When Y is greater than 1, sidelink feedback information corresponding to a plurality of TBs transmitted in one time unit may be carried in one PSFCH, so as to reduce a quantity of feedback channels required for sidelink communication.

A PSFCH time domain resource corresponding to the PSFCH may include K symbols, and K = K1 + K2. K1 symbols (corresponding to last K1 symbols in the K symbols) in the K symbols are used to transmit the PSFCH. Data in K2 symbols (corresponding to first K2 symbols in the K symbols) in the K symbols is duplicate data of data in the K1 symbols. The K2 symbols may be used by a receive-end device to perform AGC adjustment.

Optionally, the Y-bit sidelink feedback information may be carried by a first sequence. A length of the first sequence is 12. The first sequence is mapped to one PRB of the Z PRBs, and data on remaining PRBs of the Z PRBs are determined based on the first sequence.

Optionally, the Y-bit sidelink feedback information may be carried by a second sequence. A length of the second sequence is $Z \cdot N_{SC}^{RB}$. The second sequence is mapped to all subcarriers corresponding to Z PRBs, where $N_{SC}^{RB}$ denotes a quantity of subcarriers included in one PRB.

If a time unit associated with the PSFCH is used to transmit a plurality of TBs, the PSFCH format 3 is used, and multiple-bit sidelink feedback information corresponding to the plurality of TBs in one time unit may be carried by one PSFCH. This feedback manner is different from Manner 1, Manner 2 and Manner 3 mentioned above.

For example, FIG. 35 illustrates eight time units in a resource pool (namely, a time unit #0 to a time unit #7 in FIG. 35). One time unit includes two slots, and a period of a PSFCH is two time units. The PSFCH is located in time units #1, #3, #5, #7, or the like. A time interval (a minimum time interval) between a transmission resource of the PSFCH and a PSSCH transmission resource corresponding to the PSFCH is 2, namely, two time units. The PSFCH transmission resource includes five symbols, where one symbol is used to transmit a PSFCH (that is, K1 = 1, corresponding to the last symbol of the five symbols included in the PSFCH transmission resource), and the remaining four symbols are used for AGC (that is, K2 = 4, corresponding to first four symbols of the five symbols included in the PSFCH transmission resource). For simplicity, an AGC symbol located at a start position of a time unit is not shown in FIG. 35. In FIG. 35, the PSFCH occupies two PRBs in frequency domain, and the PSFCH carries 2-bit sidelink feedback information. Two PSSCHs are transmitted in the time unit #2, which are a PSSCH 1 and a PSSCH 2, respectively. PSFCH transmission resources corresponding to the PSSCH 1 and the PSSCH 2 are located in the time unit #5, and sidelink feedback information (two bits in total) of the PSSCH 1 and the PSSCH 2 is carried by one PSFCH in the time unit #5.

### Example 4: A PSFCH format 4

The PSFCH format 4 is an extension of the PSFCH format 3. For a PSFCH using the format 4, a time domain resource corresponding to the PSFCH include K symbols, of which K1 symbols (corresponding to last K1 symbols in the K symbols) are used to transmit sidelink feedback information, and K2 symbols (corresponding to first K2 symbols in the K symbols) are used for AGC. A PSFCH time domain resource carrying sidelink feedback information is one symbol. The PSFCH is mapped to one symbol in the K1 symbols (for example, the 1st symbol in K1 symbols), and remaining K1-1 symbols are used for repetition of transmission of the PSFCH. Based on repetition of transmission of the PSFCH in time domain, detection performance of the PSFCH can be improved.

Optionally, PSFCHs on K1 symbols correspond to a same frequency domain resource or different frequency domain resources.

A PSFCH in each of the K1 symbols may be a PSFCH based on the PSFCH format 3. In other words, in each symbol, one PSFCH occupies Z PRBs in frequency domain, and one PSFCH carries Y-bit information. When K1 = 1, the PSFCH format 4 is equivalent to the PSFCH format 3.

For example, FIG. 36 illustrates eight time units in a resource pool (namely, a time unit #0 to a time unit #7 in FIG. 36). One time unit includes two slots, and a period of a PSFCH is two time units. The PSFCH is located in time units #1, #3, #5, #7, or the like. A time interval between a transmission resource of the PSFCH and a PSSCH transmission resource corresponding to the PSFCH is 2, namely, two time units. The PSFCH transmission resource includes six symbols, of which two symbols (that is, K1 = 2, corresponding to last K1 symbols in the K symbols) are used to transmit the PSFCH, and the remaining four symbols (that is, K2 = 4, corresponding to first K2 symbols in the K symbols) are used for AGC. For simplicity, an AGC symbol located at the start position of a time unit is not shown in FIG. 36. In the example of FIG. 36, each PSFCH occupies two PRBs in frequency domain, that is, Z = 2; and each PSFCH carries 2-bit sidelink feedback information, that is, Y = 2. Two PSSCHs are transmitted in the time unit #2, which are a PSSCH 1 and a PSSCH 2, respectively. PSFCH transmission resources corresponding to the PSSCH 1 and the PSSCH 2 are located in the time unit #5, and sidelink feedback information (two bits in total) of the PSSCH 1 and the PSSCH 2 is carried by one PSFCH. The PSFCH occupies two PRBs in frequency domain. The PSFCH is mapped to the 1st symbol in K1 PSFCH symbols, namely, the 5th symbol in the six symbols corresponding to the PSFCH transmission resource, and the PSFCH is repeatedly mapped to the 2nd symbol of the K1 PSFCH symbols (namely, the 6th symbol in the six symbols corresponding to the PSFCH transmission resource). The PSFCH on the 6th symbol and the PSFCH on the 5th symbol may correspond to different frequency domain resources.

**Example 5: A PSFCH format 5**

If a PSFCH adopts the PSFCH format 5, one PSFCH time domain resource includes K symbols, where K = K1 + K2. K1 symbols (corresponding to last K1 symbols in the K symbols) are used to transmit sidelink feedback information, and K2 symbols (corresponding to first K2 symbols in the K symbols) are used for AGC.

A PSFCH time domain resource carrying the sidelink feedback information is the K1 symbols. Optionally, the PSFCH corresponds to a same frequency domain resource and/or code domain resource or different frequency domain resources and/or code domain resources on the K1 symbols. The PSFCH occupies Z PRBs in frequency domain, and one PSFCH carries Y-bits information.

Optionally, the Y-bit sidelink feedback information may be carried by a sequence.

For example, a length of the sequence is $Z \cdot N_{SC}^{RB} \cdot K1$, where $N_{SC}^{RB}$ denotes a quantity of subcarriers included in one PRB; sequences of every $Z \cdot N_{SC}^{RB}$ lengths are respectively mapped to Z PRBs of one symbol in the K1 symbols.

For another example, a length of the sequence is $Z \cdot N_{SC}^{RB}$. $N_{SC}^{RB}$ denotes a quantity of subcarriers included in one PRB; the sequence may be repeatedly mapped to each of the K1 symbols (in this case, the PSFCH format 5 is equivalent to the PSFCH format 4).

Optionally, the Y-bit feedback information is mapped to transmission resources corresponding to the K1 symbols after being subject to channel coding and modulation, and the transmission resources corresponding to the K1 symbols may also include a transmission resource of a PSFCH DMRS.

**Embodiment 5: Manner of determining a first PSFCH transmission resource and configuration information of a first PSFCH**

The first PSFCH transmission resource may be determined based on one or more of first information to seventh information described below.

In some implementations, the first information may be used to indicate an index of a time unit to which a first PSSCH (associated with the first PSFCH) corresponds. For example, the first information indicates that a time unit index range of the first PSSCH is [0, F1-1], where F1 is determined based on a period of a PSFCH.

In some implementations, the second information may be used to indicate slot information of the first PSSCH. The slot information of the first PSSCH may be, for example, an index of a slot in which the first PSSCH is located. Optionally, a slot index range indicated by the second information is determined based on a quantity of slots included in one time unit. For example, the slot index range of the first PSSCH is [0, F2-1], and F2 may be determined based on the quantity of slots included in one time unit.

In some implementations, the third information may be used to indicate information about a time domain resource where the first PSFCH is located. Optionally, the time domain resource information may include, for example, a symbol where the first PSFCH is located. For example, the time domain resource information may be represented as an index of the symbol where the first PSFCH is located. The index may correspond to an index (an index range is $[0, N_{symbol}^{slot} - 1]$ ) of the symbol of the first PSFCH in a slot, or the index corresponds to an index (an index range is [0, K-1]) in K symbols included in a transmission resource of the first PSFCH, or the index corresponds to an index (an index range is [0, K1 - 1]) in K1 symbols used for PSFCH transmission and included in a transmission resource of the PSFCH. $N_{symbol}^{slot}$ mentioned above denotes a quantity of symbols included in one slot, K denotes a quantity of symbols included in a PSFCH transmission resource, K1 denotes a quantity of symbols used to transmit the PSFCH in the K symbols included in the PSFCH transmission resource, and K = K1 + K2, where K2 symbols may be used for AGC.

In the example of FIG. 34, PSFCHs, namely, a PSFCH 1 and a PSFCH 2 in FIG. 34, are transmitted in the 5th symbol and the 6th symbol corresponding to a PSFCH transmission resource in a time unit #5. The first PSFCH mentioned above may be either of the PSFCH 1 and the PSFCH 2. Transmission resources corresponding to the first PSFCH may be respectively determined based on indexes of the symbol in the K1 symbols (that is, corresponding to an index 0 and an index 1 in K1 = 2 symbols).

In some implementations, the fourth information may be used to indicate a frequency domain start position of a PSSCH in a first time unit.

In some implementations, fifth information may be used to indicate a length of a frequency domain resource of the PSSCH in the first time unit.

In some implementations, the sixth information may be used to indicate a quantity of reusable cyclic shift pairs in one PRB, where the cyclic shift pair is used for transmission of the first PSFCH. The quantity of cyclic shift pairs indicated by the sixth information may be, for example, determined based on a higher layer parameter sl-NumMuxCS-Pair.

In some implementations, the seventh information may be used to indicate an identity of a terminal device. The identity of the terminal device may include a source identity (for example, denoted as $P_{ID}$). The source identity may be determined based on an information field "source ID" in SCI associated with a PSSCH. The identity of the terminal device may include a first identity (denoted as $M_{ID}$). When a value of cast type indicator (cast type indicator) indicated in the SCI associated with the PSSCH is "01", the first identity may be determined based on a member identity (member ID) of a receive-end device; otherwise, the first identity is 0.

One or some parameters in configuration information of the first PSFCH are in units of slots. In a structure based on a time unit, these parameters may be updated to be expressed in time units. Such parameters associated with the first PSFCH are described in detail below.

In some implementations, the first PSFCH is associated with a first parameter. The first parameter is used to indicate a period of the first PSFCH, and therefore the first parameter may also be referred to as a period parameter of the first PSFCH. The first parameter may be, for example, sl-PSFCH-Period. In this embodiment of this application, the first parameter may be represented based on a quantity of time units.

In some implementations, the first PSFCH is associated with a second parameter. The second parameter is used to indicate a minimum time interval between the first PSFCH and the first PSSCH (a PSSCH associated with the first PSFCH). The second parameter may be, for example, sl-MinTimeGapPSFCH. In this embodiment of this application, the second parameter is represented based on the quantity of time units. For example, the first PSSCH is located in a time unit n, and the first PSFCH is the 1st available PSFCH after a time unit n+k, or a time domain position corresponding to the first PSFCH is not earlier than a time domain position of the 1st available PSFCH in a time unit n+k, where n is an integer, and k is determined based on the second parameter.

In some implementations, the time unit of the PSFCH is determined based on a minimum time interval and a first instant. The first instant may be determined in one of the following manners: a start instant of the time unit n; an end instant of the time unit n; a start instant of the 1st symbol used to transmit the first PSSCH; an end instant of the last symbol used to transmit the first PSSCH; a start instant of the slot in which the first PSSCH is located; and an end instant of the slot in which the first PSSCH is located.

For example, FIG. 37 illustrates eight time units (namely, a time unit #0 to a time unit #7) in a resource pool. The eight time units may be any eight time units in the resource pool. As can be seen from FIG. 37, one time unit may include two slots, and a period of a PSFCH is two time units, that is, one time unit in every two time units includes one PSFCH transmission resource, and the PSFCH is located in a time unit #1, a time unit #3, a time unit #5, the time unit #7, and the like. Further, for example, in FIG. 37, a time interval (a minimum time interval) between transmission resources of the PSFCH and its corresponding PSSCH (that is, sidelink feedback information transmitted by the PSFCH is feedback information for the PSSCH) is 2, that is, two time units. As shown in FIG. 37, a transmission resource of a PSFCH corresponding to a PSSCH transmitted in the time unit #1, that is, a PSFCH in the time unit #5, is the 1st available PSFCH transmission resource located after the time unit #3.

**Embodiment 6: A DMRS pattern based on a time unit**

As can be seen from Embodiment 2, a plurality of slots included in one time unit may be used to transmit one or more PSSCHs. A quantity of symbols corresponding to one PSSCH transmission resource may be determined based on one or more of the following factors: a quantity (that is, a value of M) of slots included in one time unit; a quantity (that is, a value of B) of symbols used as GPs in one time unit; a quantity (that is, a value of A, where the value of A may be determined, for example, based on a symbol interval between a position of the 1st symbol available for sidelink transmission in one time unit or one slot and a position of the 1st symbol used for PSSCH transmission in one time unit) of symbols used for AGC in one time unit; whether a PSFCH transmission resource is included in one time unit; or a quantity of slots corresponding to one PSSCH transmission resource.

As can be seen from the foregoing illustration of a slot structure of one time unit, a quantity of symbols corresponding to a PSSCH in one time unit varies in an extremely large range, such as from a few symbols to dozens of symbols. For example, a PSSCH in a slot n+6 in FIG. 30 corresponds to three symbols. One PSSCH in FIG. 19A corresponds to 48 symbols. In addition, one PSSCH transmission resource in one time unit may occupy a plurality of slots. Therefore, a DMRS pattern based on a single-slot structure in the related art is incompatible with time unit-based sidelink transmission. This incompatibility may be reflected in the following aspects:

First, a PSSCH DMRS pattern based on a single-slot structure is not applicable for multi-slot PSSCH transmission.

Second, when one PSSCH transmission resource may span a plurality of slots, how to determine a PSSCH DMRS pattern is unclear.

Third, a PSSCH DMRS pattern based on the single-slot structure only defines a case in which the PSSCH corresponds to a maximum of 13 symbols (refer to Table 1 above), and does not support a case in which a quantity of symbols of the PSSCH exceeds 13.

Fourth, the PSSCH DMRS pattern based on the single-slot structure only defines a case in which the PSSCH corresponds to six or more than six symbols, and does not support a case in which the quantity of symbols of the PSSCH is less than 6.

Fifth, for time unit-based PSSCH transmission, how to indicate a DMRS pattern of the PSSCH by using SCI is also a problem to be resolved.

In addition to the foregoing problems, how to transmit a PSCCH DMRS in a first time unit is also a problem required to be considered.

For one or more of the foregoing problems, embodiments of this application provide a time unit-based DMRS pattern. The embodiments are described below in detail.

As shown FIG. 38, a method for sidelink transmission is provided in an embodiment of this application. The method includes step S3810, that is, a first terminal device determines a DMRS pattern of a first channel in a first time unit.

For detailed description of the first time unit, reference may be made to Embodiment 1 above, and details are not described herein again.

The first channel may include a first PSSCH or a first PSCCH. For detailed description of the first PSSCH, reference may be made to PSSCH-related content described above, such as the designing manner of a PSSCH transmission resource in the first time unit (refer to Embodiment 1), the PSSCH transmission mode (refer to Embodiment 2), and the manner of determining a TBS corresponding to a PSSCH (refer to Embodiment 3). For detailed description of the first PSCCH, reference may be made to PSCCH-related content above, such as content of a PSCCH transmission resource in the first time unit (refer to Embodiment 1) and first-order SCI (refer to Embodiment 1 and Embodiment 2).

A manner of determining the DMRS pattern of the first channel is described in detail below by using examples in which the first channels is a first PSSCH and the first channels is the first PSCCH respectively.

**Embodiment 6.1: A DMRS pattern of a first PSSCH**

The DMRS pattern (or referred to as a time domain DMRS pattern) of the first PSSCH may be determined in a plurality of manners. For example, the DMRS pattern of the first PSSCH may be determined by configuring a start position of a PSSCH DMRS symbol in the first time unit and an interval between adjacent PSSCH DMRS symbols. For another example, the DMRS pattern of the first PSSCH may be determined by extending a DMRS pattern that is based on a single slot. For another example, the DMRS pattern of the first PSSCH may be determined by specifically defining or configuring a DMRS pattern that is based on a time unit. The manner of determining the DMRS pattern of the first PSSCH is described in detail below with reference to Embodiment 6.1.1 and Embodiment 6.1.2.

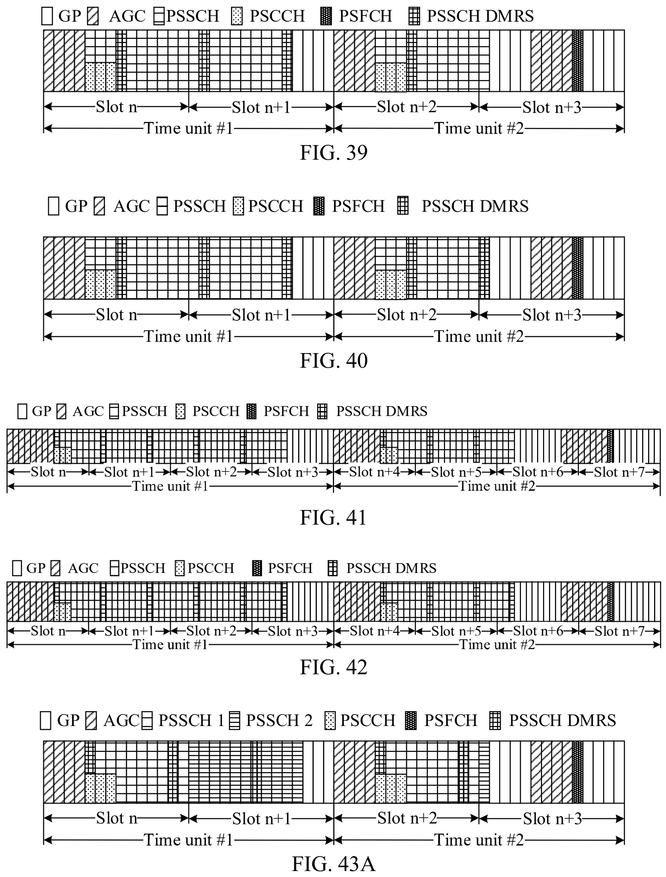

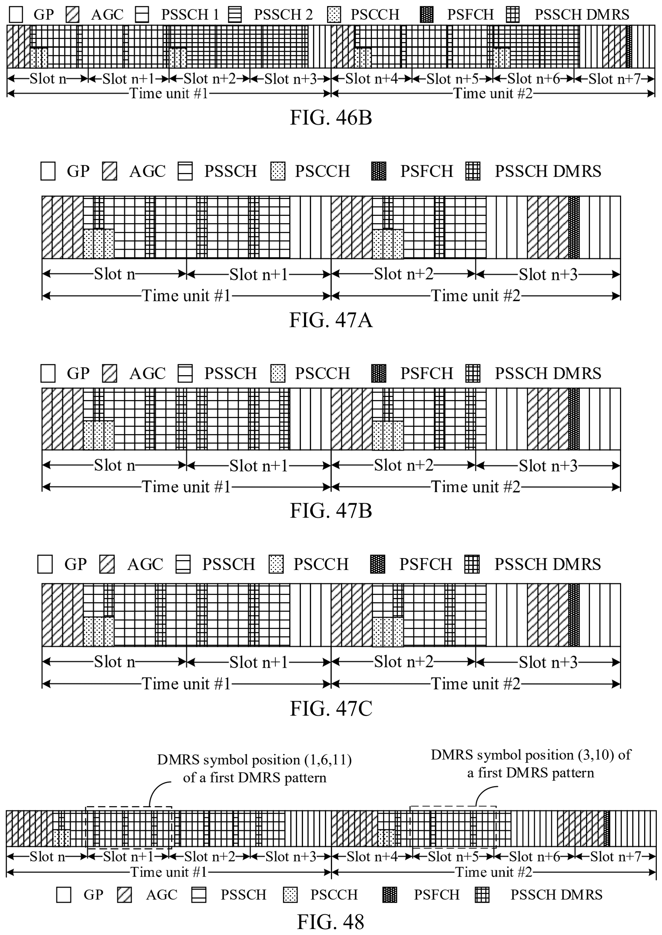

In some implementations, the last PSSCH DMRS symbol that is of the first PSSCH and that is determined based on the DMRS pattern of the first PSSCH is a first target symbol. A time domain resource that is after the first target symbol and that is used to transmit the first PSSCH occupies P symbols. If the P symbols meet a first condition, at least one symbol in the P symbols (such as the last symbol in the P symbols) is used to map a DMRS. The first condition may include, for example, one or more of the following: a quantity of symbols of the P symbols is greater than or equal to a first threshold (it should be understood that the first threshold mentioned in this embodiment is different from the first threshold mentioned in Embodiment 2); or a ratio of a quantity of symbols of the P symbols to a symbol interval (or a time interval) between two adjacent PSSCH DMRS symbols in the first PSSCH is greater than or equal to a second threshold. When there are a relatively large quantity of PSSCH symbols after the last DMRS symbol, channel estimation performance is affected. Therefore, if the last PSSCH symbol is used as a DMRS symbol, the channel estimation performance can be improved, and PSSCH detection performance can be improved. The first threshold may be, for example, 3. The second threshold may be, for example, 0.5. For detailed description, reference may be made to content related to FIG. 40 and FIG. 47B below.

In some implementations, a DMRS of the first PSSCH occupies a first PRB in frequency domain, and every H1 subcarriers in the first PRB are used to map a DMRS, where H1 is a positive integer greater than or equal to 1. H1 may be, for example, equal to 1 or 2. If H1 is equal to 1, it indicates that the DMRS is carried on all subcarriers corresponding to the first PSSCH. If H1 is equal to 2, it indicates that a subcarrier spacing between adjacent DMRSs in subcarriers corresponding to the first PSSCH is 2. For example, the DMRS may be mapped to even-numbered subcarriers, or the DMRS may be mapped to odd-numbered subcarriers.

**Embodiment 6.1.1: The DMRS pattern of the first PSSCH is determined based on first information.**

In some implementations, the first information may be configuration information.

In some implementations, the first information includes one or more of the following: information (referred to as second information below) used to determine a time domain position of the $1^{st}$ PSSCH DMRS symbol; or information (referred to as third information below) used to determine a symbol interval between two adjacent PSSCH DMRS symbols. The time domain position of the 1st PSSCH DMRS symbol may be determined based on the second information, and the symbol interval between two adjacent PSSCH DMRS symbols may be determined based on the third information. Therefore, all symbol positions corresponding to DMRS symbols of the first PSSCH may be determined based on the second information and the third information.

In this embodiment, a position of the 1st DMRS symbol of a PSSCH and an interval between adjacent DMRS symbols are configured by using the first information. This configuration manner is applicable to a case in which a quantity of PSSCH symbols is a random number, and therefore can be well applied to a scenario in which a transmission resource of the PSSCH spans a plurality of slots.

In some implementations, the second information is used to indicate a time domain position or a symbol index of the 1st PSSCH DMRS symbol in one slot.

In some implementations, the second information is used to indicate a time domain position or a symbol index of the 1st PSSCH DMRS symbol in one time unit.

In some implementations, the second information is used to indicate a time domain offset of the 1st PSSCH DMRS symbol relative to the 1st symbol corresponding to a PSSCH transmission resource. The 1st symbol corresponding to the PSSCH transmission resource is the 1st symbol used to transmit the PSSCH. Alternatively, the 1st symbol corresponding to the PSSCH transmission resource may be the 1st symbol after a symbol used for AGC. Alternatively, the 1st symbol corresponding to the PSSCH transmission resource may be the 1st symbol to which the PSSCH is mapped. Alternatively, the 1st symbol corresponding to the PSSCH transmission resource may be the 1stsymbol used for PSSCH resource assignment in one time unit. The time domain offset mentioned in this implementation may be, for example, represented by a quantity of symbols.

In some implementations, the second information is used to indicate a time domain offset of the 1st PSSCH DMRS symbol relative to the 1st symbol in one slot. The time domain offset mentioned in this implementation may be, for example, represented by a quantity of symbols.

In some implementations, the second information is used to indicate a time domain offset of the 1st PSSCH DMRS symbol relative to the 1st symbol in one time unit. The time domain offset mentioned in this implementation may be, for example, represented by a quantity of symbols.

In some implementations, the second information is used to indicate a time domain offset of the 1st PSSCH DMRS symbol relative to the 1st symbol corresponding to a PSCCH transmission resource. The time domain offset mentioned in this implementation may be, for example, represented by a quantity of symbols.

In some implementations, the second information is used to indicate a time domain offset of the 1st PSSCH DMRS symbol relative to the last symbol corresponding to a PSCCH transmission resource. The time domain offset mentioned in this implementation may be, for example, represented by a quantity of symbols.

In some implementations, the second information may simultaneously indicate a plurality of types of information in the foregoing information.

In an example, the 1st PSSCH DMRS symbol determined based on the second information is located at the 1st symbol used to transmit a PSSCH.

In another example, the 1st PSSCH DMRS symbol determined based on the second information is located at a next symbol of the PSCCH time domain resource, that is, located at a next symbol of the last time domain symbol corresponding to a transmission resource of a PSCCH.

In some implementations, the symbol interval, indicated by the third information, between two adjacent PSSCH DMRS symbols includes one or more values, and the one or more values include a first value. The first value indicates that the symbol interval between two adjacent PSSCH DMRS symbols is greater than 14 (that is, a quantity of symbols included in one slot in a case of a normal CP).

For example, a value of the third information includes but is not limited to 12, 20, 24, 28, 40, 56, or the like. Alternatively, a value of the third information may also include 4, 8, 16, or the like. The first value mentioned above may be, for example, one of 20, 24, 28, 40, or 56.

In some implementations, the first information is determined based on one or more of the following: sidelink BWP configuration information, resource pool configuration information, PC5-RRC configuration information, protocol pre-defined information, pre-configuration information, or network device configuration information.

For example, the resource pool configuration information includes the second information and the third information. A transmit-end device or a receive-end device may determine the DMRS pattern of the first PSSCH based on the second information and the third information.

For another example, the second information and the third information may be from same configuration information or different configuration information. For example, the resource pool configuration information includes the third information, and PC5-RRC or SCI includes the second information.

In some implementations, the first information may be determined based on indication information of the terminal device. The terminal device may be a transmit-end device of sidelink data, or may be a receive-end device of sidelink data.

The indication information may be carried by using SCI, a MAC CE, or PC5-RRC signalling.

In some implementations, the first information is used to configure one or more candidate DMRS patterns of a PSSCH. The DMRS pattern of the first PSSCH is a target DMRS pattern in the one or more candidate DMRS patterns.

Further, in some implementations, SCI in the first time unit (namely, SCI associated with the first PSSCH) indicates the target PSSCH DMRS pattern. For example, the resource pool configuration information includes the second information and the third information, which are used to configure one or more candidate DMRS patterns of the PSSCH. The transmit-end device may determine a corresponding target DMRS pattern when transmitting the first PSSCH, and indicate the target DMRS pattern by using SCI. The receive-end device may determine the target DMRS pattern based on the SCI.

In some implementations, the DMRS pattern of the first PSSCH is determined based on fourth information. The fourth information is used to indicate a correspondence between the first information (which may alternatively be the second information and/or the third information) and a first index. The correspondence may be configured based on configuration information. The configuration information may include one or more of the following: sidelink BWP configuration information, resource pool configuration information, PC5-RRC configuration information, protocol pre-defined information, pre-configuration information, or network device configuration information.

The correspondence may be, for example, a correspondence shown in Table 7.

Table 7

| Index corresponding to a DMRS pattern | Second information (for example, a time domain offset of the $1^{st}$ PSSCH DMRS symbol relative to the $1^{st}$ symbol used to transmit a PSSCH) | Third information (for example, a symbol interval between two adjacent PSSCH DMRS symbols) |
|---|---|---|
| 0 | 0 | 4 |
| 1 | 0 | 8 |
| 2 | 0 | 12 |
| 3 | 0 | 16 |
| 4 | 2 | 4 |
| 5 | 2 | 8 |
| 6 | 2 | 12 |
| 7 | 2 | 16 |
| 8 | 4 | 4 |
| 9 | 4 | 8 |
| 10 | 4 | 12 |
| 11 | 4 | 16 |
| 12 | 6 | 4 |
| 13 | 6 | 8 |
| 14 | 6 | 12 |
| 15 | 6 | 16 |

Further, in some implementations, the SCI in the first time unit indicates the first index. In other words, when transmitting the first PSSCH, the transmit-end device may first determine a DMRS pattern based on the correspondence, and indicate the DMRS pattern (such as an index corresponding to the DMRS pattern) to the receive-end device by using the SCI.

In some implementations, if the first time unit is used to transmit one PSSCH (refer to Embodiment 2.1 above), a transmission resource of one PSSCH may correspond to all symbols available for PSSCH transmission in the first time unit. In this case, DMRSs may be sequentially mapped, based on the first information, to all symbols available for PSSCH transmission in the first time unit. For example, the time domain position of the $1^{st}$ PSSCH DMRS symbol may be determined based on the second information, and the symbol interval between two adjacent DMRS symbols may be determined based on the third information. Then, PSSCH DMRSs may be sequentially mapped to symbols corresponding to a PSSCH transmission resource of the first time unit.

For example, FIG. 39 shows two time units, namely, a time unit #1 and a time unit #2. The first time unit mentioned above may be the time unit #1 or may be the time unit #2. In the example of FIG. 39, one time unit includes two slots, the time unit #1 includes no PSFCH transmission resource, and the time unit #2 includes a PSFCH transmission resource. PSSCH resource assignment in one time unit starts from the $5^{th}$ symbol, that is, A = 4. First four symbols of one time unit may be used for AGC, and last four symbols of one time unit are used as GPs, that is, B = 4. The PSFCH time domain resource includes five symbols, where data transmitted in first four symbols is the same as data transmitted in the $5^{th}$ symbol, and therefore, the first four symbols may be used for AGC, and the $5^{th}$ symbol is used to transmit a PSFCH. One time unit includes one PSCCH and one PSSCH. One TB is transmitted on the PSSCH. The PSSCH is mapped to two slots included in one time unit, and a PSCCH corresponding to the PSSCH occupies three symbols. It is determined based on the first information that the $1^{st}$ PSSCH DMRS symbol is located on the $1^{st}$ symbol after the last symbol of the PSCCH, and two adjacent DMRSs are spaced apart by eight symbols. Therefore, PSSCH DMRSs may be sequentially mapped to symbols corresponding to a PSSCH transmission resource of one time unit, to obtain a DMRS pattern shown in FIG. 39.

Optionally, in some embodiments, the DMRS pattern may be determined based on the second information and the third information. If it is determined based on the DMRS pattern that a quantity of symbols used to transmit the PSSCH following the last PSSCH DMRS symbol is P, and a quantity of the P symbols is greater than or equal to a first threshold, or a ratio of a quantity of the P symbols to the symbol interval between two adjacent DMRS symbols is greater than or equal to a second threshold, the last symbol corresponding to the PSSCH transmission resource is also used to map a DMRS. For example, in FIG. 39, following the last DMRS symbol in the time unit #2, there are still seven symbols used for transmitting the PSSCH (that is, P = 7). A ratio of the seven symbols to the symbol interval between adjacent DMRS symbols (namely, the eight symbols indicated by the third information) is 0.875. If the second threshold is 0.5, the last symbol of the PSSCH transmission resource is also used to map a DMRS, as shown in FIG. 40.

For example, FIG. 41 shows two time units, namely, a time unit #1 and a time unit #2. The first time unit mentioned above may be the time unit #1 or may be the time unit #2. In the example of FIG. 41, one time unit includes four slots, the time unit #1 includes no PSFCH transmission resource, and the time unit #2 includes a PSFCH transmission resource. PSSCH resource assignment in one time unit starts from the $9^{th}$ symbol, that is, A = 8. First eight symbols of one time unit may be used for AGC, and last eight symbols of one time unit are used as GPs, that is, B = 8. A PSFCH in the time unit #2 occupies nine symbols, of which eight symbols are used for AGC and one symbol is used to carry a PSFCH. In each time unit, except symbols used for AGC, used as GPs, and used for the PSFCH, remaining symbols are all symbols used to transmit a PSSCH, and each time unit is used to transmit only one PSSCH and a PSCCH corresponding to a respective time unit occupies three symbols. In the example of FIG. 41, it is determined based on the second information that the $1^{st}$ PSSCH DMRS symbol is located on the $1^{st}$ symbol used to transmit the PSSCH, and adjacent PSSCH DMRS symbols are spaced apart by eight symbols. Therefore, PSSCH DMRSs may be sequentially mapped to symbols corresponding to a PSSCH transmission resource of one time unit, to obtain a DMRS pattern shown in FIG. 41.

Further, in the time unit #1 in FIG. 41, following the last DMRS symbol, there are still seven DMRS symbols used for transmitting a PSSCH, and a ratio of the seven DMRS symbols to the symbol interval (whose value is 8) between adjacent DMRS symbols is 0.875. If the second threshold is 0.5, the last symbol of the PSSCH transmission resource may also be used to map a DMRS. In the time unit #2 in FIG. 41, following the last DMRS symbol, there are still six symbols used for transmitting PSSCHs, and a ratio of the six symbols to the symbol interval (whose value is 8) between adjacent DMRS symbols is 0.75. If the second threshold is 0.5, the last symbol of the PSSCH transmission resource may also be used to map a DMRS, as shown in FIG. 42.

In some implementations, if the first time unit is used to transmit a plurality of PSSCHs, and the plurality of PSSCHs are used to transmit a same TB (refer to Embodiment 2.2 above), because the same TB is transmitted on the plurality of PSSCHs, the plurality of PSSCHs are PSSCHs that are transmitted to a same receive-end device. Therefore, a DMRS mapping method used for the plurality of PSSCHs may be similar to a DMRS mapping method used when one time unit is used to transmit one PSSCH, that is, DMRSs are sequentially mapped, based on the first information, to all symbols in the first time unit that are used to transmit PSSCHs. For convenience of description, the DMRS mapping method is referred to as a method 1 below.

In some implementations, if the first time unit is used to transmit a plurality of PSSCHs, and the plurality of PSSCHs are used to transmit a same TB (refer to Embodiment 2.2 above), DMRSs are sequentially mapped, based on the first information, to symbols respectively corresponding to the plurality of PSSCHs. For example, for each PSSCH in the plurality of PSSCHs, a time domain position of the $1^{st}$ PSSCH DMRS symbol may be determined based on the second information, and a symbol interval between two adjacent PSSCH DMRS symbols may be determined based on the third information. Then, PSSCH DMRSs may be sequentially mapped to symbols corresponding to transmission resources of respective PSSCHs. DMRS mapping processes between different PSSCHs are independent of each other. For convenience of description, the DMRS mapping method is referred to as a method 2 below.

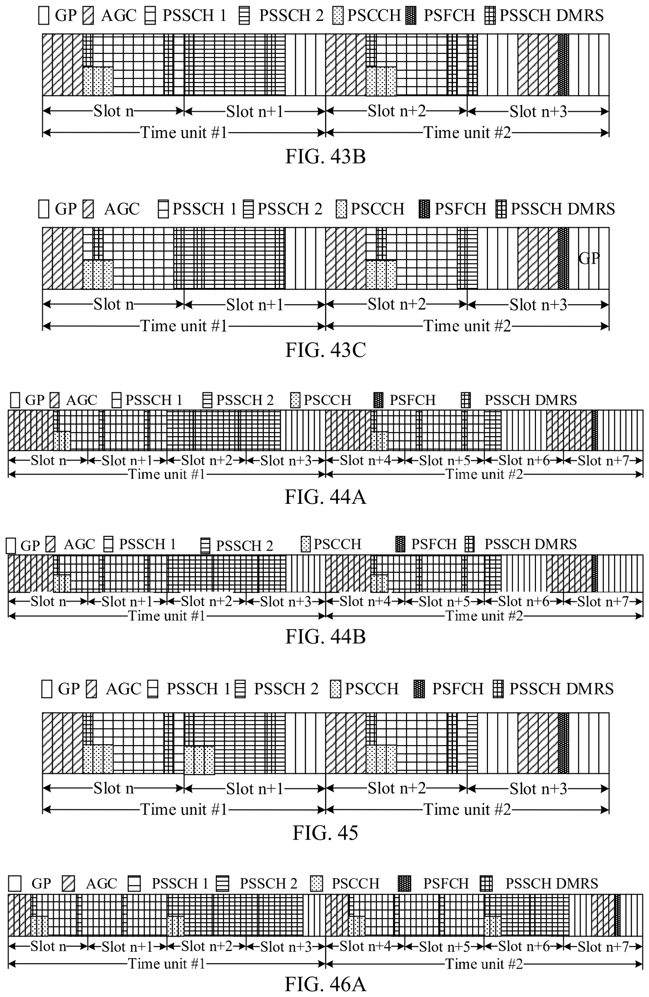

For example, FIG. 43 (including FIG. 43A to FIG. 43C) shows two time units, namely, a time unit #1 and a time unit #2. The first time unit mentioned above may be the time unit #1 or may be the time unit #2. In the example of FIG. 43, one time unit includes two slots, the time unit #1 includes no PSFCH transmission resource, and the time unit #2 includes a PSFCH transmission resource. PSSCH resource assignment in one time unit starts from the 5th symbol, that is, A = 4. First four symbols of one time unit may be used for AGC, and last four symbols of one time unit are used as GPs, that is, B = 4. Two PSSCHs are transmitted in one time unit, that is, each slot is used to transmit one PSSCH. A time domain resource of a PSCCH includes three symbols starting from the 5th symbol in one time unit. There is one symbol available for transmitting a PSSCH in the 2nd slot (namely, a slot n+3 in FIG. 43) of the time unit #2, but because both a PSSCH 2 transmitted in this slot and a PSSCH 1 transmitted in the 1st slot (namely, a slot n+2 in FIG. 43) in the time unit #2 are used to transmit different redundancy versions of a same TB, the PSSCH 2 may still be transmitted in the 2nd slot of the time unit #2. If it is determined based on the second information that the 1st DMRS symbol of a PSSCH corresponds to the 1st symbol of the PSSCH, two adjacent PSSCH DMRS symbols are spaced apart by eight symbols. If the DMRS pattern is determined by using the method 1 mentioned above, that is, DMRSs are sequentially mapped to all PSSCH symbols in one time unit based on the time domain position of the 1st DMRS symbol and the symbol interval between two adjacent PSSCH DMRS symbols, a DMRS mapping result shown in FIG. 43A may be obtained. If the DMRS pattern is determined by using the method 2 mentioned above, for each PSSCH in one time unit, a DMRS pattern is determined based on the second information and the third information, a DMRS mapping result is shown in FIG. 43B. If it is determined based on the second information that the 1st DMRS symbol of a PSSCH corresponds to the 2nd symbol of the PSSCH, two adjacent PSSCH DMRS symbols are spaced apart by eight symbols. If the DMRS pattern is determined by using the method 2 mentioned above, for each PSSCH in one time unit, a DMRS pattern is determined based on the second information and the third information, a DMRS mapping result is shown in FIG. 43C.

For another example, FIG. 44 shows two time units, namely, a time unit #1 and a time unit #2. The first time unit mentioned above may be the time unit #1 or may be the time unit #2. In the example of FIG. 44, one time unit includes four slots. PSSCH resource assignment in one time unit starts from the ninth symbol, that is, A = 8. First eight symbols of one time unit may be used for AGC, and last eight symbols of one time unit are used as GPs, that is, B = 8. One time unit is used to transmit two PSSCHs, that is, one PSSCH is transmitted in every two slots. A time domain resource of a PSCCH includes three symbols starting from the 9th symbol in one time unit. The time unit #2 includes a PSFCH transmission resource, and therefore, between the 3rd slot and the 4th slot, there are three symbols available for transmitting a PSSCH. However, because both a PSSCH 2 transmitted in this slot and a PSSCH 1 transmitted in first two slots in the time unit #2 are used to transmit different redundancy versions of a same TB, the PSSCH 2 may still be transmitted in this slot. It is determined based on the second information that the 1st DMRS symbol of a PSSCH corresponds to the 1st symbol of the PSSCH, and it is determined based on the third information that two adjacent DMRSs are spaced apart by eight symbols. If the method 1 mentioned above is used, a DMRS pattern in one time unit is shown in FIG. 44A. If the method 2 mentioned above is used, a DMRS pattern in one time unit is shown in FIG. 44B.

In some implementations, if the first time unit is used to transmit a plurality of PSSCHs, and the plurality of PSSCHs are used to transmit different TBs (refer to Embodiment 2.3 above), DMRSs are sequentially mapped, based on the first information, to all symbols available for transmitting the PSSCHs in the first time unit. For example, if a plurality of TBs are transmitted to a same receive-end device, this implementation may be used for a DMRS pattern mapping.

In some implementations, if the first time unit is used to transmit a plurality of PSSCHs, and the plurality of PSSCHs are used to transmit different TBs (refer to Embodiment 2.3 above), DMRSs are sequentially mapped, based on the first information, on symbols respectively corresponding to the plurality of PSSCHs.

For example, FIG. 45 shows two time units, namely, a time unit #1 and a time unit #2. The first time unit mentioned above may be the time unit #1 or may be the time unit #2. In the example of FIG. 45, one time unit includes two slots. PSSCH resource assignment in one time unit starts from the 5th symbol, that is, A = 4. First four symbols of one time unit may be used for AGC, and last four symbols of one time unit are used as GPs, that is, B = 4. Two PSSCHs are transmitted in one time unit, that is, each slot is used to transmit one PSSCH. The 2nd slot (namely, a slot n+3 in FIG. 45) in the time unit #2 includes only one symbol used for transmitting a PSSCH, and therefore, this slot cannot be used to transmit different transport blocks. Therefore, a PSSCH in this slot may be used to repeatedly transmit data of the 1st symbol or the last symbol of a PSSCH (namely, a PSSCH 1) in a previous slot, to improve transmission reliability. It may be determined based on the second information that the 1st DMRS symbol of a PSSCH corresponds to the 1st symbol of the PSSCH, and it may be determined based on the third information that a symbol interval between two adjacent DMRS symbols is 8. In this case, a DMRS mapping result is shown in FIG. 45. Because data of a PSSCH 2 in the 2nd slot in the time unit #2 is a repetition of data of the PSSCH 1, no DMRS may be mapped to the 1st PSSCH symbol in this slot. In some implementations, a DMRS may alternatively be mapped to the 1st PSSCH symbol in this slot.

For another example, FIG. 46 shows two time units, namely, a time unit #1 and a time unit #2. The first time unit mentioned above may be the time unit #1 or may be the time unit #2. In the example of FIG. 46, one time unit includes four slots. PSSCH resource assignment in one time unit starts from the 5th symbol, that is, A = 4. First four symbols of one time unit may be used for AGC, and last four symbols of one time unit are used as GPs, that is, B = 4. One time unit is used to transmit two PSSCHs, that is, one PSSCH is transmitted in every two slots., Different TBs are transmitted on respective PSSCHs, and each PSSCH has its corresponding PSCCH. In one time unit, first two slots are used to transmit a PSSCH 1, and last two slots are used to transmit a PSSCH 2. The time unit #2 includes a PSFCH transmission resource. It may be determined based on the second information that the 1st DMRS symbol of a PSSCH corresponds to the 1st symbol of the PSSCH, and it may be determined based on the third information that two adjacent DMRSs are spaced apart by eight symbols. A DMRS corresponding to a respective PSSCH is determined based on the foregoing information, and in this case, a DMRS mapping result is shown in FIG. 46A.

Further, in a time unit #1 in FIG. 46A, following the last DMRS symbol corresponding to a PSSCH 1, there are still seven symbols used for transmitting PSSCHs, and a ratio of the seven symbols to an interval (whose value is 8) between adjacent DMRS symbols is 0.875. If the second threshold is 0.5, the last symbol of a transmission resource of the PSSCH 1 may also be used to map a DMRS; following the last DMRS symbol corresponding to a PSSCH 2, there are still seven symbols used for transmitting PSSCHs, and a ratio of the seven symbols to an interval (whose value is 8) between adjacent DMRS symbols is 0.875, which is greater than the second threshold, and in this case, the last symbol of a transmission resource of the PSSCH 2 may also be used to map a DMRS. In a time unit #2 in FIG. 46A, following the last DMRS symbol corresponding to the PSSCH 1, there are still seven symbols used for transmitting PSSCHs, and a ratio of the seven symbols to an interval (whose value is 8) between adjacent DMRS symbols is 0.875, which is greater than the second threshold. In this case, the last symbol of a transmission resource of the PSSCH 1 may also be used to map a DMRS; and following the last DMRS symbol corresponding to the PSSCH 2, there are still six symbols used for transmitting PSSCHs, and a ratio of the six symbols to an interval (whose value is 8) between adjacent DMRS symbols is 0.75, which is greater than the second threshold, and in this case, the last symbol of a transmission resource of the PSSCH 2 may also be used to map a DMRS. A mapping result of a DMRS pattern is shown in FIG. 46B.

**Embodiment 6.1.2: The DMRS pattern of the first PSSCH is determined based on a first DMRS pattern.**

In some implementations, the first DMRS pattern is determined based on protocol predefined information, pre-configuration information, network device configuration information, or indication information transmitted by a terminal device. The terminal device may be a transmit-end device of sidelink data, or may be a receive-end device of sidelink data.

In some implementations, the first DMRS pattern is determined based on a DMRS pattern corresponding to a PSSCH transmitted in a single slot.

In some implementations, each slot in the first time unit corresponds to a same first DMRS pattern. If each slot in one time unit has a same first DMRS pattern, SCI of the time unit only needs to indicate this DMRS pattern, thereby reducing overheads of control signalling.

In some implementations, the first PSSCH is one of a plurality of PSSCHs transmitted in the first time unit. The plurality of PSSCHs correspond to a same first DMRS pattern. If a plurality of PSSCHs transmitted in one time unit have a same first DMRS pattern, SCI of the time unit only needs to indicate this DMRS pattern, thereby reducing overheads of control signalling.

In some implementations, the first PSSCH includes a plurality of slots. The plurality of slots correspond to a same first DMRS pattern.

In some implementations, the first PSSCH includes a plurality of slots. The plurality of slots have respective corresponding first DMRS patterns. In other words, each slot in the plurality of slots corresponds to one first DMRS pattern, and different slots in the plurality of slots may correspond to a same first DMRS pattern or different first DMRS patterns.

In some implementations, the first PSSCH is one of a plurality of PSSCHs transmitted in the first time unit. The plurality of PSSCHs have respective corresponding first DMRS patterns. In other words, each PSSCH in the plurality of PSSCHs corresponds to one first DMRS pattern, and different PSSCHs in the plurality of PSSCHs may correspond to a same first DMRS pattern or different first DMRS patterns.

Different PSSCHs or different slots in one time unit may correspond to different first DMRS patterns. The transmit-end device may flexibly select a DMRS pattern corresponding to a respective PSSCH based on an MCS of a transport block TB or a performance requirement, thereby ensuring transmission performance of different TBs.

In some implementations, the first DMRS pattern is used to determine a relative position between each PSSCH DMRS symbol and a target symbol in one slot. The target symbol may be a specific symbol in the slot.

For example, the target symbol may be the 1st symbol in the slot.

For another example, the target symbol may be the 1st symbol available for sidelink transmission in the slot.

For another example, the target symbol may be the 1st symbol available for PSSCH transmission in the slot.

In some implementations, SCI in the first time unit indicates the first DMRS pattern.

In some implementations, a time interval (or a symbol interval) of a DMRS symbol relative to the 1st symbol of a first PSSCH is determined based on the first DMRS pattern, and positions of one or more DMRS symbols are determined based on the time interval and a position of the 1st symbol of a PSSCH in a first slot, where the first slot is used to transmit the first PSSCH.

In some implementations, if a symbol position corresponding to the first DMRS symbol exceeds a position of the last symbol available for PSSCH transmission in the first slot, no mapping is performed on first DMRS symbol in the first slot, where the first DMRS symbol is a DMRS symbol in one or more DMRS symbols. In other words, in this implementation, mapping is performed on only part of DMRS symbols in the first DMRS pattern.

In some implementations, the first DMRS pattern corresponds to a DMRS pattern when all symbols in one slot are used for PSSCH transmission.

In some implementations, the first DMRS pattern may correspond to a first quantity of symbols in one slot. The first quantity of symbols may be defined in a plurality of manners, and two possible definition manners are provided below.

**Definition 1: The first quantity of symbols is a quantity of symbols (or a maximum quantity of symbols) available for PSSCH transmission in one slot used when a PSSCH is transmitted based on a single slot.**

In some implementations, the first DMRS pattern is a DMRS pattern applicable to a case in which a PSSCH is transmitted based on a single slot. The DMRS pattern in which the PSSCH is transmitted based on a single slot may be predefined by a protocol. For example, in an NR SL system, a protocol predefines the DMRS pattern in which PSSCH is transmitted based on a single slot, as shown in Table 1 described above. When transmitting the PSSCH, the transmit-end device may independently determine the first DMRS pattern based on Table 1, and indicate the first DMRS pattern in the SCI transmitted together with the PSSCH. For multi-slot transmission of a PSSCH, a transmission resource of one PSSCH may span a plurality of slots. In this case, the transmit-end device may determine the first DMRS pattern based on a DMRS pattern (namely, the DMRS pattern in Table 1) used when the PSSCH is transmitted in a single slot. Then, when one PSSCH is transmitted by using multiple slots, a symbol position of a DMRS of each slot in the plurality of slots corresponding to the PSSCH may be determined based on the first DMRS pattern, and the first DMRS pattern is indicated in the SCI. A DMRS pattern used when a PSSCH is transmitted based on a single slot is directly used as the first DMRS pattern, and a DMRS symbol position corresponding to a PSSCH in respective slot is determined based on the first DMRS pattern, so that forward compatibility can be achieved. It should be understood that, the DMRS pattern used when a PSSCH is transmitted based on a single slot mentioned in embodiments of this application may be a PSSCH DMRS pattern provided in a related technology (as shown in Table 1), or may be a redefined DMRS pattern used when a PSSCH is transmitted based on a single slot, or a DMRS pattern determined based on configuration information and used when a PSSCH is transmitted based on a single slot.

In some implementations, the first quantity of symbols corresponding to the first DMRS pattern is 13 or 14. For example, the first DMRS pattern corresponds to the DMRS pattern used when the PSSCH includes 13 symbols in Table 1.

In some implementations, the first DMRS pattern is determined based on Table 1. If the quantity of PSCCH symbols is 3, a DMRS pattern with a quantity of DMRS symbols of 3 may be selected as the first DMRS pattern, and thus it may be determined that intervals of DMRS symbols relative to the $1^{st}$ PSSCH symbol are 1, 6, and 11, respectively. When the first DMRS pattern is applied to multi-slot PSSCH transmission, for a slot corresponding to a respective PSSCH, time domain position of DMRS symbols in the slot may be determined based on the symbol intervals 1, 6, and 11, respectively. If a quantity of symbols available for transmitting the PSSCH in the slot is less than 12, the slot may include only part of DMRS symbols in the first DMRS pattern.

In an example in which one PSSCH is transmitted in the first time unit, several specific examples are provided below with reference to FIG. 47 and FIG. 48.

For example, FIG. 47A includes a time unit #1 and a time unit #2, and the first time unit mentioned above may be any one of the time unit #1 and the time unit #2. In FIG. 47A, one time unit is used to transmit one PSSCH. Although a transmission resource of a PSSCH spans a plurality of slots, a DMRS symbol position in each slot may be determined based on a first DMRS pattern. In FIG. 47A, the first DMRS pattern adopts a DMRS pattern corresponding to a case that "the quantity of PSSCH symbols is 13, the quantity of PSCCH symbols is 3, and a quantity of DMRS symbols is 3" in Table 1. Intervals of DMRS symbols corresponding to the first DMRS pattern relative to the $1^{st}$ PSSCH symbol are 1, 6, and 11. Then, for each slot, time domain positions of the DMRS symbols in the slot may be determined based on the relative positions. As shown in FIG. 47A, the $1^{st}$ slot (namely, a slot n) of the time unit #1 includes four AGC symbols. A time domain position of the $1^{st}$ PSSCH symbol is the $5^{th}$ symbol (symbol index 4) in the slot. In this case, the $1^{st}$ DMRS symbol position is the $6^{th}$ symbol (symbol index 5), and the $2^{nd}$ DMRS symbol position is the $11^{th}$ symbol (symbol index 10). Since a quantity of symbols available for PSSCH transmission in the slot is less than 14, only part of DMRS symbols corresponding to the first DMRS pattern can be mapped in the slot, that is, the slot does not include the $3^{rd}$ DMRS symbol corresponding to the first DMRS pattern, because a position of the $3^{rd}$ DMRS symbol determined according to the interval 11 has exceeded positions of the slot. Similarly, the $2^{nd}$ slot (namely, a slot n+1) of the time unit #1 includes four symbols that are used as GPs. The $1^{st}$ PSSCH symbol position is the $1^{st}$ symbol (symbol index 0) in the slot. In this case, the $1^{st}$ DMRS symbol position is the $2^{th}$ symbol (symbol index 1), and the $2^{nd}$ DMRS symbol position is the $7^{th}$ symbol (symbol index 6). Since a quantity of symbols available for PSSCH transmission in the slot is less than 14, only part of DMRS symbols corresponding to the first DMRS pattern are mapped in the slot, that is, the slot does not include the $3^{rd}$ DMRS symbol corresponding to the first DMRS pattern, because a position of the $3^{rd}$ DMRS symbol determined according to the interval 11 is used as a GP symbol, and cannot be used for mapping a DMRS. A manner of determining a DMRS in the $1^{st}$ slot (namely, slot n+2) in the time unit #2 is the same as a manner of determining the DMRS in the $1^{st}$ slot (slot n) in the time unit #1. The $2^{nd}$ slot (slot n+3) in the time unit #2 includes only one PSSCH symbol. The 1st DMRS symbol position determined according to the interval is the 2nd symbol of the slot, but the second symbol is used as a GP and cannot be used for mapping the DMRS. The 2nd DMRS symbol position determined according to the interval is the 7th symbol, and a position of the 7th symbol is a symbol position corresponding to a PSFCH transmission resource and cannot be used for mapping the DMRS. The 3rd DMRS symbol position determined according to the interval is the 12th symbol, and the 12th symbol is used as a GP symbol and cannot be used for mapping the DMRS. Therefore, the 2nd slot (slot n+3) in the time unit #2 includes no DMRS symbol. SCI transmitted in the time unit #1 or the time unit #2 may carry indication information to indicate the first DMRS pattern.

Optionally, when a position of the DMRS symbol in the slot is determined based on an interval corresponding to the first DMRS pattern, a quantity of symbols available for PSSCH transmission following the last DMRS symbol in the slot is greater than or equal to a first threshold; or when a ratio of a quantity of symbols used to transmit a PSSCH following the last DMRS symbol to a symbol interval between two adjacent DMRS symbols corresponding to the first DMRS pattern is greater than or equal to a second threshold, the last symbol corresponding to a PSSCH transmission resource in the slot may also be used for mapping the DMRS. For example, in FIG. 47A, in the time unit #1, there are still three symbols for transmitting the PSSCH following the last DMRS symbol in the 1st slot, and there are still three symbols for transmitting the PSSCH following the last DMRS symbol in the 2nd slot. An interval between adjacent DMRS symbols is 5. If the second threshold is 0.5, the last symbol of a PSSCH transmission resource in the 1st slot and the 2nd slot in the time unit #1 may also be used for mapping the DMRS, as shown in FIG. 47B. Similarly, the last symbol of a PSSCH transmission resource in the 1st slot of the time unit #2 may also be used for mapping the DMRS.

In addition, a relative position of each DMRS symbol relative to the 1st symbol in one slot may also be determined based on the first DMRS pattern, and a DMRS pattern in each slot may be determined based on the relative position. For example, referring to FIG. 47C, intervals of DMRS symbols corresponding to the first DMRS pattern relative to the 1st symbol in the slot are 1, 6, and 11. For the 1st slot in a time unit #1, DMRS symbol positions determined based on the first DMRS pattern should be symbols 1, 6, and 11; however, because a symbol 1 is used for AGC, and no DMRS may be mapped to this symbol, the DMRS is mapped only to symbols 6 and 11 in the slot. For the 2nd slot in the time unit #1, DMRS symbol positions determined based on the first DMRS pattern should be symbols 1, 6, and 11; however, because a symbol 11 is used as GP, and no DMRS is mapped to this symbol, the DMRS is mapped only to symbols 1 and 6 in the slot. For the 1st slot in a time unit #2, mapping of the DMRS is the same as that in the 1st slot in the time unit #1. For the 2nd slot in the time unit #2, a DMRS symbol position determined based on the first DMRS pattern should be symbols 1, 6, and 11; however, because the symbols 1 and 11 are used as GPs and the symbol 6 is used for AGC, no DMRS is mapped to these symbols, that is, the 2nd slot includes no DMRS symbol.

For example, for a transmission mode shown in FIG. 48 (that is, one PSSCH is transmitted in one time unit), although transmission resources of the PSSCH span a plurality of slots, a DMRS symbol position in each slot may be determined separately based on the first DMRS pattern. Different time units may correspond to different first DMRS patterns. For example, intervals of DMRS symbols corresponding to the 1st DMRS pattern in a time unit #1 relative to the 1st PSSCH symbol are 1, 6, and 11. A quantity of symbols corresponding to a PSSCH in the 2nd slot and the 3rd slot in the time unit #1 is 14, each slot may include three DMRS symbols, a quantity of symbols corresponding to the PSSCH in the 1st slot is 6, and thus the slot includes only one DMRS symbol. Similarly, a quantity of symbols corresponding to the PSSCH in the 4th slot is also 6, and thus the slot also includes only one DMRS symbol. Intervals of DMRS symbols corresponding to a first DMRS pattern in a time unit #2 relative to the 1st PSSCH symbol are 3 and 10. A quantity of symbols corresponding to the PSSCH in the 2nd slot is 14, which may include two DMRS symbols that are located at a symbol 3 and a symbol 10 respectively. A quantity of symbols corresponding to the PSSCH in the 1st slot is 6, and thus the slot includes only one DMRS symbol, which is located at the 12th symbol (namely, a symbol 11). A quantity of symbols corresponding to the PSSCH in the 3rd slot is 3. Based on the first DMRS pattern, the 1st DMRS symbol of the slot is located at the 4th symbol, namely, a symbol 3, and its corresponding position is used as a GP. Thus, no DMRS is mapped. SCI transmitted in the first time unit carries indication information for indicating the first DMRS pattern.

Similar to that in FIG. 47B, in this example, it may also be determined, based on comparison between a quantity of PSSCH symbols following the last DMRS in one slot and a first threshold or a second threshold, whether a DMRS is allowed to be mapped to the last PSSCH symbol, which will not be repeated herein.

It should be noted that, in FIG. 48 to FIG. 54, DMRS symbol position (x, y) or (x, y, z) of a first DMRS pattern may represent a time offset of a DMRS symbol relative to the 1st PSSCH symbol.

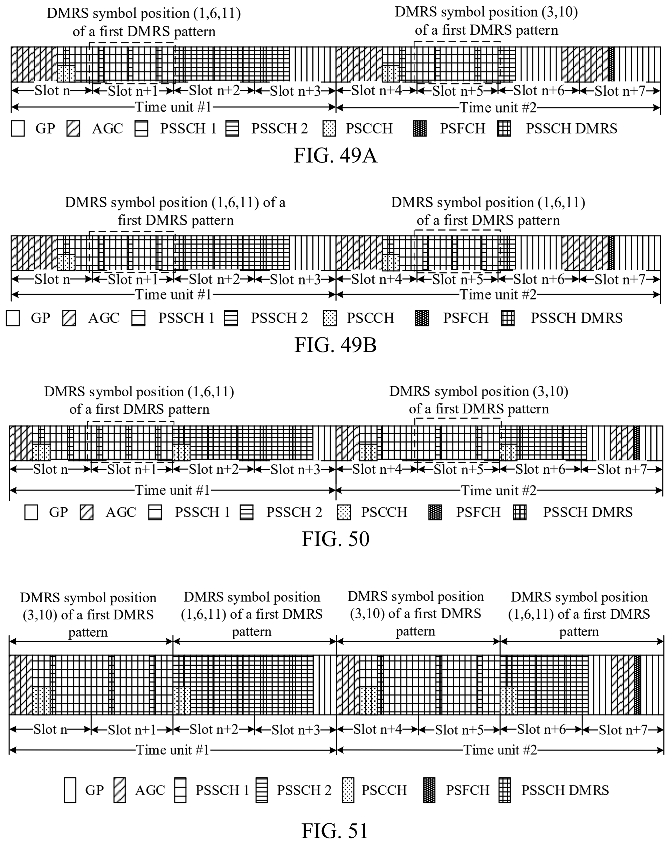

In an example in which a plurality of PSSCHs are transmitted in the first time unit and the plurality of PSSCHs correspond to a same TB, several specific examples are provided below with reference to FIG. 49.

For example, for a transmission mode shown in FIG. 49 (a plurality of PSSCHs are transmitted in one time unit, and the plurality of PSSCHs correspond to a same TB), a plurality of PSSCHs may be transmitted in one time unit, and transmission resources of each PSSCH may span a plurality of slots. In the example of FIG. 49, a DMRS symbol position in each slot may be determined separately based on a first DMRS pattern. Different time units may correspond to different first DMRS patterns. For example, in FIG. 49A, intervals between DMRS symbols corresponding to a first DMRS pattern in a time unit #1 relative to the 1st PSSCH symbol are 1, 6, and 11. A quantity of symbols corresponding to a PSSCH in the 2nd

slot and the 3rd slot in the time unit #1 is 14, and each slot may include three DMRS symbols. In the time unit #1, a quantity of symbols corresponding to the PSSCH in the 1st slot is 6, including only one DMRS symbol. Similarly, a quantity of symbols corresponding to the PSSCH in the 4th slot is also 6, also including only one DMRS symbol. Intervals of DMRS symbols corresponding to a first DMRS pattern in a time unit #2 relative to the 1st PSSCH symbol are 3 and 10. A quantity of symbols corresponding to the PSSCH in the 2nd slot is 14, and thus the slot may include two DMRS symbols located at a symbol 3 and a symbol 10 respectively. A quantity of symbols corresponding to the PSSCH in the 1st slot is 6, which includes only one DMRS symbol that is located at a symbol 12. A quantity of symbols corresponding to the PSSCH in the 3rd slot is 3. Based on the first DMRS pattern, the 1st DMRS symbol of the slot is located at the 4th symbol, namely, a symbol 3, and its corresponding position is used as a GP. Thus, no DMRS is mapped. If the time unit #2 adopts a same first DMRS pattern as that in the time unit #1, that is, intervals of DMRS symbols relative to the 1st PSSCH symbol are 1, 6, and 11, then there may be a DMRS symbol in the 3rd slot of the time unit #2, as shown in FIG. 49B.

Since PSSCHs in one time unit are used to transmit a same TB, the first time unit may include only one PSCCH, and the first DMRS pattern is indicated by SCI carried by the PSCCHs.

In an example in which a plurality of PSSCHs are transmitted in the first time unit, and the plurality of PSSCHs correspond to different TBs, a specific example is provided below with reference to FIG. 50.

For example, for a transmission mode shown in FIG. 50 (a plurality of PSSCHs are transmitted in one time unit, and the plurality of PSSCHs correspond to different TBs), transmission resources of each PSSCH may span a plurality of slots, and a DMRS symbol position in each slot may be determined based on a first DMRS pattern. Different time units may correspond to different first DMRS patterns. In the example of FIG. 50, intervals of DMRS symbols corresponding to a first DMRS pattern in a time unit #1 relative to the 1st PSSCH symbol are 1, 6, and 11. A quantity of symbols corresponding to a PSSCH in the 2nd slot and the 3rd slot in the time unit #1 is 14, and each slot may include three DMRS symbols. A quantity of symbols corresponding to the PSSCH in the 1st slot is 10, and thus the slot includes only two DMRS symbols. Similarly, a quantity of symbols corresponding to the PSSCH in the 4th slot is also 10, and thus the slot also includes only two DMRS symbols. A PSCCH associated with the PSSCH in the time unit #1 carries indication information for indicating the first DMRS pattern corresponding to the time unit #1. Intervals of DMRS symbols corresponding to a first DMRS pattern in a time unit #2 relative to the 1st PSSCH symbol are 3 and 10. A quantity of symbols corresponding to the PSSCH in the 2nd slot and the 3rd slot is 14, and thus the slot may include only two DMRS symbols located at a symbol 3 and a symbol 10 respectively. A quantity of symbols corresponding to the PSSCH in the 1st slot is 10, and thus the slot includes only one DMRS symbol that is located at a symbol 7. A quantity of symbols corresponding to the PSSCH in the 4th slot is 1, and thus based on the first DMRS pattern, the 1st DMRS symbol is located at the 4th symbol of the slot, namely, a symbol 3. Since a symbol position of the 4th symbol is used as a GP, no DMRS is mapped. A PSCCH associated with the PSSCH in the time unit #2 carries indication information for indicating the first DMRS pattern corresponding to the time unit #2.

The above description is mainly based on an example in which each slot in one time unit corresponds to a same DMRS pattern. In some other embodiments, different PSSCHs may correspond to different first DMRS patterns, or different slots may correspond to different first DMRS patterns. If a transmission resource of a PSSCH includes a plurality of slots, the plurality of slots may correspond to a same DMRS pattern or different DMRS patterns. In this case, SCI carried by a PSCCH and transmitted simultaneously with the PSSCH carries indication information for indicating a first DMRS pattern. When different slots of the PSSCH correspond to different first DMRS patterns, the indication information in the SCI includes a plurality of information fields, which are respectively corresponding to different first DMRS patterns.

For example, for a transmission mode shown in FIG. 51 (a plurality of PSSCHs are transmitted in one time unit, and the plurality of PSSCHs correspond to different TBs), a plurality of PSSCHs may be transmitted in one time unit, transmission resources of each PSSCH may span a plurality of slots, and different PSSCHs can correspond to different first DMRS patterns. In FIG. 51, intervals of DMRS symbols of a first DMRS pattern corresponding to a PSSCH 1 in a time unit #1 relative to the 1st PSSCH symbol are 3, 10. A quantity of symbols corresponding to the PSSCH 1 in the 1st slot is 10, and thus the slot includes only one DMRS symbol. A quantity of symbols corresponding to the PSSCH 1 in the 2nd slot is 14, and thus the slot includes two DMRS symbols. Indication information in a PSCCH associated with the PSSCH 1 is used to indicate the first DMRS pattern. Intervals of DMRS symbols of a first DMRS pattern corresponding to a PSSCH 2 in the time unit #1 relative to the 1st PSSCH symbol are 1 6, 11. Transmission resources of the PSSCH 2 include two slots, where a quantity of symbols corresponding to the PSSCH 2 in the 1st slot is 14, and thus the slot includes three DMRS symbols. A quantity of symbols corresponding to the PSSCH 2 in the 2nd slot is 10, and thus the slot includes two DMRS symbols. Indication information in a PSCCH associated with the PSSCH 2 is used to indicate the first DMRS pattern. Similarly, two PSSCHs in a time unit #2 also correspond to different first DMRS patterns. DMRS symbol positions of each PSSCH in each slot determined based on a first DMRS pattern are shown in FIG. 51. Details are not described herein again.

In this example, a DMRS pattern used when a PSSCH is transmitted based on a single slot is used as the first DMRS pattern to determine DMRS symbol positions corresponding to a PSSCH in each slot. In addition, different PSSCHs or different slots in one time unit may correspond to different first DMRS patterns. Thus, a transmit-end device may flexibly select a DMRS pattern corresponding to a respective PSSCH based on an MCS of a TB or a performance requirement, thereby ensuring transmission performance of different transport blocks.

**Definition 2: The first quantity of symbols is a quantity of symbols, available for PSSCH transmission, in one slot occupied by the first PSSCH.**

A difference between Definition 2 and Definition 1 is as follows: in Definition 1, a PSSCH DMRS pattern corresponding to a quantity of symbols (or a maximum quantity of symbols, denoted by J1 below) available for PSSCH transmission in one slot used when a PSSCH is transmitted based on a single slot is used as a candidate first DMRS pattern, a DMRS pattern corresponding to a PSSCH in one slot is determined based on a time interval of DMRS symbols, determined based on the first DMRS pattern, relative to the 1st PSSCH symbol, and when a quantity of PSSCH symbols in one slot is less than J1, only part of DMRS symbols corresponding to the first DMRS pattern may be mapped in the slot; and In Definition 2, a quantity of symbols available for PSSCH transmission in one slot is J2 (a value may range, for example, 1 to 14), a PSSCH DMRS pattern corresponding to the quantity J2 of symbols is used as a candidate first DMRS pattern, and thus a PSSCH of each slot has its corresponding DMRS pattern (certainly, some slots, such as a slot with a less quantity of symbols, may not have a corresponding DMRS pattern). Further, one or more DMRS patterns corresponding to the PSSCH may be indicated by indication information in SCI associated with the PSSCH.

In some implementations, a value of the first quantity of symbols is one of one or more candidate values. Each candidate value of at least part of the one or more candidate values corresponds to one or more DMRS patterns.

For example, each of the one or more candidate values corresponds to one or more DMRS patterns. In an example, a quantity of PSSCH symbols in one slot is J2, and a value of J2 ranges from 1 to 14. A DMRS pattern corresponding to a respective value of J2 may be configured, so that for a specific value of J2, one or more DMRS patterns may be configured.

For another example, each candidate value in part of the plurality of candidate values corresponds to one or more DMRS patterns, and a remaining candidate value in the plurality of candidate values except the part of candidate values has no corresponding DMRS patterns. In an example, a quantity of symbols available for transmitting a PSSCH in one slot is J2 (a value of J2 may be range from 1 to 14, for example, may be 13). When a value of J2 is greater than or equal to G (a value of G may be, for example, 6), a DMRS pattern corresponding to a respective value of J2 value is configured. For a specific value of J2, one or more DMRS patterns may be configured; when a value of J2 is less than G, no DMRS pattern may be configured. If a quantity of symbols available for transmitting a PSSCH in a slot is less than G, no DMRS may be mapped to the slot. When the first DMRS pattern is indicated by SCI, a slot to which no DMRS is to be mapped may be represented by a specific value or index value; or for a slot to which no DMRS has been mapped, a corresponding information field in the SCI may be empty, or a first DMRS pattern corresponding to the slot is not indicated.

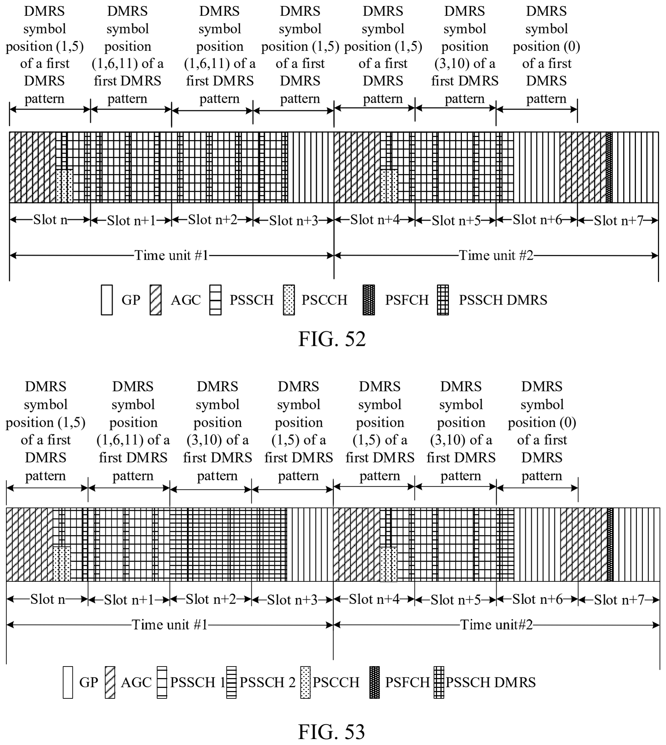

Several examples are provided below with reference to FIG. 52 to FIG. 54.

For the transmission mode shown in FIG. 52 (one time unit is used to transmit one PSSCH), transmission resources of a PSSCH span a plurality of slots, and different slots have different quantities of symbols available for transmitting a PSSCH. Therefore, a DMRS pattern (namely, the first DMRS pattern mentioned above) corresponding to a slot may be determined based on a quantity of symbols available for transmitting a PSSCH in the slot. For example, in a time unit #1, a quantity of symbols available for transmitting a PSSCH in the 1st slot is 6. Assuming that intervals of DMRS symbols in a DMRS pattern corresponding to the six symbols relative to the 1st PSSCH symbol are 1 and 5, it may be determined that positions of the two DMRS symbols in the slot are symbol 9 and symbol 13 respectively. A quantity of symbols available for PSSCH transmission in the 2nd slot is 14. Assuming that intervals of DMRS symbols in a DMRS pattern corresponding to the 14 symbols relative to the 1st PSSCH symbol are 1, 6, and 11, it may be determined that positions of the three DMRS symbols in the slot are symbols 1, 6 and 11 respectively. A quantity of symbols available for transmitting a PSSCH in the 3rd slot is also 14, and thus a DMRS pattern same as that in the 2nd slot is adopted. A quantity of symbols available for transmitting a PSSCH in the 4th slot is 6. Assuming that intervals of DMRS symbols in a DMRS pattern corresponding to the six symbols relative to the 1st PSSCH symbol are 1 and 5, it may be determined that positions of the two DMRS symbols in the slot are symbols 1 and 5 respectively. In a time unit #2, a quantity of symbols, available for transmitting a PSSCH, included in the 1st slot is 6. Assuming that intervals of DMRS symbols in a DMRS pattern corresponding to the six symbols relative to the 1st PSSCH symbol are 1 and 5, it may be determined that positions of the two DMRS symbols in the slot are symbol 9 and symbol 13 respectively. A quantity of symbols, available for transmitting a PSSCH, included in the 2nd slot is 14. Assuming that intervals of DMRS symbols in a DMRS pattern corresponding to the 14 symbols relative to the 1st PSSCH symbol are 3 and 10, it may be determined that positions of the two DMRS symbols in the slot are symbols 3 and 10 respectively. A quantity of symbols, available for transmitting a PSSCH, included in the 3rd slot is 3. Assuming that interval of DMRS symbols in a DMRS pattern corresponding to the three symbols relative to the 1st PSSCH symbol is 0, the 1st symbol (namely, symbol 0) in the slot is a DMRS symbol. Since only one PSCCH is transmitted in one time unit, indication information carried in SCI carried by the time unit may respectively indicate DMRS patterns corresponding to respective slots of the PSSCH.

For the transmission mode shown in FIG. 53 (one time unit is used to transmit a plurality of PSSCHs, and the plurality of PSSCHs correspond to a same TB), transmission resources of one PSSCH span a plurality of slots, and different slots have different quantities of symbols available for transmitting a PSSCH. Therefore, a DMRS pattern of a respective slot (namely, the first DMRS pattern mentioned above) may be determined based on a quantity of symbols available for transmitting a PSSCH in the slot. For example, in a time unit #1: a quantity of symbols, available for transmitting a PSSCH, included in the 1st slot is 6. Assuming that intervals of DMRS symbols in a DMRS pattern corresponding to the six symbols relative to the 1st PSSCH symbol are 1 and 5, it may be determined that positions of the two DMRS symbols in the slot are symbols 9 and 13 respectively. A quantity of symbols available for transmitting a PSSCH in the 2nd slot is 14. Assuming that intervals of DMRS symbols in a DMRS pattern corresponding to the 14 symbols relative to the 1st PSSCH symbol are 1, 6, and 11, it may be determined that positions of the three DMRS symbols in the slot are symbols 1, 6 and 11 respectively. A quantity of symbols available for transmitting a PSSCH in the 3rd slot is 14. Assuming that intervals of DMRS symbols in a DMRS pattern corresponding to the 14 symbols relative to the 1st PSSCH symbol are 3 and 10, it may be determined that positions of the two DMRS symbols in the slot are symbols 3 and 10 respectively. A quantity of symbols available for transmitting a PSSCH in the 4th slot is 6. Assuming that intervals of DMRS symbols in a DMRS pattern corresponding to the six symbols relative to the 1st PSSCH symbol are 1 and 5, it may be determined that positions of the two DMRS symbols in the slot are symbols 1 and 5 respectively. In a time unit #2: a quantity of symbols available for transmitting a PSSCH in the 1st slot is 6. Assuming that intervals of DMRS symbols in a DMRS pattern corresponding to the six symbols relative to the 1st PSSCH symbol are 1 and 5, it may be determined that positions of the two DMRS symbols in the slot are symbols 9 and 13 respectively. A quantity of symbols available for transmitting a PSSCH in the 2nd slot is 14. Assuming that intervals of DMRS symbols in a DMRS pattern corresponding to the 14 symbols relative to the 1st PSSCH symbol are 3 and 10, it may be determined that positions of the two DMRS symbols in the slot are symbols 3 and 10 respectively. A quantity of symbols available for transmitting a PSSCH in the 3rd slot is 3. Assuming that interval of DMRS symbols in a DMRS pattern corresponding to the three symbols relative to the 1st PSSCH symbol is 0, the 1st symbol (namely, symbol 0) in the slot is a DMRS symbol. Since only one TB is transmitted in one time unit, only one PSCCH may be used in the time unit, and indication information carried in SCI that is carried by the PSCCH respectively indicates DMRS patterns corresponding to respective slots in the time unit.

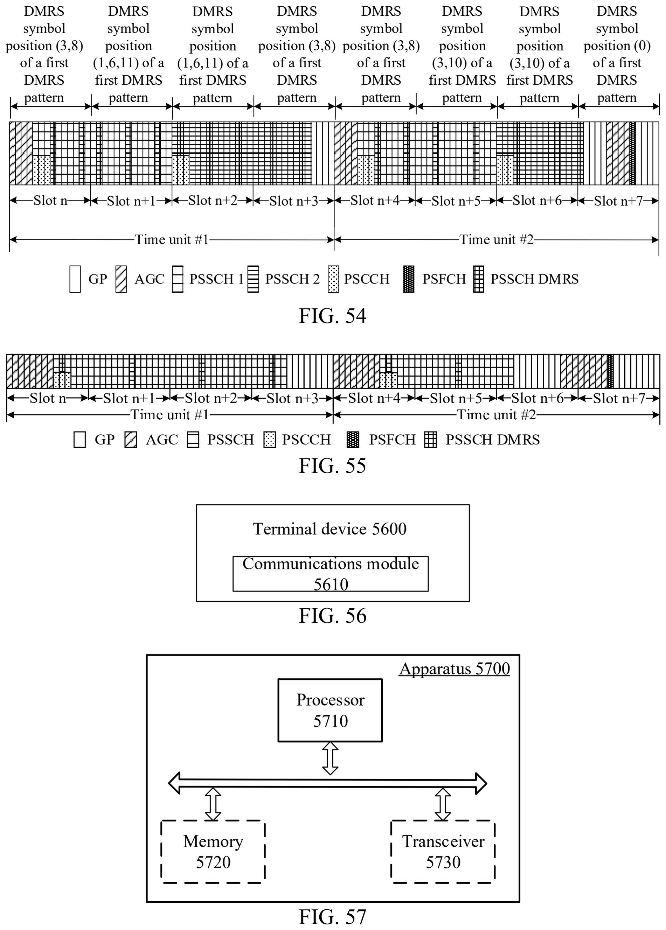

For the transmission mode shown in FIG. 54 (one time unit is used to transmit a plurality of PSSCHs, and the plurality of PSSCHs correspond to different TBs), one time unit is used to transmit two PSSCHs, each PSSCH is used for transmitting different TBs, and each PSSCH has its corresponding PSCCH. Transmission resources of one PSSCH span a plurality of slots, and different slots have different quantities of symbols available for transmitting a PSSCH. Therefore, a DMRS pattern of a respective slot may be determined based on a quantity of symbols available for transmitting a PSSCH in the slot. For example, in a time unit #1: a quantity of symbols, available for transmitting a PSSCH, included in the 1st slot is 10. Assuming that intervals of DMRS symbols in a DMRS pattern corresponding to the ten symbols relative to the 1st PSSCH symbol are 3 and 8, it may be determined that positions of the two DMRS symbols in the slot are symbols 7 and 12 respectively. A quantity of symbols available for transmitting a PSSCH included in the 2nd slot is 14. Assuming that intervals of DMRS symbols in a DMRS pattern corresponding to the 14 symbols relative to the 1st PSSCH symbol are 1, 6, and 11, it may be determined that positions of the three DMRS symbols in the slot are symbols 1, 6 and 11 respectively. The first two slots are used to transmit a PSSCH 1, and SCI in PSCCHs corresponding to the PSSCH 1 indicates DMRS patterns of the two slots respectively. A quantity of symbols available for transmitting a PSSCH included in the 3rd slot is 14. Assuming that intervals of DMRS symbols in a DMRS pattern corresponding to the 14 symbols relative to the 1st PSSCH symbol are 1, 6, and 11, it may be determined that positions of the three DMRS symbols in the slot are symbols 1, 6 and 11 respectively. A quantity of symbols, available for transmitting a PSSCH, included in the 4th slot is 10. Assuming that intervals of DMRS symbols in a DMRS pattern corresponding to the ten symbols relative to the 1st PSSCH symbol are 3 and 8, it may be determined that positions of the two DMRS symbols in the slot are symbols 3 and 8 respectively. The last two slots are used to transmit a PSSCH 2, and SCI in PSCCHs corresponding to the PSSCH 2 indicates DMRS patterns of the two slots respectively. In a time unit #2: a quantity of symbols, available for transmitting a PSSCH, included in the 1st slot is 10. Assuming that intervals of DMRS symbols in a DMRS pattern corresponding to the ten symbols relative to the 1st PSSCH symbol are 3 and 8, it may be determined that positions of the two DMRS symbols in the slot are symbols 7 and 12 respectively. A quantity of symbols, available for transmitting a PSSCH, included in the 2nd slot is 14. Assuming that intervals of DMRS symbols in a DMRS pattern corresponding to the 14 symbols relative to the 1st PSSCH symbol are 3 and 10, it may be determined that positions of the two DMRS symbols in the slot are symbols 3 and 10 respectively. The first two slots are used to transmit a PSSCH 1, and SCI in PSCCHs corresponding to the PSSCH 1 indicates DMRS patterns of the two slots respectively. A quantity of symbols, available for transmitting a PSSCH, included in the 3rd slot is 14. Assuming that intervals of DMRS symbols in a DMRS pattern corresponding to the 14 symbols relative to the 1st PSSCH symbol are 3 and 10, it may be determined that positions of the two DMRS symbols in the slot are symbols 3 and 10 respectively. A quantity of symbols, available for transmitting a PSSCH, included in the 4th slot is 1. Assuming that interval of DMRS symbols in a DMRS pattern corresponding to the one symbol relative to the 1st PSSCH symbol is 0, the 1st symbol (namely, symbol 0) in the slot is a DMRS symbol. The last two slots are used to transmit a PSSCH 2, and SCI in PSCCHs corresponding to the PSSCH 2 indicates DMRS patterns of the two slots respectively.

A DMRS pattern of one slot is used as the first DMRS pattern, and DMRS patterns corresponding to a quantity of symbols available for transmitting a PSSCH in one slot in multi-slot transmission are determined based on the quantity of symbols, so that corresponding first DMRS patterns can be selected according to quantities of PSSCHs available for transmission, included in different slots. Different PSSCHs or different slots in one time unit may correspond to different first DMRS patterns. A transmit-end device may flexibly select a DMRS pattern corresponding to a respective PSSCH based on an MCS of a TB or a performance requirement, thereby ensuring transmission performance of different TBs.

The foregoing describes in detail meaning and implementations of correspondence between a first DMRS pattern and a first quantity of symbols. In addition, the first DMRS may correspond to a first sidelink subcarrier spacing, which will be described in detail below.

In some implementations, the first DMRS pattern corresponds to a first sidelink subcarrier spacing. The first sidelink subcarrier spacing is different from a second sidelink subcarrier spacing (the second sidelink subcarrier spacing corresponds to the first time unit). The first sidelink subcarrier spacing may be referred to as a reference subcarrier spacing. The first sidelink subcarrier spacing may be, for example, 15 kHz, 30 kHz, 60 kHz, or 120 kHz. The first DMRS pattern corresponding to the first sidelink subcarrier spacing may be, for example, the DMRS pattern provided by the related technology shown in Table 1.

In some implementations, a DMRS pattern of a first PSSCH is determined based on the following information: the first DMRS pattern; the first sidelink subcarrier spacing; and the second sidelink subcarrier spacing (it should be understood that the first sidelink subcarrier and the second sidelink subcarrier may be the same as or different from the first sidelink subcarrier and the second sidelink subcarrier mentioned in Embodiment 1). The second sidelink subcarrier spacing may refer to a sidelink subcarrier spacing corresponding to the first time unit. The second sidelink subcarrier spacing may be, for example, 480 kHz or 960 kHz.

Further, in some implementations, the DMRS pattern of the first PSSCH is determined based on the following information: the first DMRS pattern; and a proportional relationship between the second sidelink subcarrier spacing and the first sidelink subcarrier spacing. For example, based on a PSSCH DMRS pattern provided by a related technology (such as the DMRS pattern shown in Table 1), an interval between adjacent DMRS symbols may be proportionally expanded according to the proportional relationship between the second sidelink subcarrier spacing and the first sidelink subcarrier, so as to determine a DMRS pattern corresponding to the second sidelink subcarrier spacing.

For example, the first sidelink subcarrier spacing is 120 kHz, and the second sidelink subcarrier spacing is 480 kHz or 960 kHz. If an interval between two adjacent DMRS symbols in a DMRS pattern is D with a subcarrier spacing of 120 kHz, a symbol interval E between two adjacent DMRS symbols with a subcarrier spacing of 480 kHz or 960 kHz may be determined according to the following formula:

$$E = 2^{\mu_{SL}-\mu_{ref}} \cdot D \cdot k$$

Herein a value of a parameter k may include one or more of the following candidate values: 0.125, 0.25, 0.5, 1, 2, 4, 8; or a value of the parameter k is related to the second sidelink subcarrier spacing; $\mu_{SL}$ may be determined based on the subcarrier spacing 480 kHz or 960 kHz; $\mu_{ref}$ may be determined based on the subcarrier spacing 120 kHz; and a relationship between a sidelink subcarrier spacing and values of $\mu_{SL}$ and $\mu_{ref}$ is shown in Table 6 described above.

For example, the first DMRS pattern belongs to the DMRS pattern shown in Table 1. According to Table 1, when a quantity of PSSCH symbols is 13, a quantity of PSCCH symbols is 3, and one slot includes four DMRS symbols, a symbol interval between adjacent DMRS symbols is 3. If the second sidelink subcarrier spacing is 480 kHz, the first subcarrier spacing is 120 kHz, and k is 1, then according to the foregoing formula, it may be determined that when the subcarrier spacing is 480 kHz, an interval between two adjacent DMRS symbols is 12. A time domain position corresponding to a DMRS symbol of a PSSCH may be determined based on the DMRS pattern.

As shown in FIG. 55, one time unit is used to transmit one PSSCH, an interval of a first DMRS relative to the 1st symbol of the PSSCH is 1, and an interval between adjacent DMRS symbols is 12. In this case, FIG. 55 shows a DMRS pattern corresponding to the PSSCH.

**Embodiment 6.2: A DMRS pattern of a first PSCCH**

In some implementations, all symbols corresponding to the first PSCCH are used to map a DMRS.

In some implementations, part of symbols corresponding to the first PSCCH are used to map a DMRS. No DMRS may be mapped to a remaining symbol corresponding to the first PSCCH.

In some implementations, a symbol corresponding to the first PSCCH and used to map a DMRS may be the 1st symbol of the first PSCCH.

In some implementations, a DMRS of the first PSCCH occupies one or more PRBs in frequency domain. In an example of a specific PRB (hereinafter referred to as a second PRB) in the one or more PRBs, a DMRS is mapped on every H2 subcarriers in the second PRB. H2 is a positive integer greater than or equal to 1. H2 may be equal to, for example, 1 or 2. If H2 is equal to 1, it indicates that the DMRS is carried on all subcarriers corresponding to the first PSCCH. If H2 is equal to 2, it indicates that a subcarrier spacing between adjacent DMRSs in subcarriers corresponding to the first PSCCH is 2.

For example, the DMRS may be mapped to even-numbered subcarriers, or the DMRS may be mapped to odd-numbered subcarriers.

It should be noted that, the foregoing embodiments are mainly described by using an example in which one slot includes 14 symbols (corresponding to a normal cyclic prefix), but embodiments of this application are also applicable to a case in which one slot includes 12 OFDM symbols (corresponding to an extended cyclic prefix).

It should also be noted that, the "symbol" mentioned in the foregoing embodiments may also be referred to as a "time domain symbol" or a "sidelink symbol". The "symbol" mentioned in embodiments of this application may refer to, for example, an OFDM symbol.

It should also be noted that, in the foregoing embodiments regarding a PSFCH, the description is made by using a PSFCH carrying "sidelink feedback information" as an example. It should be understood that, the PSFCH mentioned in embodiments of this application may also be used to carry conflict indication information. In other words, the sidelink feedback information mentioned above may be replaced by conflict indication information.

It should also be noted that, a symbol or time domain resource provided in embodiments of this application being before or after another symbol or time domain resource refers to the symbol or time domain resource being earlier and later the another symbol or time domain resource in time domain or in terms of time. For example, a symbol 1 being before a symbol 2 may be understood as a time corresponding to the symbol 1 is earlier than a time corresponding to the symbol 2.

It should also be noted that, a PSSCH 1 and a PSSCH 2 in FIG. 23 are only used to distinguish between two different PSSCHs transmitted in one time unit, and PSSCHs transmitted in different time units are usually different from each other. For example, a PSSCH 1 in a time unit #1 is different from a PSSCH 1 transmitted in a time unit #2; similarly, a PSSCH 2 in the time unit #1 is different from a PSSCH 2 transmitted in the time unit #2. In addition to FIG. 23, the meaning of the PSSCH in other figures including a plurality of time units is similar. Even if a plurality of PSSCHs in different time units use a same number, the PSSCHs are usually different from each other, such as the PSSCHs in FIG. 24 to FIG. 31.

The method embodiments of this application are described above in detail with reference to FIG. 1 to FIG. 55. Apparatus embodiments of this application are described below in detail with reference to FIG. 56 and FIG. 57. It should be understood that the description of the method embodiments corresponds to the description of the apparatus embodiments, and therefore, for a part that is not described in detail, reference may be made to the foregoing method embodiments.

FIG. 56 is a schematic structural diagram of a terminal device according to an embodiment of this application. The terminal device 5600 may be, for example, a transmit-end device or a receive-end device. The terminal device 5600 may be, for example, the first terminal device mentioned above. The terminal device 5600 may include a communications module 5610. The communications module 5610 may be configured to perform sidelink transmission or sidelink reception in a first time unit. The first time unit includes consecutive M slots, and M is a positive integer greater than 1.

In some implementations, a value of M is determined based on one or more of the following: protocol predefined information; resource pool configuration information; or BWP configuration information.

In some implementations, the M slots are consecutive M physical slots; or the M slots are consecutive slots available for sidelink transmission.

In some implementations, the first time unit includes a first guard symbol, the first guard symbol includes consecutive B symbols, and the B symbols are last B symbols of the first time unit, where B is a positive integer greater than 1

In some implementations, if the first time unit includes a first time domain resource for transmitting a physical sidelink feedback channel PSFCH, the first time unit includes a second guard symbol, the second guard symbol includes consecutive B symbols, the B symbols in the second guard symbol are located before the first time domain resource, and B is a positive integer greater than 1.

In some implementations, a value of B is equal to 4; or a value of B is equal to 8.

In some implementations, a value of B is equal to 4, and a sidelink subcarrier spacing corresponding to the first time unit is 480 kHz; or a value of B is equal to 8, and a sidelink subcarrier spacing corresponding to the first time unit is 960 kHz.

In some implementations, a value of B is determined based on one or more of the following: protocol predefined information; resource pool configuration information; or sidelink BWP configuration information.

In some implementations, the resource pool configuration information or the sidelink BWP configuration information includes first indication information, and the value of B is determined based on the first indication information. The first indication information is used to indicate one or more of the following: the value of B; a time domain position of the 1st symbol available for sidelink transmission in one slot or in one time unit, a length or quantity of symbols available for sidelink transmission in one time unit; or a quantity of slots included in one time unit, where one time unit includes consecutive M slots.

In some implementations, the value of B is determined based on a first sidelink subcarrier spacing and a second sidelink subcarrier spacing. The first sidelink subcarrier spacing is determined based on sidelink BWP configuration information, the sidelink BWP configuration information is used for configuring a BWP corresponding to the first time unit, and the second subcarrier spacing is determined based on protocol predefined information, resource pool configuration information or sidelink BWP configuration information.

In some implementations, the second subcarrier spacing is 120 kHz.

In some implementations, the first time unit includes two adjacent slots, a third guard symbol is set between symbols used for sidelink transmission in the two slots, and the third guard symbol includes C symbols, where C is a positive integer greater than or equal to 1.

In some implementations, a value of C is 1 or 2.

In some implementations, the third guard symbol corresponds to last C symbols of a former slot in the two slots.

In some implementations, a value of C is determined based on one or more of the following: protocol predefined information; resource pool configuration information; or sidelink BWP configuration information.

In some implementations, in a case that the first time unit is used to transmit a plurality of physical sidelink shared channels PSSCHs, a fourth guard symbol is set between transmission resources of two adjacent PSSCHs in the plurality of PSSCHs, and the fourth guard symbol includes D symbols, where D is a positive integer greater than or equal to 1.

In some implementations, a value of D is 1 or 2.

In some implementations, the fourth guard symbol corresponds to last D symbols of the last slot in slots occupied by a former PSSCH in the two PSSCHs.

In some implementations, a value of D is determined based on one or more of the following: protocol predefined information; resource pool configuration information; or sidelink BWP configuration information.

In some implementations, at least one slot in the M slots includes no guard symbol; and/or the last slot in the M slots includes a guard symbol, and a remaining slot in the M slots except the last slot includes no guard symbol; and/or in a case that the first time unit includes a time domain resource for transmitting a PSFCH, at least one of the last slot or the second-to-last slot in the M slots includes a guard symbol; and/or a guard symbol is set between symbols used for sidelink transmission in adjacent slots in the M slots.

In some implementations, the first time unit includes a second time domain resource for transmitting a physical sidelink control channel PSCCH, and a starting symbol of the second time domain resource is the $(A+1)^{th}$ symbol of the first time unit, where A is a positive integer greater than 1.

In some implementations, the PSCCH occupies Q physical resource blocks PRBs in frequency domain, the PSCCH is used for scheduling a PSSCH, and frequency domain start positions of the Q PRBs are the same as a frequency domain start position of the PSSCH, where Q is a positive integer greater than or equal to 1.

In some implementations, a value of Q is determined based on one or more of the following: protocol predefined information; resource pool configuration information; or sidelink BWP configuration information.

In some implementations, the first time unit includes a third time domain resource for transmitting a PSSCH, and a starting symbol of the third time domain resource is the $(A+1)^{th}$ symbol of the first time unit, where A is a positive integer greater than 1.

In some implementations, in a case that the first time unit includes no PSFCH transmission resource, an end symbol of the third time domain resource is a previous symbol of a symbol corresponding to a first guard symbol; or in a case that the first time unit includes a PSFCH transmission resource, an end symbol of the third time domain resource is a previous symbol of a symbol corresponding to a second guard symbol. The first guard symbol includes last B symbols of the first time unit, and the second guard symbol includes B symbols located before the PSFCH transmission resource, where B is a positive integer greater than 1.

In some implementations, a value of A is determined based on one or more of the following: protocol predefined information; resource pool configuration information; or sidelink BWP configuration information.

In some implementations, the resource pool configuration information or the sidelink BWP configuration information includes the second indication information, and the value of A is determined based on the second indication information. The second indication information is used to indicate one or more of the following: the value of A; a time domain position of the $1^{st}$ symbol available for transmitting a PSSCH in one time unit; a time domain position of the $1^{st}$ symbol available for transmitting a PSCCH in one time unit; or a time domain position of the $1^{st}$ symbol available for sidelink transmission in one slot or in one time unit, where one time unit includes consecutive M slots.

In some implementations, the value of A is determined based on a third sidelink subcarrier spacing and a fourth sidelink subcarrier spacing. The third sidelink subcarrier spacing is determined based on sidelink BWP configuration information, the sidelink BWP configuration information is used for configuring a BWP corresponding to the first time unit, and the fourth subcarrier spacing is determined based on protocol predefined information, resource pool configuration information or sidelink BWP configuration information.

In some implementations, the fourth subcarrier spacing is 120 kHz.

In some implementations, a value of A is equal to 4; or a value of A is equal to 8.

In some implementations, a value of A is equal to 4, and a sidelink subcarrier spacing corresponding to the first time unit is 480 kHz; or a value of A is equal to 8, and a sidelink subcarrier spacing corresponding to the first time unit is 960 kHz.

In some implementations, data in first A symbols of the first time unit is duplicate data of data in a target symbol of the first time unit. The target symbol includes one or more symbols in remaining symbols in the first time unit except the first A symbols, where A is a positive integer greater than 1.

In some implementations, the target symbol is one of: the $(A+1)^{th}$ symbol to the $2A^{th}$ symbol of the first time unit; and the $(A+1)^{th}$ symbol of the first time unit.

In some implementations, the first time unit includes a fourth time domain resource for transmitting a PSFCH, and the fourth time domain resource includes K symbols, where K is a positive integer greater than 1.

In some implementations, a value of K is determined based on one or more of the following: protocol predefined information; resource pool configuration information; or sidelink BWP configuration information.

In some implementations, the fourth time domain resource is located in the $1^{st}$ slot or the last slot of the first time unit.

In some implementations, the K symbols include K1 symbols and K2 symbols, the K1 symbols are used to transmit a PSFCH, and data in the K2 symbols is duplicate data of data in the K1 symbols, where K1 and K2 are positive integers, and K is equal to a sum of K1 and K2.

In some implementations, a value of K1 or K2 is determined based on one or more of the following: protocol predefined information; resource pool configuration information; or sidelink BWP configuration information.

In some implementations, K1 = 1, and K2 = A; or K1 = A, and K2 = A. Herein A is a positive integer greater than 1, and a value of A is determined based on a time domain position of the $1^{st}$ symbol corresponding to a transmission resource of a PSSCH in the first time unit.

In some implementations, if K1 is greater than 1, each of the K1 symbols is used to transmit one PSFCH.

In some implementations, if K1 = 1, data in each symbol of the K2 symbols is duplicate data of data in the K1 symbols; or in a case that K1 is greater than 1, data in every L symbols from the back to the front of the K2 symbols is duplicate data of data in the K1 symbols; or in a case that K1 is greater than 1, data in every L symbols from the front to the back of the K2 symbols is duplicate data of data in the K1 symbols, where L = K1.

In some implementations, the PSFCH occupies X PRBs in frequency domain, and X is a positive integer greater than or equal to 1.

In some implementations, in a case that X is greater than 1, sidelink feedback information in the PSFCH is carried by a first sequence, a length of the first sequence is equal to T, and the first sequence is mapped to one PRB of the X PRBs, and data in remaining PRBs in the X PRBs except the one PRB is determined based on the first sequence; or in a case that X is greater than 1, sidelink feedback information in the PSFCH is carried by a second sequence, a length of the second sequence is determined based on a value of X*T, and the second sequence is mapped to all or part of subcarriers corresponding to the X PRBs, where T is equal to a quantity of subcarriers included in one PRB.

In some implementations, the first time unit includes a transmission resource of first-stage sidelink control information SCI, the first-stage SCI includes an information field for indicating time domain resource assignment, a value of the information field for indicating time domain resource assignment is determined based on a time offset of remaining W-1 transmission resources in W transmission resources except the $1^{st}$ transmission resource relative to the $1^{st}$ transmission resource, and the time offset is expressed based on a quantity of time units, where a value of W is determined based on a quantity of transmission resources indicated by the first-stage SCI, and one time unit includes consecutive M slots.

In some implementations, a sidelink transmission resource corresponding to the sidelink transmission or the sidelink reception is determined based on first DCI, and the first DCI includes third indication information. The third indication information may be used to indicate one of the following: a time interval between receiving of the first DCI and the sidelink transmission resource; a time interval between a slot where the first DCI is located and a first time unit where the sidelink transmission resource is located; and a time interval between a start time of a downlink slot carrying the first DCI and a start time of the sidelink transmission resource. The time interval is expressed based on a quantity of time units, and one time unit includes consecutive M slots.

In some implementations, the terminal device further includes: a determining module, configured to determine a first reservation period based on one or more of the following: a second reservation period indicated by indication information in SCI; or a quantity of time units in a resource pool, where the first reservation period is expressed based on a quantity of time units, the second reservation period is expressed based on milliseconds, and one time unit includes consecutive M slots.

In some implementations, the first reservation period $P'_{rsvp}$ satisfies: $P'_{rsvp} = \left\lceil \frac{T'_{max}}{10240\ ms} \times P_{rsvp} \right\rceil$,

where $P_{rsvp}$ denotes the second reservation period, and $T'_{max}$ denotes a quantity of time units included in the resource pool in 10240 ms.

In some implementations, a period of a PSFCH is expressed based on a quantity of time units; and one time unit includes consecutive M slots.

In some implementations, the period of the PSFCH is indicated based on fourth indication information, and the fourth indication information belongs to resource pool configuration information.

In some implementations, the first time unit is used to transmit one PSSCH.

In some implementations, the first time unit is further used to transmit one PSCCH and/or one second-stage SCI.

In some implementations, the second-stage SCI is mapped starting from the 1st physical sidelink shared channel demodulation reference signal PSSCH DMRS symbol of the first time unit; or in a case that the 1st PSSCH DMRS symbol of the first time unit does not include a subcarrier capable of being used to map the second-stage SCI, the second-stage SCI is mapped starting from a next symbol of the 1st PSSCH DMRS symbol; or the second-stage SCI is mapped starting from the 1st symbol corresponding to a PSSCH transmission resource in the first time unit; or the second-stage SCI is mapped starting from the 1st symbol corresponding to a PSCCH transmission resource in the first time unit.

In some implementations, the first time unit may be used for transmitting R PSSCHs, where R is a positive integer greater than 1.

In some implementations, the R PSSCHs are used to transmit a same TB.

In some implementations, the R PSSCHs correspond to R redundancy versions, respectively.

In some implementations, the R redundancy versions are determined based on fifth indication information carried in SCI, and the fifth indication information is used to indicate one of the following: the 1st redundancy version in the R redundancy versions; and each of the R redundancy versions.

In some implementations, the first time unit is further used to transmit one PSCCH and one second-stage SCI.

In some implementations, the second-stage SCI is mapped starting from the 1st PSSCH DMRS symbol of the first time unit; or in a case that the 1st PSSCH DMRS symbol of the first time unit does not include a subcarrier capable of being used to map the second-stage SCI, the second-stage SCI is mapped starting from the next symbol of the 1st PSSCH DMRS symbol; or the second-stage SCI is mapped starting from the 1st symbol corresponding to a PSSCH transmission resource in the first time unit; or the second-stage SCI is mapped starting from the 1st symbol corresponding to a PSCCH transmission resource in the first time unit.

In some implementations, the R PSSCHs correspond to a same hybrid automatic repeat request HARQ process.

In some implementations, the R PSSCHs are used to transmit different TBs.

In some implementations, the R PSSCHs correspond to a same receive-end; or the R PSSCHs do not correspond to a same receive-end device; or the R PSSCHs correspond to a same spatial domain transmission filter; or the R PSSCHs do not correspond to a same spatial domain transmission filter.

In some implementations, the first time unit is further used to transmit R PSCCHs and R second-stage SCIs, the R PSCCHs are in a one-to-one correspondence with the R PSSCHs, and the R second-stage SCIs are in a one-to-one correspondence with the R PSSCHs.

In some implementations, second-stage SCI corresponding to a respective PSSCH in the R PSSCHs is mapped starting from the 1st PSSCH DMRS symbol corresponding to the respective PSSCH; or second-stage SCI corresponding to a respective PSSCH in the R PSSCHs is mapped starting from the 1st symbol corresponding to the respective PSSCH; or second-stage SCI corresponding to a respective PSSCH in the R PSSCHs is mapped starting from the 1st symbol of a target PSCCH, where the target PSCCH corresponds to the respective PSSCH.

In some implementations, the first time unit is further used to transmit one PSCCH and one second-stage SCI.

In some implementations, the second-stage SCI includes a first information field, the first information field includes R information sub-fields, and the R information sub-fields are respectively used to indicate HARQ process numbers of the R PSSCHs.

In some implementations, the second-stage SCI includes a second information field, the second information field includes R information sub-fields, and the R information sub-fields are respectively used to indicate whether data transmitted by the R PSSCHs is new data.

In some implementations, the second-stage SCI includes a third information field, the third information field includes R information sub-fields, and the R information sub-fields are respectively used to indicate redundancy versions of data transmitted by the R PSSCHs.

In some implementations, the second-stage SCI includes a fourth information field and a fifth information field, the fourth information field is used to indicate a source identity, the fifth information field is used to indicate a destination identity, and both the source identity and the destination identity are determined based on a layer-2 identity.

In some implementations, in a case that the R PSSCHs do not correspond to a same receive-end device, the fifth information field includes R information sub-fields, and the R information sub-fields are respectively used to indicate destination identities corresponding to the R PSSCHs.

In some implementations, the second-stage SCI includes a sixth information field, the sixth information field is used to indicate activation or deactivation of sidelink feedback, and indication of the sixth information field is applicable to the R PSSCHs; or the second-stage SCI includes a sixth information field, the sixth information field includes R information sub-fields, and the R information sub-fields are respectively used to indicate whether the R PSSCHs are used to activate or deactivate sidelink feedback.

In some implementations, the second-stage SCI includes a seventh information field, the seventh information field is used to indicate a transmission type, and indication of the seventh information field is applicable to the R PSSCHs; or the second-stage SCI includes a seventh information field, the seventh information field includes R information sub-fields, and the R information sub-fields are respectively used to indicate transmission types corresponding to the R PSSCHs.

In some implementations, the second-stage SCI includes an eighth information field, and the eighth information field is used to indicate whether a receive-end device is required to report channel state information CSI; and when a value of the eighth information field is a first value, one of the following is satisfied: transmission resources of the R PSSCHs all carry a CSI-RS; and a target PSSCH in the R PSSCHs carries a CSI-RS, where the target PSSCH is the 1st PSSCH, the last PSSCH, or a PSSCH determined based on configuration information in the R PSSCHs.

In some implementations, the second-stage SCI includes a ninth information field, and the ninth information field is used to carry a transmission configuration indication TCI state indication. The ninth information field satisfies one of the following conditions: indication of the ninth information field is applicable to the R PSSCHs; in a case that the R PSSCHs do not correspond to a same receive-end device or the R PSSCHs do not correspond to a same spatial domain transmission filter, the ninth information field includes R information sub-fields, and the R information sub-fields are respectively used to indicate TCI states corresponding to the R PSSCHs; and in a case that the R PSSCHs do not correspond to a same receive-end device or the R PSSCHs do not correspond to a same spatial domain transmission filter, the ninth information field includes R information sub-fields, and the R information sub-fields are respectively used to determine spatial domain transmission filters or spatial domain reception filters corresponding to the R PSSCHs.

In some implementations, the first time unit is further used to transmit one PSCCH and R second-stage SCIs, and the R second-stage SCIs are in a one-to-one correspondence with the R PSSCHs.

In some implementations, second-stage SCI corresponding to a respective PSSCH in the R second-stage SCIs is mapped starting from the 1st PSSCH DMRS symbol corresponding to the respective PSSCH; or second-stage SCI corresponding to a respective PSSCH in the R PSSCH is mapped starting from the 1st symbol corresponding to the respective PSSCH.

In some implementations, first-stage SCI in the PSCCH includes a tenth information field, the tenth information field is used to indicate an SCI format of a second-stage SCI, and the R second-stage SCIs use a same SCI format or different SCI formats.

In some implementations, first-stage SCI in the PSCCH includes an eleventh information field, the eleventh information field is used to carry priority indication information, and a value of the eleventh information field is determined based on a highest priority or a lowest priority of priorities corresponding to the R PSSCHs; or first-stage SCI in the PSCCH includes an eleventh information field, and the eleventh information field includes R information sub-fields, and the R information sub-fields are respectively used to indicate priorities corresponding to the R PSSCHs.

In some implementations, first-stage SCI in the PSCCH includes a twelfth information field, the twelfth information field is used to carry a beta offset indication, and the beta offset indication is applicable to the R second-stage SCIs.

In some implementations, first-stage SCI in the PSCCH includes a thirteenth information field, the thirteenth information field is used to indicate a quantity of DMRS ports, and the quantity of DMRS ports is applicable to the R PSSCHs.

In some implementations, first-stage SCI in the PSCCH includes a fourteenth information field, the fourteenth information field is used to indicate a modulation and coding scheme MCS, and the R PSSCHs all use the MCS.

In some implementations, first-stage SCI in the PSCCH includes a fifteenth information field, the fifteenth information field is used to indicate an MCS table, and the R PSSCHs all use the MCS table.

In some implementations, the R PSSCHs include a first PSSCH, and a time domain resource of the first PSSCH includes S slots, where S is determined based on a quotient of M and R.

In some implementations, $S = M/R - T$, where $T = 0$, 1 or 2.

In some implementations, if the first PSSCH corresponds to first R-1 PSSCHs in the R PSSCHs, $T = 0$; and/or if the first PSSCH corresponds to the last PSSCH in the R PSSCHs, $T = 1$ or 2.

In some implementations, a value of R is determined based on protocol predefined information, pre-configuration information or network device configuration information.

In some implementations, in a case that a quantity of symbols available for transmitting a PSSCH in a first slot is less than a first threshold, one of the following is satisfied: the first slot is not used for transmitting a PSSCH and/or second-stage SCI; data of a PSSCH in the first slot is determined based on a redundant bit, a padding bit, or a random bit; and data of a PSSCH in the first slot is duplicate data of data in a previous slot of the first slot, where the first slot is any slot or the last slot of S slots, and the S slots are used to transmit a first PSSCH in the R PSSCHs.

In some implementations, the first threshold is determined based on protocol predefined information, pre-configuration information or network device configuration information.

In some implementations, the TBS corresponding to the PSSCH in the first time unit is determined based on one or more of the following: a first parameter, determined based on the quantity of REs; a second parameter, determined based on the quantity of PRBs; a third parameter, determined based on the transmission resources occupied by the PSCCH; and a fourth parameter, determined based on the transmission resources occupied by the second-stage SCI.

In some implementations, the first parameter is determined based on one or more of the following: a fifth parameter, determined based on a quantity of symbols available for transmitting the PSSCH; a sixth parameter, determined based on a quantity of subcarriers in one PRB; a seventh parameter, determined based on an overhead in one PRB or in a frequency domain range corresponding to one PRB; or an eighth parameter, determined based on a quantity of REs occupied by one PRB or a DMRS in a frequency domain range corresponding to one PRB.

In some implementations, the fifth parameter is determined based on one or more of the following: a ninth parameter, determined based on a quantity of slots corresponding to a transmission resource occupied by one PSSCH; a tenth parameter, determined based on a quantity of symbols included in one slot; an eleventh parameter, determined based on a quantity of symbols used for AGC; a twelfth parameter, determined based on a quantity of symbols corresponding to a guard symbol; a thirteenth parameter, determined based on a time domain resource corresponding to a PSFCH; a fourteenth parameter, determined based on a time interval between the $1^{st}$ symbol corresponding to a transmission resource of a PSSCH and the $1^{st}$ symbol in one time unit; or a fifteenth parameter, determined based on a quantity of symbols of duplicate data used for transmitting PSSCH data in one time unit, where one time unit comprises consecutive M slots.

In some implementations, the fifth parameter is determined based on one or more of the following: protocol predefined information; pre-configuration information; network device configuration information; or indication information transmitted by a terminal device that transmits a PSSCH.

In some implementations, in a case that the first time unit is used to transmit a PSSCH and the first time unit is used to transmit only one PSCCH, the third parameter is determined based on a transmission resource occupied by the PSCCH; or in a case that the first time unit is used to transmit a plurality of PSSCHs and the plurality of PSSCHs correspond to a same TB, and the first time unit is used to transmit only one PSCCH, then the third parameter is determined based on a transmission resource occupied by the PSCCH; or in a case that the first time unit is used to transmit a plurality of PSSCHs and the plurality of PSSCHs correspond to a plurality of different TBs, and the first time unit is used to transmit only one PSCCH, then the third parameter is determined based on a transmission resource occupied by the PSCCH; or in a case that the first time unit is used to transmit a plurality of PSSCHs and the plurality of PSSCHs correspond to a plurality of different TBs, and the first time unit is used to transmit one or more PSCCHs, then the third parameter is determined based on a sum of transmission resources occupied by the one or more PSCCHs and/or a quantity of the PSCCHs.

In some implementations, in a case that the first time unit is used to transmit one PSSCH and the first time unit is used to transmit only one second-stage SCI, the fourth parameter is determined based on a transmission resource occupied by the second-stage SCI; or in a case that the first time unit is used to transmit a plurality of PSSCHs and the plurality of PSSCHs correspond to a same TB, and the first time unit is used to transmit only one second-stage SCI, then the fourth parameter is determined based on a transmission resource occupied by the second-stage SCI; or in a case that the first time unit is used to transmit a plurality of PSSCHs and the plurality of PSSCHs correspond to a plurality of different TBs, and the first time unit is used to transmit only one second-stage SCI, then the fourth parameter is determined based on a transmission resource occupied by the second-stage SCI; or in a case that the first time unit is used to transmit a plurality of PSSCHs and the plurality of PSSCHs correspond to a plurality of different TBs, and the first time unit is used to transmit one or more second-stage SCIs, then the fourth parameter is determined based on a sum of transmission resources occupied by the one or more second-stage SCIs and/or a quantity of the second-stage SCIs.

FIG. 57 is a schematic structural diagram of an apparatus according to an embodiment of this application. Dashed lines in FIG. 57 indicate that a unit or module is optional. The apparatus 5700 may be configured to implement the methods described in the foregoing method embodiments. The apparatus 5700 may be a chip or a terminal device.

The apparatus 5700 may include one or more processors 5710. The processor 5710 may support the apparatus 5700 in implementing the methods described in the foregoing method embodiments. The processor 5710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 5700 may further include one or more memories 5720. The memory 5720 stores a program, and the program may be executed by the processor 5710, to cause the processor 5710 to execute the methods described in the foregoing method embodiments. The memory 5720 may be separate from the processor 5710 or may be integrated into the processor 5710.

The apparatus 5700 may further include a transceiver 5730. The processor 5710 may communicate with another device or chip by using the transceiver 5730. For example, the processor 5710 may transmit data to and receive data from another device or chip by using the transceiver 5730.

An embodiment of this application further provides a computer-readable storage medium for storing a program. The computer-readable storage medium may be applied to the terminal device provided in embodiments of this application, and the program causes a computer to execute the methods performed by the terminal device in various embodiments of this application.

An embodiment of this application further provides a computer program product. The computer program product includes a program. The computer program product may be applied to the terminal device provided in embodiments of this application, and the program causes a computer to execute the methods performed by the terminal device in various embodiments of this application.

An embodiment of this application further provides a computer program. The computer program may be applied to the terminal device provided in embodiments of this application, and the computer program causes a computer to execute the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indirectly indicates B, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink transmission method, comprising:

   receiving or transmitting, by a first terminal device, a first physical sidelink feedback channel PSFCH in a first time unit,
   wherein the first PSFCH is used to carry first sidelink feedback information corresponding to one or more physical sidelink shared channels PSSCH in a second time unit; and
   any one of the first time unit and the second time unit comprises consecutive M slots, wherein M is a positive integer greater than 1.

2. The method according to claim 1, wherein the first sidelink feedback information is 1-bit sidelink feedback information.

3. The method according to claim 2, wherein

   the one or more PSSCHs are used to carry one transport block TB; and
   the first sidelink feedback information is sidelink feedback information corresponding to the one TB.

4. The method according to claim 2, wherein

   the one or more PSSCHs are used to carry a plurality of TBs; and
   the first sidelink feedback information is determined based on sidelink feedback information corresponding to the plurality of TBs.

5. The method according to claim 4, wherein the first sidelink feedback information is determined based on an AND operation result of the sidelink feedback information respectively corresponding to the plurality of TBs.

6. The method according to claim 4 or 5, wherein

   if the sidelink feedback information corresponding to the plurality of TBs is all acknowledgements ACK, a value of the first sidelink feedback information is a first value; and/or
   if sidelink feedback information corresponding to at least one TB in the plurality of TBs is a negative acknowledgement NACK, a value of the first sidelink feedback information is a second value.

7. The method according to claim 2, wherein

   the one or more PSSCHs are used to carry a plurality of TBs; and
   the first PSFCH is one of a plurality of PSFCHs corresponding to the plurality of TBs, and the plurality of PSFCHs are respectively used to carry sidelink feedback information corresponding to the plurality of TBs.

8. The method according to claim 7, wherein

   time domain resources corresponding to the plurality of PSFCHs are the same, and frequency domain resources and/or code domain resources corresponding to the plurality of PSFCHs are different; or
   time domain resources corresponding to the plurality of PSFCHs are different, and frequency domain resources and/or code domain resources corresponding to the plurality of PSFCHs are the same; or
   time domain resources corresponding to the plurality of PSFCHs are different, and frequency domain resources and/or code domain resources corresponding to the plurality of PSFCHs are different.

9. The method according to claim 1, wherein the first sidelink feedback information is sidelink feedback information that comprises a plurality of bits.

10. The method according to claim 9, wherein

    the one or more PSSCHs are used to carry a plurality of TBs; and
    the sidelink feedback information that comprises the plurality of bits respectively corresponds to the plurality of TBs.

11. The method according to any one of claims 1 to 10, wherein the first PSFCH occupies one physical resource block PRB in frequency domain.

12. The method according to claim 11, wherein the first PSFCH carries the first sidelink feedback information based on a first sequence, and a length of the first sequence is equal to a quantity of subcarriers comprised in one PRB.

13. The method according to any one of claims 1 to 10, wherein the first PSFCH occupies a plurality of PRBs in frequency domain.

14. The method according to claim 13, wherein the first PSFCH carries the first sidelink feedback information based on a first sequence, a length of the first sequence is equal to a quantity of subcarriers comprised in one PRB, the first sequence is mapped to one PRB in the plurality of PRBs, and data in a remaining PRB in the plurality of PRBs except the one PRB is determined based on the first sequence.

15. The method according to claim 13, wherein the first PSFCH carries the first sidelink feedback information based on a second sequence, a length of the second sequence is determined based on a product of a quantity of the plurality of PRBs and a quantity of subcarriers comprised in one PRB, and the second sequence is mapped to the plurality of PRBs.

16. The method according to any one of claims 1 to 15, wherein the first time unit comprises a PSFCH time domain resource, the PSFCH time domain resource comprises K symbols; and the K symbols comprise K1 symbols and K2 symbols, the K1 symbols are used to transmit a PSFCH, and data in the K2 symbols is duplicate data of data in the K1 symbols, wherein K1 and K2 are positive integers, and K is equal to a sum of K1 and K2.

17. The method according to claim 16, wherein a value of K1 is 1.

18. The method according to claim 16, wherein a value of K1 is greater than 1.

19. The method according to claim 18, wherein a quantity of symbols corresponding to the first PSFCH is less than K1, and the K1 symbols are used to repeatedly transmit a plurality of first PSFCHs.

20. The method according to claim 19, wherein

    different PSFCHs in the plurality of first PSFCHs correspond to a same frequency domain resource; or
    different PSFCHs in the plurality of first PSFCHs correspond to different frequency domain resources.

21. The method according to claim 18, wherein a quantity of symbols corresponding to the first PSFCH is K1.

22. The method according to claim 21, wherein a transmission resource corresponding to the K1 symbols is further used to transmit a demodulation reference signal DMRS.

23. The method according to any one of claims 16 to 22, wherein a value of K or K1 is determined based on a quantity of TBs transmitted in the second time unit.

24. The method according to any one of claims 16 to 23, wherein a value of K1 or K2 is determined based on one or more of following information:

    protocol predefined information;
    resource pool configuration information; or
    sidelink BWP configuration information.

25. The method according to any one of claims 16 to 23, wherein a value of K1 or K2 is determined based on a first sidelink subcarrier spacing and a second sidelink subcarrier spacing,
    wherein the first sidelink subcarrier spacing is determined based on sidelink bandwidth part BWP configuration information, the sidelink BWP configuration information is used to configure a BWP corresponding to the first time unit or the second time unit, and the second subcarrier spacing is determined based on protocol predefined information, resource pool configuration information, or sidelink BWP configuration information.

26. The method according to claim 25, wherein the second subcarrier spacing is 120 kHz.

27. The method according to any one of claims 1 to 26, wherein a quantity of bits comprised in the first sidelink feedback information is determined based on a quantity of TBs transmitted in the second time unit.

28. The method according to any one of claims 1 to 27, wherein a transmission resource of the first PSFCH is determined based on one or more of following information:

    first information, used to indicate an index of a time unit corresponding to a first PSSCH associated with the first PSFCH;
    second information, used to indicate an index of a slot in which the first PSSCH is located;
    third information, used to indicate a symbol in which the first PSFCH is located;
    fourth information, used to indicate a frequency domain start position of a PSSCH in the first time unit;
    fifth information, used to indicate a length of a frequency domain resource of a PSSCH in the first time unit;
    sixth information, used to indicate a quantity of reusable cyclic shift pairs in one PRB; or
    seventh information, used to indicate an identity of a terminal device,
    wherein the cyclic shift pairs are used to transmit the first PSFCH.

29. The method according to claim 28, wherein a range of the index of the slot indicated by the second information is determined based on a quantity of slots comprised in one time unit.

30. The method according to any one of claims 1 to 29, wherein the first PSFCH is associated with a first parameter, the first parameter is used to indicate a period of the first PSFCH, and the first parameter is expressed based on a quantity of time units, wherein one time unit comprises consecutive M slots.

31. The method according to any one of claims 1 to 30, wherein the first PSFCH is associated with a second parameter, the second parameter is used to indicate a minimum time interval between the first PSFCH and a first PSSCH, and the second parameter is expressed based on a quantity of time units, wherein the first PSSCH is associated with the first PSFCH, and one time unit comprises consecutive M slots.

32. The method according to claim 31, wherein the first PSSCH is located in a time unit n, the first PSFCH is a $1^{st}$ available PSFCH after a time unit n+k, or a time domain position corresponding to the first PSFCH is not earlier than a time domain position of a $1^{st}$ available PSFCH of the time unit n+k, wherein n is a positive integer greater than or equal to 1, and k is determined based on the second parameter.

33. The method according to claim 32, wherein the minimum time interval is a minimum time interval relative to a first instant, and the first instant is determined based on one of following manners:

    a start instant of the time unit n;
    an end instant of the time unit n;
    a start instant of a $1^{st}$ symbol used to transmit the first PSSCH;

an end instant of a last symbol used to transmit the first PSSCH;
a start instant of a slot in which the first PSSCH is located; and
an end instant of the slot in which the first PSSCH is located.

34. The method according to any one of claims 1 to 33, wherein a value of M is determined based on one or more of following:

protocol predefined information;
resource pool configuration information; or
sidelink BWP configuration information.

35. The method according to claim 34, wherein the M slots are consecutive M physical slots, or the M slots are consecutive slots available for sidelink transmission.

36. The method according to any one of claims 1 to 35, wherein the first time unit comprises a first guard symbol, the first guard symbol comprises consecutive B symbols, and the B symbols are last B symbols of the first time unit, wherein B is a positive integer greater than 1.

37. The method according to any one of claims 1 to 36, wherein the first time unit comprises a first time domain resource used to transmit a PSFCH, the first time unit comprises a second guard symbol, the second guard symbol comprises consecutive B symbols, and the B symbols in the second guard symbol are located before the first time domain resource, wherein B is a positive integer greater than 1.

38. The method according to claim 36 or 37, wherein a value of B is equal to 4, or a value of B is equal to 8.

39. The method according to claim 38, wherein

the value of B is equal to 4, and a sidelink subcarrier spacing corresponding to the first time unit is 480 kHz; or
the value of B is equal to 8, and a sidelink subcarrier spacing corresponding to the first time unit is 960 kHz.

40. The method according to any one of claims 36 to 39, wherein a value of B is determined based on one or more of following information:

protocol predefined information;
resource pool configuration information; or
sidelink BWP configuration information.

41. The method according to claim 40, wherein the resource pool configuration information or the sidelink BWP configuration information comprises first indication information, and the value of B is determined based on the first indication information,
wherein the first indication information is used to indicate one or more of following:

the value of B;
a time domain position of a $1^{st}$ symbol available for sidelink transmission in one slot or in one time unit;
a length or quantity of symbols available for sidelink transmission in one time unit; or
a quantity of slots comprised in one time unit,
wherein one time unit comprises consecutive M slots.

42. The method according to any one of claims 36 to 39, wherein a value of B is determined based on a first sidelink subcarrier spacing and a second sidelink subcarrier spacing,
wherein the first sidelink subcarrier spacing is determined based on sidelink BWP configuration information, the sidelink BWP configuration information is used to configure a BWP corresponding to the first time unit, and the second subcarrier spacing is determined based on protocol predefined information, resource pool configuration information, or sidelink BWP configuration information.

43. The method according to claim 42, wherein the second subcarrier spacing is 120 kHz.

44. The method according to any one of claims 1 to 43, wherein the first time unit comprises two adjacent slots, a third guard symbol is set between symbols used for sidelink transmission in the two slots, and the third guard symbol comprises C symbols, wherein C is a positive integer greater than or equal to 1.

45. The method according to claim 44, wherein a value of C is 1 or 2.

46. The method according to claim 44 or 45, wherein the third guard symbol corresponds to last C symbols of a former slot in the two slots.

47. The method according to any one of claims 44 to 46, wherein a value of C is determined based on one or more of following:

protocol predefined information;
resource pool configuration information; or
sidelink BWP configuration information.

48. The method according to any one of claims 1 to 47, wherein if the first time unit is used to transmit a plurality of PSSCHs, a fourth guard symbol is set between transmission resources of two adjacent PSSCHs in the plurality of PSSCHs, and the fourth guard symbol comprises D symbols, wherein D is a positive integer greater than or equal to 1.

49. The method according to claim 48, wherein a value of D is 1 or 2.

50. The method according to claim 48 or 49, wherein the fourth guard symbol corresponds to last D symbols of a last slot in slots occupied by a former PSSCH in the two PSSCHs.

51. The method according to any one of claims 48 to 50, wherein a value of D is determined based on one or more of following:

protocol predefined information;
resource pool configuration information; or
sidelink BWP configuration information.

52. The method according to any one of claims 1 to 51, wherein

at least one slot in the M slots does not comprise a guard symbol; and/or,
a last slot in the M slots comprises a guard symbol, and remaining slots in the M slots except the last slot do not comprise a guard symbol; and/or,
if the first time unit comprises a time domain resource used to transmit a PSFCH, at least one of a last slot or a second-to-last slot in the M slots comprises a guard symbol; and/or,
a guard symbol is set between symbols used for sidelink transmission in adjacent slots in the M slots.

53. The method according to any one of claims 1 to 52, wherein the first time unit comprises a second time domain resource used to transmit a physical sidelink control channel PSCCH, and a starting symbol of the second time domain resource is an $(A+1)^{th}$ symbol of the first time unit, wherein A is a positive integer greater than 1.

54. The method according to claim 53, wherein the PSCCH occupies Q PRBs in frequency domain, the PSCCH is used to schedule a PSSCH, and frequency domain start positions of the Q PRBs are the same as a frequency domain start position of the PSSCH, wherein Q is a positive integer greater than or equal to 1.

55. The method according to claim 54, wherein a value of Q is determined based on one or more of following:

protocol predefined information;
resource pool configuration information; or
sidelink BWP configuration information.

56. The method according to any one of claims 1 to 55, wherein the first time unit comprises a third time domain resource used to transmit a PSSCH, and a starting symbol of the third time domain resource is an $(A+1)^{th}$ symbol of the first time unit, wherein A is a positive integer greater than 1.

57. The method according to claim 56, wherein
an end symbol of the third time domain resource is a previous symbol of symbols corresponding to a second guard symbol, wherein the second guard symbol comprises B symbols before a transmission resource of the PSFCH, and B is a positive integer greater than 1.

58. The method according to any one of claims 53 to 57, wherein a value of A is determined based on one or more of following information:

protocol predefined information;
resource pool configuration information; or
sidelink BWP configuration information.

59. The method according to claim 58, wherein the resource pool configuration information or the sidelink BWP configuration information comprises second indication information, and the value of A is determined based on the second indication information,
wherein the second indication information is used to indicate one or more of following:

the value of A;
a time domain position of a $1^{st}$ symbol available for transmitting a PSSCH in one time unit;
a time domain position of a $1^{st}$ symbol available for transmitting a PSCCH in one time unit; or
a time domain position of a $1^{st}$ symbol available for sidelink transmission in one slot or in one time unit,
wherein one time unit comprises consecutive M slots.

60. The method according to any one of claims 53 to 57, wherein a value of A is determined based on a first sidelink subcarrier spacing and a second sidelink subcarrier spacing,
wherein the first sidelink subcarrier spacing is determined based on sidelink BWP configuration information, the sidelink BWP configuration information is used to configure a BWP corresponding to the first time unit, and the second subcarrier spacing is determined based on protocol predefined information, resource pool configuration information, or sidelink BWP configuration information.

61. The method according to claim 60, wherein the second subcarrier spacing is 120 kHz.

62. The method according to any one of claims 53 to 61, wherein

a value of A is equal to 4; or
a value of A is equal to 8.

63. The method according to claim 62, wherein

in a case that the value of A is equal to 4, a sidelink subcarrier spacing corresponding to the first time unit is 480 kHz; or
in a case that the value of A is equal to 8, and a sidelink subcarrier spacing corresponding to the first time unit is 960 kHz.

64. The method according to any one of claims 1 to 63, wherein data in first A symbols of the first time unit is duplicate data of data in a target symbol of the first time unit,
wherein the target symbol comprises one or more symbols in remaining symbols in the first time unit except the first A symbols, and A is a positive integer greater than 1.

65. The method according to claim 64, wherein the target symbol is one of following:

an $(A+1)^{th}$ symbol to a $2A^{th}$ symbol of the first time unit; and
an $(A+1)^{th}$ symbol of the first time unit.

66. The method according to any one of claims 1 to 65, wherein the first time unit comprises a fourth time domain resource used to transmit a PSFCH, and the fourth time domain resource is located in a $1^{st}$ slot or a last slot of the first time unit.

67. The method according to any one of claims 1 to 66, wherein the first time unit comprises a transmission resource of first-stage sidelink control information SCI, the first-stage SCI comprises an information field used to indicate time domain resource assignment, a value of the information field that indicates time domain resource assignment is determined based on a time offset of remaining W-1 transmission resources in W transmission resources except a 1st transmission resource relative to the 1st transmission resource, and the time offset is expressed based on a quantity of time units, wherein a value of W is determined based on a quantity of transmission resources indicated by the first-stage SCI, and one time unit comprises consecutive M slots.

68. The method according to any one of claims 1 to 67, wherein a sidelink transmission resource corresponding to the first terminal device is determined based on first downlink control information DCI, and the first DCI comprises third indication information,
wherein the third indication information is used to indicate one of following:

a time interval between receiving of the first DCI and the sidelink transmission resource;
a time interval between a slot in which the first DCI is located and the first time unit in which the sidelink transmission resource is located; and
a time interval between a start instant of a downlink slot that carries the first DCI and a start instant of the sidelink transmission resource,
wherein the time interval is expressed based on a quantity of time units, and one time unit comprises consecutive M slots.

69. The method according to any one of claims 1 to 68, wherein the method further comprises:
determining, by the first terminal device, a first reservation period based on one or more of following:

a second reservation period indicated by indication information in SCI; or
a quantity of time units in a resource pool,
wherein the first reservation period is expressed based on a quantity of time units, the second reservation period is expressed based on milliseconds, and one time unit comprises consecutive M slots.

70. The method according to claim 69, wherein the first reservation period $P'_{\text{rsvp}}$ satisfies:

$$P'_{\text{rsvp}} = \left\lceil \frac{T'_{max}}{10240\ ms} \times P_{\text{rsvp}} \right\rceil,$$

wherein $P_{\text{rsvp}}$ denotes the second reservation period, and $T'_{max}$ denotes a quantity of time units comprised in the resource pool in 10240 ms.

71. The method according to any one of claims 1 to 70, wherein a period of the first PSFCH is expressed based on a quantity of time units, and one time unit comprises consecutive M slots.

72. The method according to claim 71, wherein the period of the first PSFCH is indicated based on fourth indication information, and the fourth indication information belongs to resource pool configuration information.

73. A terminal device, wherein the terminal device is a first terminal device, and the first terminal device comprises:

a communications module, configured to receive or transmit a first physical sidelink feedback channel PSFCH in a first time unit,
wherein the first PSFCH is used to carry first sidelink feedback information corresponding to one or more physical sidelink shared channels PSSCH in a second time unit; and
any one of the first time unit and the second time unit comprises consecutive M slots, wherein M is a positive integer greater than 1.

74. The terminal device according to claim 73, wherein the first sidelink feedback information is 1-bit sidelink feedback information.

75. The terminal device according to claim 74, wherein

the one or more PSSCHs are used to carry one transport block TB; and

the first sidelink feedback information is sidelink feedback information corresponding to the one TB.

76. The terminal device according to claim 74, wherein

the one or more PSSCHs are used to carry a plurality of TBs; and
the first sidelink feedback information is determined based on sidelink feedback information corresponding to the plurality of TBs.

77. The terminal device according to claim 76, wherein the first sidelink feedback information is determined based on an AND operation result of the sidelink feedback information respectively corresponding to the plurality of TBs.

78. The terminal device according to claim 76 or 77, wherein

if the sidelink feedback information corresponding to the plurality of TBs is all acknowledgements ACK, a value of the first sidelink feedback information is a first value; and/or
if sidelink feedback information corresponding to at least one TB in the plurality of TBs is a negative acknowledgement NACK, a value of the first sidelink feedback information is a second value.

79. The terminal device according to claim 74, wherein

the one or more PSSCHs are used to carry a plurality of TBs; and
the first PSFCH is one of a plurality of PSFCHs corresponding to the plurality of TBs, and the plurality of PSFCHs are respectively used to carry sidelink feedback information corresponding to the plurality of TBs.

80. The terminal device according to claim 79, wherein

time domain resources corresponding to the plurality of PSFCHs are the same, and frequency domain resources and/or code domain resources corresponding to the plurality of PSFCHs are different; or
time domain resources corresponding to the plurality of PSFCHs are different, and frequency domain resources and/or code domain resources corresponding to the plurality of PSFCHs are the same; or
time domain resources corresponding to the plurality of PSFCHs are different, and frequency domain resources and/or code domain resources corresponding to the plurality of PSFCHs are different.

81. The terminal device according to claim 73, wherein the first sidelink feedback information is sidelink feedback information that comprises a plurality of bits.

82. The terminal device according to claim 81, wherein

the one or more PSSCHs are used to carry a plurality of TBs; and
the sidelink feedback information that comprises the plurality of bits respectively corresponds to the plurality of TBs.

83. The terminal device according to any one of claims 73 to 82, wherein the first PSFCH occupies one physical resource block PRB in frequency domain.

84. The terminal device according to claim 83, wherein the first PSFCH carries the first sidelink feedback information based on a first sequence, and a length of the first sequence is equal to a quantity of subcarriers comprised in one PRB.

85. The terminal device according to any one of claims 73 to 82, wherein the first PSFCH occupies a plurality of PRBs in frequency domain.

86. The terminal device according to claim 85, wherein the first PSFCH carries the first sidelink feedback information based on a first sequence, a length of the first sequence is equal to a quantity of subcarriers comprised in one PRB, the first sequence is mapped to one PRB in the plurality of PRBs, and data in remaining PRBs in the plurality of PRBs except the one PRB is determined based on the first sequence.

87. The terminal device according to claim 85, wherein the first PSFCH carries the first sidelink feedback information based on a second sequence, a length of the second sequence is determined based on a product of a quantity of the plurality of PRBs and a quantity of subcarriers comprised in one PRB, and the second sequence is mapped to the plurality of PRBs.

88. The terminal device according to any one of claims 73 to 87, wherein the first time unit comprises a PSFCH time domain resource, the PSFCH time domain resource comprises K symbols; and the K symbols comprise K1 symbols and K2 symbols, the K1 symbols are used to transmit a PSFCH, and data in the K2 symbols is duplicate data of data in the K1 symbols, wherein K1 and K2 are positive integers, and K is equal to a sum of K1 and K2.

89. The terminal device according to claim 88, wherein a value of K1 is 1.

90. The terminal device according to claim 88, wherein a value of K1 is greater than 1.

91. The terminal device according to claim 90, wherein a quantity of symbols corresponding to the first PSFCH is less than K1, and the K1 symbols are used to repeatedly transmit a plurality of first PSFCHs.

92. The terminal device according to claim 91, wherein

different PSFCHs in the plurality of first PSFCHs correspond to a same frequency domain resource; or
different PSFCHs in the plurality of first PSFCHs correspond to different frequency domain resources.

93. The terminal device according to claim 90, wherein a quantity of symbols corresponding to the first PSFCH is K1.

94. The terminal device according to claim 93, wherein a transmission resource corresponding to the K1 symbols is further used to transmit a demodulation reference signal DMRS.

95. The terminal device according to any one of claims 88 to 94, wherein a value of K or K1 is determined based on a quantity of TBs transmitted in the second time unit.

96. The terminal device according to any one of claims 88 to 95, wherein a value of K1 or K2 is determined based on one or more of following information:

protocol predefined information;
resource pool configuration information; or
sidelink BWP configuration information.

97. The terminal device according to any one of claims 88 to 95, wherein a value of K1 or K2 is determined based on a first sidelink subcarrier spacing and a second sidelink subcarrier spacing,
wherein the first sidelink subcarrier spacing is determined based on sidelink bandwidth part BWP configuration information, the sidelink BWP configuration information is used to configure a BWP corresponding to the first time unit or the second time unit, and the second subcarrier spacing is determined based on protocol predefined information, resource pool configuration information, or sidelink BWP configuration information.

98. The terminal device according to claim 97, wherein the second subcarrier spacing is 120 kHz.

99. The terminal device according to any one of claims 73 to 98, wherein a quantity of bits comprised in the first sidelink feedback information is determined based on a quantity of TBs transmitted in the second time unit.

100.
The terminal device according to any one of claims 73 to 99, wherein a transmission resource of the first PSFCH is determined based on one or more of following information:

first information, used to indicate an index of a time unit corresponding to a first PSSCH associated with the first PSFCH;
second information, used to indicate an index of a slot in which the first PSSCH is located;
third information, used to indicate a symbol in which the first PSFCH is located;
fourth information, used to indicate a frequency domain start position of a PSSCH in the first time unit;
fifth information, used to indicate a length of a frequency domain resource of a PSSCH in the first time unit;
sixth information, used to indicate a quantity of reusable cyclic shift pairs in one PRB; or

seventh information, used to indicate an identity of a terminal device,
wherein the cyclic shift pairs are used to transmit the first PSFCH.

**101.**

The terminal device according to claim 100, wherein a range of the index of the slot indicated by the second information is determined based on a quantity of slots comprised in one time unit.

**102.**

The terminal device according to any one of claims 73 to 101, wherein the first PSFCH is associated with a first parameter, the first parameter is used to indicate a period of the first PSFCH, and the first parameter is expressed based on a quantity of time units, wherein one time unit comprises consecutive M slots.

**103.**

The terminal device according to any one of claims 73 to 102, wherein the first PSFCH is associated with a second parameter, the second parameter is used to indicate a minimum time interval between the first PSFCH and a first PSSCH, and the second parameter is expressed based on a quantity of time units, wherein the first PSSCH is associated with the first PSFCH, and one time unit comprises consecutive M slots.

**104.**

The terminal device according to claim 103, wherein the first PSSCH is located in a time unit n, the first PSFCH is a 1st available PSFCH after a time unit n+k, or a time domain position corresponding to the first PSFCH is not earlier than a time domain position of a 1st available PSFCH of the time unit n+k, wherein n is a positive integer greater than or equal to 1, and k is determined based on the second parameter.

**105.**

The terminal device according to claim 104, wherein the minimum time interval is a minimum time interval relative to a first instant, and the first instant is determined based on one of following manners:

a start instant of the time unit n;
an end instant of the time unit n;
a start instant of a 1st symbol used to transmit the first PSSCH;
an end instant of a last symbol used to transmit the first PSSCH;
a start instant of a slot in which the first PSSCH is located; and
an end instant of the slot in which the first PSSCH is located.

**106.**

The terminal device according to any one of claims 73 to 105, wherein a value of M is determined based on one or more of following:

protocol predefined information;
resource pool configuration information; or
sidelink BWP configuration information.

**107.**

The terminal device according to claim 106, wherein the M slots are consecutive M physical slots, or the M slots are consecutive slots available for sidelink transmission.

**108.**

The terminal device according to any one of claims 73 to 107, wherein the first time unit comprises a first guard symbol, the first guard symbol comprises consecutive B symbols, and the B symbols are last B symbols of the first time unit, wherein B is a positive integer greater than 1.

**109.**

The terminal device according to any one of claims 73 to 108, wherein the first time unit comprises a first time domain resource used to transmit a PSFCH, the first time unit comprises a second guard symbol, the second guard symbol comprises consecutive B symbols, and the B symbols in the second guard symbol are located before the first time domain resource, wherein B is a positive integer greater than 1.

**110.**
The terminal device according to claim 108 or 109, wherein a value of B is equal to 4, or a value of B is equal to 8.

**111.** The terminal device according to claim 110, wherein

the value of B is equal to 4, and a sidelink subcarrier spacing corresponding to the first time unit is 480 kHz; or
the value of B is equal to 8, and a sidelink subcarrier spacing corresponding to the first time unit is 960 kHz.

**112.**
The terminal device according to any one of claims 108 to 111, wherein a value of B is determined based on one or more of following information:

protocol predefined information;
resource pool configuration information; or
sidelink BWP configuration information.

**113.**
The terminal device according to claim 112, wherein the resource pool configuration information or the sidelink BWP configuration information comprises first indication information, and the value of B is determined based on the first indication information,
wherein the first indication information is used to indicate one or more of following:

the value of B;
a time domain position of a $1^{st}$ symbol available for sidelink transmission in one slot or in one time unit;
a length or quantity of symbols available for sidelink transmission in one time unit; or
a quantity of slots comprised in one time unit,
wherein one time unit comprises consecutive M slots.

**114.**
The terminal device according to any one of claims 108 to 111, wherein a value of B is determined based on a first sidelink subcarrier spacing and a second sidelink subcarrier spacing,
wherein the first sidelink subcarrier spacing is determined based on sidelink BWP configuration information, the sidelink BWP configuration information is used to configure a BWP corresponding to the first time unit, and the second subcarrier spacing is determined based on protocol predefined information, resource pool configuration information, or sidelink BWP configuration information.

**115.**
The terminal device according to claim 114, wherein the second subcarrier spacing is 120 kHz.

**116.**
The terminal device according to any one of claims 73 to 115, wherein the first time unit comprises two adjacent slots, a third guard symbol is set between symbols used for sidelink transmission in the two slots, and the third guard symbol comprises C symbols, wherein C is a positive integer greater than or equal to 1.

**117.**
The terminal device according to claim 116, wherein a value of C is 1 or 2.

**118.**
The terminal device according to claim 116 or 117, wherein the third guard symbol corresponds to last C symbols of a former slot in the two slots.

**119.**
The terminal device according to any one of claims 116 to 118, wherein a value of C is determined based on one or more of following:

protocol predefined information;
resource pool configuration information; or
sidelink BWP configuration information.

**120.**

The terminal device according to any one of claims 73 to 119, wherein if the first time unit is used to transmit a plurality of PSSCHs, a fourth guard symbol is set between transmission resources of two adjacent PSSCHs in the plurality of PSSCHs, and the fourth guard symbol comprises D symbols, wherein D is a positive integer greater than or equal to 1.

**121.**

The terminal device according to claim 120, wherein a value of D is 1 or 2.

**122.**

The terminal device according to claim 120 or 121, wherein the fourth guard symbol corresponds to last D symbols of a last slot in slots occupied by a former PSSCH in the two PSSCHs.

**123.**

The terminal device according to any one of claims 120 to 122, wherein a value of D is determined based on one or more of following:

protocol predefined information;
resource pool configuration information; or
sidelink BWP configuration information.

**124.**

The terminal device according to any one of claims 73 to 123, wherein

at least one slot in the M slots does not comprise a guard symbol; and/or,
a last slot in the M slots comprises a guard symbol, and remaining slots in the M slots except the last slot do not comprise a guard symbol; and/or,
if the first time unit comprises a time domain resource used to transmit a PSFCH, at least one of a last slot or a second-to-last slot in the M slots comprises a guard symbol; and/or,
a guard symbol is set between symbols used for sidelink transmission in adjacent slots in the M slots.

**125.**

The terminal device according to any one of claims 73 to 124, wherein the first time unit comprises a second time domain resource used to transmit a physical sidelink control channel PSCCH, and a starting symbol of the second time domain resource is an $(A+1)^{th}$ symbol of the first time unit, wherein A is a positive integer greater than 1.

**126.**

The terminal device according to claim 125, wherein the PSCCH occupies Q PRBs in frequency domain, the PSCCH is used to schedule a PSSCH, and frequency domain start positions of the Q PRBs are the same as a frequency domain start position of the PSSCH, wherein Q is a positive integer greater than or equal to 1.

**127.**

The terminal device according to claim 126, wherein a value of Q is determined based on one or more of following:

protocol predefined information;
resource pool configuration information; or
sidelink BWP configuration information.

**128.**

The terminal device according to any one of claims 73 to 127, wherein the first time unit comprises a third time domain resource used to transmit a PSSCH, and a starting symbol of the third time domain resource is an $(A+1)^{th}$ symbol of the first time unit, wherein A is a positive integer greater than 1.

**129.**

The terminal device according to claim 128, wherein
an end symbol of the third time domain resource is a previous symbol of symbols corresponding to a second guard symbol, wherein the second guard symbol comprises B symbols before a transmission resource of the PSFCH, and B is a positive integer greater than 1.

**130.**

The terminal device according to any one of claims 125 to 129, wherein a value of A is determined based on one or more of following information:

protocol predefined information;
resource pool configuration information; or
sidelink BWP configuration information.

**131.**

The terminal device according to claim 130, wherein the resource pool configuration information or the sidelink BWP configuration information comprises second indication information, and the value of A is determined based on the second indication information,

wherein the second indication information is used to indicate one or more of following:

the value of A;
a time domain position of a 1st symbol available for transmitting a PSSCH in one time unit;
a time domain position of a 1 st symbol available for transmitting a PSCCH in one time unit; or
a time domain position of a 1 st symbol available for sidelink transmission in one slot or in one time unit,
wherein one time unit comprises consecutive M slots.

**132.**

The terminal device according to any one of claims 125 to 129, wherein a value of A is determined based on a first sidelink subcarrier spacing and a second sidelink subcarrier spacing,

wherein the first sidelink subcarrier spacing is determined based on sidelink BWP configuration information, the sidelink BWP configuration information is used to configure a BWP corresponding to the first time unit, and the second subcarrier spacing is determined based on protocol predefined information, resource pool configuration information, or sidelink BWP configuration information.

**133.**

The terminal device according to claim 132, wherein the second subcarrier spacing is 120 kHz.

**134.**

The terminal device according to any one of claims 125 to 133, wherein

a value of A is equal to 4; or
a value of A is equal to 8.

**135.**

The terminal device according to claim 134, wherein

in a case that the value of A is equal to 4, a sidelink subcarrier spacing corresponding to the first time unit is 480 kHz; or
in a case that the value of A is equal to 8, a sidelink subcarrier spacing corresponding to the first time unit is 960 kHz.

**136.**

The terminal device according to any one of claims 73 to 135, wherein data in first A symbols of the first time unit is duplicate data of data in a target symbol of the first time unit,

wherein the target symbol comprises one or more symbols in remaining symbols in the first time unit except the first A symbols, and A is a positive integer greater than 1.

**137.**

The terminal device according to claim 136, wherein the target symbol is one of following:

an (A+1)th symbol to a 2Ath symbol of the first time unit; and
an (A+1)th symbol of the first time unit.

**138.**

The terminal device according to any one of claims 73 to 137, wherein the first time unit comprises a fourth time domain resource used to transmit a PSFCH, and the fourth time domain resource is located in a 1 st slot or a last slot of the first time unit.

**139.**
The terminal device according to any one of claims 73 to 138, wherein the first time unit comprises a transmission resource of first-stage sidelink control information SCI, the first-stage SCI comprises an information field used to indicate time domain resource assignment, a value of the information field that indicates time domain resource assignment is determined based on a time offset of remaining W-1 transmission resources in W transmission resources except a 1st transmission resource relative to the 1st transmission resource, and the time offset is expressed based on a quantity of time units, wherein a value of W is determined based on a quantity of transmission resources indicated by the first-stage SCI, and one time unit comprises consecutive M slots.

**140.**
The terminal device according to any one of claims 73 to 139, wherein a sidelink transmission resource corresponding to the first terminal device is determined based on first downlink control information DCI, and the first DCI comprises third indication information,
wherein the third indication information is used to indicate one of following:

a time interval between receiving of the first DCI and the sidelink transmission resource;
a time interval between a slot in which the first DCI is located and the first time unit in which the sidelink transmission resource is located; and
a time interval between a start instant of a downlink slot that carries the first DCI and a start instant of the sidelink transmission resource,
wherein the time interval is expressed based on a quantity of time units, and one time unit comprises consecutive M slots.

**141.**
The terminal device according to any one of claims 73 to 140, wherein the first terminal device further comprises:
a determining module, configured to determine a first reservation period based on one or more of following:

a second reservation period indicated by indication information in SCI; or
a quantity of time units in a resource pool,
wherein the first reservation period is expressed based on a quantity of time units, the second reservation period is expressed based on milliseconds, and one time unit comprises consecutive M slots.

**142.**
The terminal device according to claim 141, wherein the first reservation period $P'_{\text{rsvp}}$ satisfies:

$$P'_{\text{rsvp}} = \left\lceil \frac{T'_{max}}{10240\ ms} \times P_{\text{rsvp}} \right\rceil,$$

wherein $P_{\text{rsvp}}$ denotes the second reservation period, and $T'_{max}$ denotes a quantity of time units comprised in the resource pool in 10240 ms.

**143.**
The terminal device according to any one of claims 73 to 142, wherein a period of the first PSFCH is expressed based on a quantity of time units, and one time unit comprises consecutive M slots.

**144.**
The terminal device according to claim 143, wherein the period of the first PSFCH is indicated based on fourth indication information, and the fourth indication information belongs to resource pool configuration information.

**145.**
A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 72.

**146.**
An apparatus, comprising a processor configured to invoke a program from a memory, to cause the apparatus to execute the method according to any one of claims 1 to 72.

**147.**
A chip, comprising a processor configured to invoke a program from a memory, to cause a device installed with the chip to execute the method according to any one of claims 1 to 72.

**148.**
A computer-readable storage medium, wherein the computer-readable storage medium stores a program, and the program causes a computer to execute the method according to any one of claims 1 to 72.

**149.**
A computer program product, comprising a program, wherein the program causes a computer to execute the method according to any one of claims 1 to 72.

**150.**
A computer program, wherein the computer program causes a computer to execute the method according to any one of claims 1 to 72.

100

110

120

FIG. 1

110

120a

120a

Sidelink
communication

FIG. 2

110

120a

Sidelink
communication

120b

FIG. 3

120b

Sidelink
communication

120b

FIG. 4

**Communication
group**

Terminal
device 2

Terminal
device 3

FIG. 5

Terminal device 2

Terminal
device 6

Terminal
device 3

**Terminal
device 1**

Terminal
device 5

Terminal
device 4

FIG. 6

Terminal device 1                    Terminal device 2

Sidelink data

FIG. 7

Communication
group

Terminal
device 2

Terminal
device 1

Terminal
device 3

Terminal
device 4

FIG. 8

FIG. 9A

FIG. 9B

FIG. 10

Slot 0     Slot 1     Slot 2     Slot 3     Slot 4     Slot 5     Slot 6     Slot 7

PSCCH        PSSCH        PSFCH

Three PSCCH symbols

FIG. 11

| | Symbol #1 | Symbol #2 | Symbol #3 |
|---|---|---|---|
| RE#11 | | | |
| RE#10 | | | |
| RE#9 | DM-RS | DM-RS | DM-RS |
| RE#8 | | | |
| RE#7 | | | |
| RE#6 | | | |
| RE#5 | DM-RS | DM-RS | DM-RS |
| RE#4 | | | |
| RE#3 | | | |
| RE#2 | | | |
| RE#1 | DM-RS | DM-RS | DM-RS |
| RE#0 | | | |

FIG. 12

| 132 | 127 | PSBCH | S-PSS | S-PSS | S-SSS | S-SSS | PSBCH | PSBCH | PSBCH | PSBCH | PSBCH | PSBCH | PSBCH | PSBCH | GP |

FIG. 13

1410

1

5

2

3

4

**FIG. 14**

1510

1511

1514

Instant 1

1512

1513

Instant 2

Instant 3

Instant 4

1

2

3

5

4

**FIG. 15**

RRC

| N candidate TCI states |

MAC

| K activated TCI states |

DCI

| One or two used TCI states |

**FIG. 16**

A first terminal device performs sidelink
communication in a first time unit

S1710

FIG. 17

□ GP ▨ AGC ⊟ PSCCH/PSSCH

◄———Slot n———►◄———Slot n+1———►
◄————————Time unit————————►

FIG. 18A

□ GP ▨ AGC ⊟ PSCCH/PSSCH

◄———Slot n———►◄———Slot n+1———►
◄————————Time unit————————►

FIG. 18B

□ GP ▨ AGC ⊟ PSCCH/PSSCH ▨ PSFCH

◄———Slot n———►◄———Slot n+1———►
◄————————Time unit————————►

FIG. 18C

□ GP ▨ AGC ⊟ PSCCH/PSSCH ▨ PSFCH

◄———Slot n———►◄———Slot n+1———►
◄————————Time unit————————►

FIG. 18D

☐ GP ▨ AGC ⊟ PSCCH/PSSCH

|←—Slot n—→|←Slot n+1→|←Slot n+2→|←Slot n+3→|

|←————————Time unit————————→|

FIG. 19A

☐ GP ▨ AGC ⊟ PSCCH/PSSCH

|←—Slot n—→|←Slot n+1→|←Slot n+2→|←Slot n+3→|

|←————————Time unit————————→|

FIG. 19B

☐ GP ▨ AGC ⊟ PSCCH/PSSCH ▦ PSFCH

|←—Slot n—→|←Slot n+1→|←Slot n+2→|←Slot n+3→|

|←————————Time unit————————→|

FIG. 19C

☐ GP ▨ AGC ⊟ PSCCH/PSSCH ▦ PSFCH

|←—Slot n—→|←Slot n+1→|←Slot n+2→|←Slot n+3→|

|←————————Time unit————————→|

FIG. 19D

☐ GP ▨ AGC ⊟ PSCCH/PSSCH ▦ PSFCH

|←—Slot n—→|←Slot n+1→|←Slot n+2→|←Slot n+3→|

|←————————Time unit————————→|

FIG. 19E

☐ GP ▨ AGC ⊟ PSCCH/PSSCH ▦ PSFCH

|←—Slot n—→|←Slot n+1→|←Slot n+2→|←Slot n+3→|←Slot n+4→|←Slot n+5→|←Slot n+6→|←Slot n+7→|

|←————————————————Time unit————————————————→|

FIG. 19F

f

R1

R2

R3

Slot index  0  1  2  3  4  5  6  7  8  9  10  11  12  13  14  15  16  17  18  19  t

Time unit index  0  1  2  3  4  5  6  7  8  9

t1

t2

**FIG. 20**

☐ GP ▨ AGC ⊟ PSSCH ▦ PSCCH ▨ PSFCH

←——Slot n——→ ←——Slot n+1——→ ←——Slot n+2——→ ←——Slot n+3——→

←————Time unit #1————→ ←————Time unit #2————→

**FIG. 21**

☐ GP ▨ AGC ⊟ PSSCH ▦ PSCCH ▨ PSFCH

←Slot n→ ←Slot n+1→ ←Slot n+2→ ←Slot n+3→ ←Slot n+4→ ←Slot n+5→ ←Slot n+6→ ←Slot n+7→

←————Time unit #1————→ ←————Time unit #2————→

**FIG. 22**

☐ GP ▨ AGC ⊟ PSSCH 1 ▤ PSSCH 2 ▦ PSCCH ▨ PSFCH

←——Slot n——→ ←——Slot n+1——→ ←——Slot n+2——→ ←——Slot n+3——→

←————Time unit #1————→ ←————Time unit #2————→

**FIG. 23**

☐ GP ▨ AGC ⊟ PSSCH 1 ▤ PSSCH 2 ▨ PSSCH 3 ▤ PSSCH 4 ▦ PSCCH ▨ PSFCH

←Slot n→ ←Slot n+1→ ←Slot n+2→ ←Slot n+3→ ←Slot n+4→ ←Slot n+5→ ←Slot n+6→ ←Slot n+7→

←————Time unit #1————→ ←————Time unit #2————→

**FIG. 24**

☐ GP ▨ AGC ☐ PSSCH 1 ☰ PSSCH 2 ▦ PSCCH ▪ PSFCH

FIG. 25

☐ GP ▨ AGC ☐ PSSCH 1 ☰ PSSCH 2 ▦ PSCCH ▪ PSFCH

FIG. 26

☐ GP ▨ AGC ☐ PSSCH 1 ☰ PSSCH 2 ▦ PSCCH ▪ PSFCH

FIG. 27

☐ GP ▨ AGC ☐ PSSCH 1 ☰ PSSCH 2 ▧ PSSCH 3 ☰ PSSCH 4 ▦ PSCCH ▪ PSFCH

FIG. 28

☐ GP ▨ AGC ☐ PSSCH 1 ☰ PSSCH 2 ▦ PSCCH ▪ PSFCH

FIG. 29

☐ GP ▨ AGC ☐ PSSCH 1 ☰ PSSCH 2 ▦ PSCCH ▪ PSFCH

FIG. 30

GP   AGC   PSSCH 1   PSSCH 2   PSCCH   PSFCH

|←—Slot n—→|←—Slot n+1—→|←—Slot n+2—→|←—Slot n+3—→|←—Slot n+4—→|←—Slot n+5—→|←—Slot n+6—→|←—Slot n+7—→|

|←——————————Time unit #1——————————→|←——————————Time unit #2——————————→|

**FIG. 31**

S3210

A first terminal device receives or transmits a first PSFCH in a first time unit

**FIG. 32**

PSFCH 1   PSFCH 2

| Slot 0 | Slot 1 | Slot 2 | Slot 3 | Slot 4 | Slot 5 | Slot 6 | Slot 7 | Slot 8 | Slot 9 | Slot 10 | Slot 11 | Slot 12 | Slot 13 | Slot 14 | Slot 15 |

| Time unit #0 | Time unit #1 | Time unit #2 | Time unit #3 | Time unit #4 | Time unit #5 | Time unit #6 | Time unit #7 |

PSSCH   PSSCH 1   PSSCH 2   PSFCH   AGC

**FIG. 33**

PSFCH 1   PSFCH 2

| Slot 0 | Slot 1 | Slot 2 | Slot 3 | Slot 4 | Slot 5 | Slot 6 | Slot 7 | Slot 8 | Slot 9 | Slot 10 | Slot 11 | Slot 12 | Slot 13 | Slot 14 | Slot 15 |

| Time unit #0 | Time unit #1 | Time unit #2 | Time unit #3 | Time unit #4 | Time unit #5 | Time unit #6 | Time unit #7 |

PSSCH   PSSCH 1   PSSCH 2   PSFCH   AGC

**FIG. 34**

Slot 0 | Slot 1 | Slot 2 | Slot 3 | Slot 4 | Slot 5 | Slot 6 | Slot 7 | Slot 8 | Slot 9 | Slot 10 | Slot 11 | Slot 12 | Slot 13 | Slot 14 | Slot 15

Time unit #0 | Time unit #1 | Time unit #2 | Time unit #3 | Time unit #4 | Time unit #5 | Time unit #6 | Time unit #7

PSSCH  PSSCH 1  PSSCH 2  PSFCH  AGC

FIG. 35

Slot 0 | Slot 1 | Slot 2 | Slot 3 | Slot 4 | Slot 5 | Slot 6 | Slot 7 | Slot 8 | Slot 9 | Slot 10 | Slot 11 | Slot 12 | Slot 13 | Slot 14 | Slot 15

Time unit #0 | Time unit #1 | Time unit #2 | Time unit #3 | Time unit #4 | Time unit #5 | Time unit #6 | Time unit #7

PSSCH  PSSCH 1  PSSCH 2  PSFCH  AGC

FIG. 36

Slot 0 | Slot 1 | Slot 2 | Slot 3 | Slot 4 | Slot 5 | Slot 6 | Slot 7 | Slot 8 | Slot 9 | Slot 10 | Slot 11 | Slot 12 | Slot 13 | Slot 14 | Slot 15

Time unit #0 | Time unit #1 | Time unit #2 | Time unit #3 | Time unit #4 | Time unit #5 | Time unit #6 | Time unit #7

PSSCH  PSFCH

FIG. 37

S3810

A first terminal device determines a DMRS pattern of a first channel in a first time unit

FIG. 38

☐ GP ▨ AGC ⊟ PSSCH ⦂ PSCCH ▓ PSFCH ⊞ PSSCH DMRS

Slot n ← → Slot n+1 ← → Slot n+2 ← → Slot n+3

Time unit #1 ← → Time unit #2

**FIG. 39**

☐ GP ▨ AGC ⊟ PSSCH ⦂ PSCCH ▓ PSFCH ⊞ PSSCH DMRS

Slot n ← → Slot n+1 ← → Slot n+2 ← → Slot n+3

Time unit #1 ← → Time unit #2

**FIG. 40**

☐ GP ▨ AGC ⊟ PSSCH ⦂ PSCCH ▓ PSFCH ⊞ PSSCH DMRS

Slot n → Slot n+1 → Slot n+2 → Slot n+3 → Slot n+4 → Slot n+5 → Slot n+6 → Slot n+7

Time unit #1 ← → Time unit #2

**FIG. 41**

☐ GP ▨ AGC ⊟ PSSCH ⦂ PSCCH ▓ PSFCH ⊞ PSSCH DMRS

Slot n → Slot n+1 → Slot n+2 → Slot n+3 → Slot n+4 → Slot n+5 → Slot n+6 → Slot n+7

Time unit #1 ← → Time unit #2

**FIG. 42**

☐ GP ▨ AGC ⊟ PSSCH 1 ⊟ PSSCH 2 ⦂ PSCCH ▓ PSFCH ⊞ PSSCH DMRS

Slot n ← → Slot n+1 ← → Slot n+2 ← → Slot n+3

Time unit #1 ← → Time unit #2

**FIG. 43A**

□ GP ▨ AGC ⊟ PSSCH 1 ≣ PSSCH 2 ▦ PSCCH ■ PSFCH ⊞ PSSCH DMRS

←——Slot n——→ ←——Slot n+1——→ ←——Slot n+2——→ ←——Slot n+3——→
←——————Time unit #1——————→ ←——————Time unit #2——————→

FIG. 43B

□ GP ▨ AGC ⊟ PSSCH 1 ≣ PSSCH 2 ▦ PSCCH ■ PSFCH ⊞ PSSCH DMRS

GP

←——Slot n——→ ←——Slot n+1——→ ←——Slot n+2——→ ←——Slot n+3——→
←——————Time unit #1——————→ ←——————Time unit #2——————→

FIG. 43C

□ GP ▨ AGC ⊟ PSSCH 1 ≣ PSSCH 2 ▦ PSCCH ■ PSFCH ⊞ PSSCH DMRS

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 44A

□ GP ▨ AGC ⊟ PSSCH 1 ≣ PSSCH 2 ▦ PSCCH ■ PSFCH ⊞ PSSCH DMRS

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 44B

□ GP ▨ AGC ⊟ PSSCH 1 ≣ PSSCH 2 ▦ PSCCH ■ PSFCH ⊞ PSSCH DMRS

←——Slot n——→ ←——Slot n+1——→ ←——Slot n+2——→ ←——Slot n+3——→
←——————Time unit #1——————→ ←——————Time unit #2——————→

FIG. 45

□ GP ▨ AGC ⊟ PSSCH 1 ≣ PSSCH 2 ▦ PSCCH ■ PSFCH ⊞ PSSCH DMRS

←Slot n→ ←Slot n+1→ ←Slot n+2→ ←Slot n+3→ ←Slot n+4→ ←Slot n+5→ ←Slot n+6→ ←Slot n+7→
←——————Time unit #1——————→ ←——————Time unit #2——————→

FIG. 46A

Legend: GP, AGC, PSSCH 1, PSSCH 2, PSCCH, PSFCH, PSSCH DMRS

Slot n — Slot n+1 — Slot n+2 — Slot n+3 — Slot n+4 — Slot n+5 — Slot n+6 — Slot n+7

Time unit #1 — Time unit #2

FIG. 46B

Legend: GP, AGC, PSSCH, PSCCH, PSFCH, PSSCH DMRS

Slot n — Slot n+1 — Slot n+2 — Slot n+3

Time unit #1 — Time unit #2

FIG. 47A

Legend: GP, AGC, PSSCH, PSCCH, PSFCH, PSSCH DMRS

Slot n — Slot n+1 — Slot n+2 — Slot n+3

Time unit #1 — Time unit #2

FIG. 47B

Legend: GP, AGC, PSSCH, PSCCH, PSFCH, PSSCH DMRS

Slot n — Slot n+1 — Slot n+2 — Slot n+3

Time unit #1 — Time unit #2

FIG. 47C

DMRS symbol position (1,6,11) of a first DMRS pattern

DMRS symbol position (3,10) of a first DMRS pattern

Slot n — Slot n+1 — Slot n+2 — Slot n+3 — Slot n+4 — Slot n+5 — Slot n+6 — Slot n+7

Time unit #1 — Time unit #2

Legend: GP, AGC, PSSCH, PSCCH, PSFCH, PSSCH DMRS

FIG. 48

DMRS symbol position (1,6,11)
of a first DMRS pattern

DMRS symbol position (3,10)
of a first DMRS pattern

|←—Slot n—→|←—Slot n+1—→|←—Slot n+2—→|←—Slot n+3—→|←—Slot n+4—→|←—Slot n+5—→|←—Slot n+6—→|←—Slot n+7—→|
|←————————————Time unit #1————————————→|←————————————Time unit #2————————————→|

☐ GP   ▨ AGC   ▭ PSSCH 1   ▤ PSSCH 2   ▦ PSCCH   ▩ PSFCH   ⊞ PSSCH DMRS

FIG. 49A

DMRS symbol position (1,6,11) of a
first DMRS pattern

DMRS symbol position (1,6,11)
of a first DMRS pattern

|←—Slot n—→|←—Slot n+1—→|←—Slot n+2—→|←—Slot n+3—→|←—Slot n+4—→|←—Slot n+5—→|←—Slot n+6—→|←—Slot n+7—→|
|←————————————Time unit #1————————————→|←————————————Time unit #2————————————→|

☐ GP   ▨ AGC   ▭ PSSCH 1   ▤ PSSCH 2   ▦ PSCCH   ▩ PSFCH   ⊞ PSSCH DMRS

FIG. 49B

DMRS symbol position (1,6,11)
of a first DMRS pattern

DMRS symbol position (3,10)
of a first DMRS pattern

|←—Slot n—→|←—Slot n+1—→|←—Slot n+2—→|←—Slot n+3—→|←—Slot n+4—→|←—Slot n+5—→|←—Slot n+6—→|←—Slot n+7—→|
|←————————————Time unit #1————————————→|←————————————Time unit #2————————————→|

☐ GP   ▨ AGC   ▭ PSSCH 1   ▤ PSSCH 2   ▦ PSCCH   ▩ PSFCH   ⊞ PSSCH DMRS

FIG. 50

DMRS symbol position
(3,10) of a first DMRS
pattern

DMRS symbol position
(1,6,11) of a first DMRS
pattern

DMRS symbol position
(3,10) of a first DMRS
pattern

DMRS symbol position
(1,6,11) of a first DMRS
pattern

|←—Slot n—→|←—Slot n+1—→|←—Slot n+2—→|←—Slot n+3—→|←—Slot n+4—→|←—Slot n+5—→|←—Slot n+6—→|←—Slot n+7—→|
|←————————————Time unit #1————————————→|←————————————Time unit #2————————————→|

☐ GP   ▨ AGC   ▤ PSSCH 1   ▤ PSSCH 2   ▦ PSCCH   ▥ PSFCH   ▦ PSSCH DMRS

FIG. 51

DMRS symbol position (1,5) of a first DMRS pattern | DMRS symbol position (1,6,11) of a first DMRS pattern | DMRS symbol position (1,6,11) of a first DMRS pattern | DMRS symbol position (1,5) of a first DMRS pattern | DMRS symbol position (1,5) of a first DMRS pattern | DMRS symbol position (3,10) of a first DMRS pattern | DMRS symbol position (0) of a first DMRS pattern

Slot n | Slot n+1 | Slot n+2 | Slot n+3 | Slot n+4 | Slot n+5 | Slot n+6 | Slot n+7

Time unit #1 | Time unit #2

GP ▨ AGC ▤ PSSCH ⬚ PSCCH ▦ PSFCH ▦ PSSCH DMRS

FIG. 52

DMRS symbol position (1,5) of a first DMRS pattern | DMRS symbol position (1,6,11) of a first DMRS pattern | DMRS symbol position (3,10) of a first DMRS pattern | DMRS symbol position (1,5) of a first DMRS pattern | DMRS symbol position (1,5) of a first DMRS pattern | DMRS symbol position (3,10) of a first DMRS pattern | DMRS symbol position (0) of a first DMRS pattern

Slot n | Slot n+1 | Slot n+2 | Slot n+3 | Slot n+4 | Slot n+5 | Slot n+6 | Slot n+7

Time unit #1 | Time unit#2

GP ▨ AGC ▤ PSSCH 1 ▤ PSSCH 2 ⬚ PSCCH ▦ PSFCH ▦ PSSCH DMRS

FIG. 53

| DMRS symbol position (3,8) of a first DMRS pattern | DMRS symbol position (1,6,11) of a first DMRS pattern | DMRS symbol position (1,6,11) of a first DMRS pattern | DMRS symbol position (3,8) of a first DMRS pattern | DMRS symbol position (3,8) of a first DMRS pattern | DMRS symbol position (3,10) of a first DMRS pattern | DMRS symbol position (3,10) of a first DMRS pattern | DMRS symbol position (0) of a first DMRS pattern |
|---|---|---|---|---|---|---|---|

Slot n — Slot n+1 — Slot n+2 — Slot n+3 — Slot n+4 — Slot n+5 — Slot n+6 — Slot n+7

Time unit #1 — Time unit #2

☐ GP ▨ AGC ☰ PSSCH 1 ☰ PSSCH 2 ▦ PSCCH ▓ PSFCH ▦ PSSCH DMRS

**FIG. 54**

Slot n — Slot n+1 — Slot n+2 — Slot n+3 — Slot n+4 — Slot n+5 — Slot n+6 — Slot n+7

Time unit #1 — Time unit #2

☐ GP ▨ AGC ☰ PSSCH ▦ PSCCH ▓ PSFCH ▦ PSSCH DMRS

**FIG. 55**

Terminal device 5600

Communications module 5610

**FIG. 56**

Apparatus 5700

Processor 5710

Memory 5720

Transceiver 5730

**FIG. 57**

# EP 4 679 907 A1

## INTERNATIONAL SEARCH REPORT

| | International application No. |
|---|---|
| | **PCT/CN2023/080614** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXTC, ENTXT, WPABS, WPABSC, 3GPP, CJFD: 侧行, 侧链, 直连, D2D, 连续, 时隙, 时间单元, 反馈, sidelink, direct link, continue, slot, time unit, feedback, psfch, tb

**C. DOCUMENTS CONSIDERED TO BE RELEVANT**

| Category* | Citation of document, with indication, where appropriate, of the relevant passages | Relevant to claim No. |
|---|---|---|
| X | WO 2022222106 A1 (GUANGDONG OPPO MOBILE TELECOMMUNICATIONS CORP., LTD.) 27 October 2022 (2022-10-27) description, paragraphs [0087]-[0587] | 1-150 |
| A | CN 113543327 A (HUAWEI TECHNOLOGIES CO., LTD.) 22 October 2021 (2021-10-22) entire document | 1-150 |
| A | CN 115315978 A (LG ELECTRONICS INC.) 08 November 2022 (2022-11-08) entire document | 1-150 |
| A | CN 115589596 A (QUECTEL WIRELESS SOLUTIONS CO., LTD.) 10 January 2023 (2023-01-10) entire document | 1-150 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 May 2023** | **24 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/080614**

| Patent document cited in search report | | | Publication date (day/month/year) | Patent family member(s) | | | Publication date (day/month/year) |
|---|---|---|---|---|---|---|---|
| WO | 2022222106 | A1 | 27 October 2022 | None | | | |
| CN | 113543327 | A | 22 October 2021 | None | | | |
| CN | 115315978 | A | 08 November 2022 | KR | 20220128370 | A | 20 September 2022 |
| | | | | US | 2022408481 | A1 | 22 December 2022 |
| | | | | WO | 2021162442 | A1 | 19 August 2021 |
| CN | 115589596 | A | 10 January 2023 | None | | | |

Form PCT/ISA/210 (patent family annex) (July 2022)